# EUROPÄISCHE PATENTANMELDUNG

(11) **EP 3 166 006 A1**
(43) Veröffentlichungstag der Anmeldung: **10.05.2017**
(21) Anmeldenummer: 16197825.9
(22) Anmeldetag: 08.11.2016
(51) Int. Cl.: G06F 3/044

(54) **ZWEIDIMENSIONALE SENSORANORDNUNG**

(30) Priorität: 09.11.2015 DE 102015119289; 20.11.2015 DE 102015120168; 18.07.2016 DE 102016113162
(71) Anmelder: Schott AG, 55122 Mainz (DE)
(72) Erfinder: BACK, Franziska, 97422 Schweinfurth (DE); RIETHMÜLLER, Franziska, 60326 Frankfurt am Main (DE); ZENKER, Thomas, 55268 Nieder-Olm (DE)
(74) Vertreter: Blumbach Zinngrebe

(57) **Zusammenfassung**

Die Erfindung betrifft eine zweidimensionale Sensoranordnung zur Erfassung von Positionen, z.B. Fingerpositionen, in zwei oder drei Dimensionen, welche insbesondere für berührungsempfindliche Tastfelder oder Bildschirme geeignet ist. Die Sensoranordnung umfasst einen Erfassungsbereich (5.1), in dem eine Vielzahl von Sensoren (6) angeordnet sind und einen z.B. außerhalb liegenden Kontaktbereich, in dem eine Vielzahl von elektrisch leitenden Kontaktpunkten (15.1) angeordnet sind, welche mit den Sensoren verbunden sind. Die Anzahl der Kontaktpunkte ist sehr gering, obwohl die elektrisch leitenden Komponenten der Sensoranordnung ein einschichtiges Netzwerk ausbilden.

## Beschreibung

Die Erfindung betrifft eine zweidimensionale Sensoranordnung zur Erfassung von Positionen in zwei oder drei Dimensionen insbesondere für berührungsempfindliche Tastfelder oder Bildschirme.

Für die Bedienung elektronischer Geräte erfreuen sich berührungsempfindliche Tastfelder (Touchpads) und berührungsempfindliche Bildschirme (Touchscreens) einer hohen Beliebtheit, was nicht zuletzt mit dem Komfort zusammenhängt, den eine Steuerung der Geräte durch Wischgesten und ähnliche Bedienmuster ermöglicht.

Zur Feststellung der Positionen eines oder mehrerer Objekte innerhalb eines zweidimensionalen Erfassungsbereichs kommen heutzutage typischerweise berührungsempfindliche Sensorfelder zum Einsatz, die vor einem Anzeigebildschirm (Display) positioniert sein können. Dadurch wird es dem Benutzer ermöglicht, durch Berühren mit einem Finger oder einem Berührutensil, etwa einem leitfähigen Stift, innerhalb des Erfassungsbereichs beispielsweise Objekte anzuwählen, durch Wischen Objekte auf einem Bildschirm zu bewegen oder zu verschieben, durch Wischen oder Scrollen alphanumerische Einstellungen auszuwählen, zu inkrementieren oder zu dekrementieren, etc.

In einem berührungsempfindlichen Sensorfeld sind eine Vielzahl von Sensoren angeordnet, welche beispielsweise in kapazitiven Sensorfeldern überwiegend als projiziert-kapazitive (PCAP) Erfassungszellen ausgestaltet werden. Die Erfassungszellen bestehen wiederum in der Regel aus zwei Sensor-Elektroden, d.h. aus einer ersten und einer zweiten Sensor-Elektrode, welche voneinander durch einen Zwischenraum, insbesondere einen Spalt, beabstandet sind. Im Bereich eines Sensor-Spalts, d.h. zwischen dem Elektrodenpaar, kann sich ein elektrisches Feld ausbilden, das durch eine Berührbedienung verändert wird, so dass an den Elektroden eine elektrische Berührsignatur nachgewiesen werden kann. Die beiden Sensorelektroden können wahlweise die Funktion einer Sende- und einer Empfangselektrode innehaben, so dass die Berührsignatur an der Empfangselektrode nachgewiesen werden kann.

Über Kontaktpunkte, welche mit den Elektroden verbunden sind und typischerweise in einem Kontaktbereich außerhalb des Erfassungsbereichs angeordnet sind, können die Elektroden mit einer elektronischen Steuereinheit verbunden werden. Die Steuereinheit kann Signale in die Sendeelektrode einspeisen und Signale aus der Empfangselektrode empfangen und diese hinsichtlich einer Berührsignatur auswerten.

In der Praxis sind die Elektroden, die Kontaktpunkte und die dazwischen befindlichen Verbindungen typischerweise unmittelbar oder mittelbar auf einem zweidimensionalen Substrat aufgebracht und als leitfähige Strukturen, insbesondere als leitfähige Flächen, ausgebildet.

Die Verschaltung der Kontaktpunkte mit den Elektroden, d.h. die elektrische Verbindung zwischen den Kontaktpunkten und den Elektroden, erfolgt nur selten in der besonders einfachen Weise, dass jedem Kontaktpunkt genau eine Elektrode eines Sensors zugeordnet ist. Dies führt nämlich zu einer sehr hohen Anzahl an Kontaktpunkten, welche genauso hoch ist wie die Anzahl an Sensor-Elektroden.

Eine hohe Anzahl an Kontaktpunkten führt in der Praxis zu einer Reihe an Nachteilen. Zum einen entsteht eine hohe Komplexität der Leiterschichten auf einem Substrat und somit allgemein eine hohe Fehleranfälligkeit und Betriebsunsicherheit. Dazu zählt insbesondere eine hohe Störanfälligkeit durch Störfelder infolge eng angeordneter Leiterverbindungen, d.h. der Dichte der Leiterbahnen. Ferner ist eine aufwändige und fehleranfällige Kontaktierung des Sensorfeldes vonnöten und auch die angeschlossene Steuerungselektronik weist durch die Vielzahl der Signaleingänge und -ausgänge eine hohe Komplexität auf. Eine hohe Anzahl von Kontaktpunkten führt zudem in der Regel zu längeren Leiterbahnen, was die Reaktionszeit des Sensorfeldes beeinträchtigen kann und die Herstellung aufwändiger macht. Es ist demnach wünschenswert, die Anzahl der Kontaktpunkte zu reduzieren.

Um die Anzahl der Kontaktpunkte zu reduzieren, wird ein Kontaktpunkt oft mit mehreren Elektroden verbunden, allerdings in einer solchen Weise, dass weiterhin jedes Paar von Elektroden eines Sensors, d.h. jeder Sensor, einem eindeutigen Paar von Kontaktpunkten zugeordnet bleibt.

Mit demselben Kontaktpunkt verbunden sein können dabei keine zwei Elektroden desselben Sensors, sondern nur mehrere Sensor-Elektroden welche jeweils einem anderen Sensor angehören. Demnach können die Kontaktpunkte in zwei Gruppen eingeteilt werden: eine erste Gruppe, welche diejenigen Kontaktpunkte umfasst, welche mit ersten Elektroden in Verbindung stehen und eine zweite Gruppe, welche diejenigen Kontaktpunkte umfasst, welche mit zweiten Elektroden in Verbindung stehen. Besteht die erste Gruppe aus einer Anzahl von M Kontaktpunkten und die zweite Gruppe aus einer Anzahl von N Kontaktpunkten, so spricht man auch von einer M:N-Verschaltung. Mitunter wird dies auch bezeichnet als eine Verschaltung in eine M:N-Matrix.

Eine M:N-Verschaltung der Sensorelektroden wird oftmals dadurch realisiert, dass nicht erst im Kontaktbereich sondern bereits im Erfassungsbereich einige der Elektroden miteinander elektrisch verbunden sind und ein solcher Verbund von Sensorelektroden dann im Kontaktbereich an einen der Kontaktpunkte angeschlossen ist. Anzumerken ist hierbei, dass der Verbindung mehrerer Sensor-Elektroden natürlich die Verwendung ein und derselben großflächigen Elektrode für mehrere Sensoren gleichsteht.

Wenn bereits im Erfassungsbereich erste Elektroden miteinander verbunden werden, so verbleibt gegenüber der ursprünglichen Anzahl an ersten Elektroden, welche der Anzahl der Sensoren entspricht, lediglich eine kleinere Anzahl voneinander unabhängiger erster Elektroden, welche als Anzahl R bezeichnet sei. In der gleichen Weise führt die Zusammenschaltung zweiter Elektroden im Erfassungsbereich zu einer reduzierten Anzahl voneinander unabhängiger zweiter Elektroden, welche als Anzahl S bezeichnet sei. Man spricht dann von einer R:S-Verschaltung im Erfassungsbereich. Man erhält demnach eine Summe von R+S Leiterverbindungen, die in den Kontaktbereich führen.

In besonders einfachen Anordnungen werden die R+S Leiterverbindungen im Kontaktbereich jeweils direkt mit einem Kontaktpunkt verbunden, so dass eine Anzahl von M=R Kontaktpunkten der ersten Gruppe und eine Anzahl von N=S Kontaktpunkten der zweiten Gruppe vorzufinden sind. Die Anzahl an Kontaktpunkten beträgt somit M+N = R+S. In den meisten Anwendungen wird die Anzahl der Kontaktpunkte allerdings weiter reduziert, indem im Kontaktbereich zunächst eine weitere Verschaltung zu M+N < R+S Leiterverbindungen vorgenommen wird, welche dann zu den Kontaktpunkten führen.

Die physische Anordnung der Sensoren im Erfassungsbereich ist häufig als Matrix ausgeführt, d.h. es sind im Erfassungsbereich eine Anzahl von K*L Sensoren in K Spalten und L Zeilen angeordnet (K:L-Matrix).

Für eine Sensoranordnung in einer K:L-Matrix ist es bekannt, in einer ersten Schicht auf einem Substrat eine Anzahl von K Elektrodenstreifen in Spaltenrichtung aufzubringen und in einer darüberliegenden zweiten Schicht eine Anzahl von L Elektrodenstreifen in Zeilenrichtung anzuordnen. Auf diese Weise werden für K*L Sensoren lediglich M=K Kontaktpunkte der ersten Gruppe und N=L Kontaktpunkte der zweiten Gruppe benötigt. Allerdings sind mehrere übereinander angeordnete Schichten erforderlich. Mit anderen Worten kreuzen sich die Elektrodenstreifen in Spaltenrichtung mit denen in Zeilenrichtung, wenn man die Projektion auf die Substratfläche betrachtet.

Eine ähnliche Ausführung zeigt z.B. die US 5113 041. Darin beschrieben ist ein Gerät zur Bestimmung der Position einer Stiftspitze in zwei Dimensionen in Einheiten von Abstandsintervallen zwischen äquidistant beabstandeten leitenden Streifenstrukturen. Ein Satz solcher leitenden Streifenstrukturen verläuft in x-Richtung und ein ähnlicher Satz verläuft in y-Richtung, wobei die beiden Sätze durch eine dünne Schicht aus isolierendem Material getrennt sind, welche günstigerweise so dünn wie möglich ausgebildet sein soll. Es werden demnach drei übereinander angeordnete Schichten im Erfassungsbereich eingesetzt: eine Schicht für die Streifen in x-Richtung, eine Schicht für die Streifen in y-Richtung und eine dazwischen befindliche Isolationsschicht. Die in x-Richtung verlaufenden Streifen kreuzen sich mit den in y-Richtung verlaufenden Streifen.

Die US 5 463 388 zeigt eine Computereingabevorrichtung mit in einem Gittermuster angeordneten Elektroden, welche in Zeilen und Spalten angeschlossen sind, wobei jeweils einige der Elektroden untereinander mittels Leitungen verbunden sind. Die Leitungen kreuzen sich im Erfassungsbereich. Demnach sind zumindest an den Kreuzungspunkten mehrere übereinander angeordnete Schichten im Erfassungsbereich erforderlich.

Die vorgenannten Lehren weisen im Erfassungsbereich Kreuzungen auf oder anders ausgedrückt sind sie dort mehrschichtig ausgebildet. Nachteilig an einem mehrschichtigen Aufbau ist insbesondere der aufwändige Herstellungsprozess. Während bei einschichten Anordnungen lediglich eine einzelne leitende Materialschicht auf ein Substrat aufgebracht zu werden braucht, erfordert eine mehrschichtige Struktur das abwechselnde Aufbringen von leitenden und isolierenden Materialien.

Bei transparenten Sensorfeldern ist ein mehrschichtiger Aufbau aber auch nachteilig hinsichtlich der optischen Eigenschaften. Transparente Sensorfelder werden insbesondere zur Herstellung von Touch-Bildschirmen als berührungsempfindliche Schicht vor einem Bildschirm angeordnet. Ein mehrschichtiger Aufbau führt dazu, dass die Sensorfelder dicker sind, so dass der Transmissionsgrad geringer und der Hazewert, welcher ein Maß für die Trübung transparenter Proben ist, höher ist. Außerdem werden sowohl leitende als auch isolierende transparente Materialen zugleich benötigt, deren Brechungsindizes voneinander abweichen können, was zu Transmissionsverlusten führen kann. All dies beeinträchtigt die Darstellungseigenschaften eines Touch-Bildschirms.

Überkreuzungen haben ferner den Nachteil, dass die sich überkreuzenden leitenden Strukturen unerwünschte Pseudo-Erfassungszellen bilden, wodurch die Steuerelektronik gestört werden kann.

Bekannt ist es, kreuzungsfreie, d.h. einschichtige Verschaltungen zumindest im Erfassungsbereich vorzunehmen, während sich kreuzende Strukturen in den Kontaktbereich oder an andere Stelle verlegt sind. Durch diesen Kompromiss kann die Anzahl der Kontaktpunkte klein gehalten werden: typisch sind M:N-Verschaltungen, welche wiederum der physischen Anordnung der Sensoren in K Spalten und L Zeilen entspricht, d.h. M=K und N=L.

Derartige oder ähnliche Lehren finden sich zum Teil in den US 9 081 453, DE 20 2006 010 488 U1, US 8 319 747 B2, DE 10 2011 122 110 A1, DE 11 2008 001 245 T5, DE 10 2008 050 215 A1, DE 10 2011 108153 A1, US 2015/0261348 A1.

Auch dann, wenn die Kreuzung sich leitender Strukturen nicht im Erfassungsbereich sondern im Kontaktbereich (Randbereich) erfolgt, besteht allerdings der Nachteil der aufwändigen Herstellung. Die kreuzenden Verbindungen zwischen leitenden Strukturen müssen über die zur zweidimensionalen Sensorfläche orthogonale dritte Dimension vorgenommen werden, so dass eine einzelne zweidimensionale Schicht nicht ausreicht, um die Verschaltung zu gewährleisten.

Die vorgenannten Nachteile gelten auch für eine Ausführungsform der US 9 081 453, welche ein Sensorfeld mit einem Sensorcontroller beschreibt. Denn ein Controller ist kein einschichtiges Bauteil.

Es wäre demnach eine einlagig herstellbare Sensoranordnung wünschenswert, insbesondere zur Herstellung von Sensorfeldern durch Bedrucken, z.B. mittels Siebdruck, eines Substrats mit leitendem Material.

Während die Elektroden-Zwischenräume bei mehrlagigen Leiterschichtaufbauten - wie vorstehend beschrieben - überwiegend vertikal durch eine Überlagerung zweier Leiterbereiche ausgebildet sind, die durch eine isolierende Schicht voneinander galvanisch getrennt sind, ist in einlagigen Leiterschichtaufbauten der Zwischenraum typischerweise durch einen lateralen Abstand zwischen zwei auf demselben Substrat aufgebrachten Leiterbereichen, d.h. z.B. einen galvanisch isolierenden Spalt (Sensor-Spalt), gebildet.

Die US 2004/0125087 A1 und die US 8,754,662 B1 zeigen Sensorfelder, welche mit einer einzelnen Schicht leitenden Materials herstellbar sind. Diese Sensorfelder sind allerdings hinsichtlich der Anzahl der Kontaktpunkte verbesserungswürdig.

Daneben gibt es einschichtige Sensoranordnungen, bei welchen einige der Elektroden derart mit den Kontaktpunkten verbunden werden, dass Verbindungen durch Spalte zwischen ersten und zweiten Elektroden anderer Sensoren hindurch geführt werden. Dies führt allerdings zur Bildung unerwünschter Pseudo-Erfassungszellen und kann insbesondere zu Störkapazitäten führen. Somit können unerwünschte Störungen bei der Ansteuerung und Auswertung entstehen und es kann eine aufwändigere Steuerelektronik erforderlich sein.

Einige bekannte Sensoranordnungen sind zudem nur für eine festgelegte Anzahl an Spalten und/oder Reihen vorgesehen, die Größe des Sensorfeldes ist demnach bei gleichbleibender Positionsbestimmungsauflösung nicht skalierbar. Vorteilhaft wären demgegenüber Verschaltungsmuster, welche es bei festgelegter Auflösung erlauben, die Größe der Sensoranordnung zu skalieren.

Die deutschen Patentanmeldungen mit den Nummern 10 2015112 317.7 und 10 2016113162.8 werden hiermit durch Referenz inkorporiert.

Eine Aufgabe der Erfindung ist es, über Kontaktpunkte betreibbare Sensoranordnungen zur zweidimensionalen Positionsbestimmung bereitzustellen, welche einerseits einschichtig, d.h. kreuzungsfrei, ausgebildet sind und andererseits ein besonders niedriges Verhältnis aus der Anzahl von Kontaktpunkten und der Anzahl von Sensoren aufweisen.

Ein Aspekt der Aufgabe ist es, die Verschaltungen der Sensorelektroden und Kontaktpunkte derart vorzunehmen, dass keine leitenden Verbindungen durch die Spalte zwischen den Elektroden eines Sensors verlaufen.

Ein weiterer Aspekt der Aufgabe ist es, skalierbare Verschaltungsmuster von Elektroden und Kontaktpunkten anzugeben, welche es ermöglichen, zweidimensionale Sensorfelder mit variabler Höhe und/oder Breite und definierbarer Auflösung der Positionsbestimmung herzustellen.

Die Aufgabe wird durch die Gegenstände der unabhängigen Patentansprüche gelöst. Vorteilhafte Ausführungsformen sind Gegenstände der abhängigen Patentansprüche.

Erfindungsgemäß wird eine zweidimensionale Sensoranordnung zur Erfassung von Positionen, z.B. Fingerpositionen, in zwei oder drei Dimensionen bereitgestellt, welche insbesondere für berührungsempfindliche Tastfelder oder Bildschirme geeignet ist. Im Hinblick auf eine Erfassung von Positionen in drei Dimensionen kann insbesondere eine dreidimensionale, unterstützende Gestiksteuerung durch Nachweis von Bedienobjekten im Abstand über der Bedienoberfläche bereitgestellt werden.

Die Sensoranordnung umfasst einen Erfassungsbereich, in dem eine Vielzahl von Sensoren angeordnet sind, insbesondere kapazitive Sensoren, und einen Kontaktbereich, in dem eine Vielzahl von elektrisch leitenden Kontaktpunkten angeordnet sind.

Die Sensoren umfassen jeweils ein Elektrodenpaar bestehend aus einer ersten Elektrode und einer zur ersten Elektrode durch einen elektrisch isolierenden Elektrodenzwischenraum, z.B. einen Spalt, beabstandeten zweiten Elektrode.

Zwischen den Elektroden und den Kontaktpunkten bestehen elektrische Verbindungen, derart dass die Elektroden jeweils mit einem der Kontaktpunkte verbunden sind und die Kontaktpunkte jeweils mit einer oder mehreren der Elektroden verbunden sind. Mit anderen Worten ist jede der Elektroden mit genau einem der Kontaktpunkte verbunden, während jeder der Kontaktpunkte mit einem oder mehreren der Elektroden verbunden ist.

Unerwünscht sind jedoch elektrische Verbindungen zwischen ersten und zweiten Elektroden. Demnach sind die Kontaktpunkte jeweils entweder mit einer oder mehreren der ersten Elektroden oder mit einer oder mehreren der zweiten Elektroden verbunden. Das bedeutet, dass die Kontaktpunkte in zwei Gruppen unterteilt werden. Es wird somit eine erste und eine zweite Gruppe von Kontaktpunkten definiert, wobei die erste Gruppe diejenigen Kontaktpunkte umfasst, die mit der oder den ersten Elektroden verbunden sind und die zweite Gruppe diejenigen Kontaktpunkte umfasst, die mit der oder den zweiten Elektroden verbunden sind.

Ferner ist vorgesehen, dass die Elektrodenpaare eines Sensors jeweils mit einem eindeutigen Paar von Kontaktpunkten verbunden sind. Mathematisch gesprochen bedeutet dies, dass die Menge der Elektrodenpaare, welche den Sensoren entsprechen, injektiv abgebildet wird auf die Menge aller beliebig gebildeten Paare von Kontaktpunkten.

Mit anderen Worten ist jedes beliebig gebildete Paar bestehend aus einem der Kontaktpunkte der ersten Gruppe und einem der Kontaktpunkte der zweiten Gruppe mit dem Elektrodenpaar von höchstens einem der Sensoren paarweise verbunden. Unter paarweise verbunden wird dabei verstanden, dass sowohl die erste Elektrode mit dem Kontaktpunkt der ersten Gruppe als auch die zweite Elektrode mit dem Kontaktpunkt der zweiten Gruppe verbunden ist.

Die elektrischen Verbindungen zwischen den Elektroden und den Kontaktpunkten bestehen jeweils entweder unmittelbar oder sind als eine elektrisch leitende Elektrodenzuleitung ausgebildet. Ein Kontaktpunkt kann demnach entweder direkt an einer der Elektroden angebracht sein oder über eine oder mehrere Leiterverbindungen mit einer oder mehreren Elektroden verbunden sein.

Die Kontaktpunkte, die Elektrodenzuleitungen und die Elektroden bilden zusammengenommen eine Vielzahl elektrisch leitender Leitungsbereiche. Die Leitungsbereiche umfassen jeweils einen der Kontaktpunkte und die mit dem jeweiligen Kontaktpunkt verbundenen Elektroden und/oder Elektrodenzuleitungen. Mit anderen Worten umfasst jeder der Leitungsbereiche genau einen Kontaktpunkt und alle damit verbundenen Elektroden und Elektrodenzuleitungen, falls auch Elektrodenzuleitungen mit dem jeweiligen Kontaktpunkt in elektrischer Verbindung stehen. Jeder der Leitungsbereiche ist demnach eine elektrisch leitende Zusammenhangskomponente, welche von den anderen Leitungsbereichen elektrisch isoliert ist.

Weil jeder Leitungsbereich genau einen Kontaktpunkt umfasst, ist die Anzahl der Leitungsbereiche genauso groß wie die Anzahl der Kontaktpunkte.

Erfindungsgemäß bilden die Leitungsbereiche ein einschichtiges Netzwerk aus. Insbesondere können demnach alle Leitungsbereiche in derselben Ebene auf ein Substrat aufgebracht werden. Dass die Leitungsbereiche ein einschichtiges Netzwerk ausbilden bedeutet demnach im Rahmen der Erfindung, dass die Vielzahl der Leitungsbereiche einschichtig auf einem Substrat aufbringbar ist. Anders ausgedrückt überkreuzt sich keiner der Leitungsbereiche mit einem anderen Leitungsbereich, wenn man die Projektion der Leitungsbereiche auf die zwei Dimensionen der Sensoranordnung betrachtet. In diesem Sinne kann man gleichbedeutend sagen, dass die Leitungsbereiche ein kreuzungsfreies Netzwerk ausbilden. Das heißt, dass keiner der Leitungsbereiche, auch nicht teilweise, bezüglich des Substrats vertikal über oder unter einem anderen Leitungsbereich liegt.

Ein Leitungsbereich als eine elektrisch leitende Zusammenhangskomponente muss nicht nur aus einem leitenden Material bestehen. Es kann auch vorgesehen sein, dass ein Leitungsbereich aus mehreren verschiedenen leitenden Materialien besteht. Insbesondere kann der in einem Leitungsbereich umfasste Kontaktpunkt aus einem anderen leitenden Material als der oder die in dem Leitungsbereich umfassten Elektroden hergestellt sein. Auch eine oder mehrere Elektrodenzuleitungen, sofern solche in einem Leitungsbereich umfasst sind, können aus einem anderen leitenden Material hergestellt sein, als der oder die Elektroden oder der Kontaktpunkt. Es kann auch vorgesehen sein, dass ein Leitungsbereich im Erfassungsbereich transparentes leitendes Material und im Kontaktbereich opakes leitendes Material umfasst, wobei das transparente und das opake leitende Material miteinander elektrisch leitend verbunden ist. Es kann demnach im Erfassungsbereich transparentes Material und im Kontaktbereich opakes Material (z.B. auch in zwei Schritten) aufgebracht sein und sich zwecks Kontaktierung (zu einem Leitungsbereich) die transparenten und opaken Materialien an den Übergängen leitend überlappen.

Allgemein umfasst ein Leitungsbereich demnach sämtliche leitend mit einem Kontaktpunkt verbundenen Elemente, unabhängig von dem leitenden Material. Verschiedene leitende Materialen, welche zusammen einen Leitungsbereich bilden, d.h. leitend miteinander verbunden sind, können auch vertikal zum Substrat angeordnet sein, um eine elektrische Verbindung herzustellen. Mit anderen Worten können verschiedene leitende Materialien auch übereinander angeordnet sein, solange sie nur demselben Leitungsbereich angehören. Leitendes Material zweier verschiedener Leitungsbereiche hingegen ist erfindungsgemäß nebeneinander auf dem Substrat aufbringbar.

Die Ausbildung eines einlagigen, d.h. kreuzungsfreien, Netzwerks hat mehrere Vorteile: Es ist eine besonders einfache Herstellung eines Sensorfelds durch Aufbringen lediglich einer Schicht aus leitendem Material auf einem Substrat möglich. Das Aufbringen kann insbesondere mit sehr einfachen Verfahren wie dem Aufdrucken erfolgen. Weil nur eine dünne leitende Schicht benötigt wird, können bei Verwendung transparenten leitenden Materials Sensorfelder mit sehr hoher Transmission und niedrigem Haze-Wert gefertigt werden. Insbesondere werden Transmissionsverluste durch unterschiedliche Brechungsindizes zwischen leitenden und isolierenden Materialschichten vermieden. Da ein einschichtiges Netzwerk keine Überkreuzungen von Leitungsbereichen aufweist, wird außerdem die Entstehung von störenden Pseudo-Erfassungszellen an den Stellen der Überkreuzungen vermieden.

Es ist insbesondere vorgesehen, dass die Elektrodenzwischenräume, d.h. die Spalte, zwischen den ersten und den zweiten Elektroden der Sensoren jeweils lediglich an diejenigen zwei Leitungsbereiche angrenzen, welche die erste und die zweite Elektrode des jeweiligen Sensors umfassen.

Das bedeutet insbesondere, dass durch keinen der Elektrodenzwischenräume zwischen einem Elektrodenpaar Elektrodenzuleitungen zu anderen Elektroden verlaufen. Dadurch kann in vorteilhafter Weise die Entstehung von Pseudo-Erfassungszellen und Störkapazitäten vermieden werden. Die Ansteuerung des Sensorfeldes und die Auswertung der Positionen kann somit sehr präzise und zugleich ohne aufwändige Filterung der Signale erfolgen.

Wenn vorgesehen ist, dass die Elektrodenzwischenräume jeweils lediglich an die zugehörigen beiden Leitungsbereiche angrenzen, ist damit insbesondere gemeint, dass die Elektrodenzwischenräume jeweils an keinen der Leitungsbereiche außer an die beiden zugehörigen Leitungsbereiche angrenzen. Es können allerdings zwischen den zwei Elektroden eines Sensors Blindflächen liegen, wie weiter unten ausgeführt ist.

Nachfolgend werden einige Ausführungsformen der Erfindung beschrieben, die es ermöglichen, die Anzahl an Kontaktpunkten besonders stark zu reduzieren. Dadurch können in vorteilhafter Weise einfache, materialsparende und fehlerunanfällige Netzwerke realisiert werden, welche sich insbesondere durch eine geringe Dichte an Leiterbahnen und eine einfache Möglichkeit zur Kontaktierung und Verbindung mit einer Steuerelektronik auszeichnen.

Allgemein gesprochen kann die Sensoranordnung zumindest 3, vorzugsweise zumindest 4, noch bevorzugter zumindest 6 und nochmals bevorzugter zumindest 8 und besonders bevorzugt zumindest 10 zueinander benachbarte Reihen umfassen, wobei in den Reihen jeweils zumindest 3 Sensoren, vorzugsweise zumindest 4 Sensoren, noch bevorzugter zumindest 6 Sensoren und nochmals bevorzugter zumindest 8 Sensoren und besonders bevorzugt zumindest 10 Sensoren zueinander benachbart angeordnet sein können.

In einer Ausführungsform der Erfindung weist die Sensoranordnung mehrere zueinander benachbarte Reihen auf in welchen jeweils einige der Sensoren zueinander benachbart angeordnet sind, wobei die Reihen zumindest eine Reihe R₁, eine zur Reihe R₁ benachbarte Reihe R₂, eine zur Reihe R₂ benachbarte Reihe R₃ und eine zur Reihe R₃ benachbarte Reihe R₄ umfassen. Insbesondere kann es sich bei den Reihen um Zeilen oder um Spalten einer matrixartigen Anordnung von Sensoren handeln.

In dieser Ausführungsform ist nun folgende Verschaltung vorgesehen:
- Die ersten Elektroden der in der Reihe R₁ angeordneten Sensoren und die ersten Elektroden der in der Reihe R₄ angeordneten Sensoren sind jeweils mit demselben Kontaktpunkt, welcher als A bezeichnet sei, verbunden.
- Die ersten Elektroden der in der Reihe R₂ angeordneten Sensoren und die ersten Elektroden der in der Reihe R₃ angeordneten Sensoren sind jeweils mit demselben Kontaktpunkt, insbesondere mit einem anderen als dem als A bezeichneten Kontaktpunkt, verbunden.
- Die zweiten Elektroden der in der Reihe R₁ angeordneten Sensoren und die zweiten Elektroden der in der Reihe R₄ angeordneten Sensoren sind jeweils mit unterschiedlichen Kontaktpunkten, welche als Mehrzahl B bezeichnet sei, verbunden.
- Die zweiten Elektroden der in der Reihe R₂ angeordneten Sensoren und die zweiten Elektroden der in der Reihe R₃ angeordneten Sensoren sind jeweils mit unterschiedlichen Kontaktpunkten verbunden, insbesondere mit den als Mehrzahl B bezeichneten Kontaktpunkten, dabei insbesondere in derselben Reihenfolge der Kontaktpunkte in den Reihen.

Wenn vorstehend oder nachfolgend von einer ersten oder einer zweiten Elektrode eines Sensors gesprochen wird, ist damit jeweils eine beliebige der beiden Elektroden des Sensors gemeint, sofern nicht unter Berücksichtigung der erfindungsgemäßen Bedingungen hinsichtlich der Verbindung von Elektroden und Kontaktpunkten, nur noch eine der beiden Elektroden in Frage kommt.

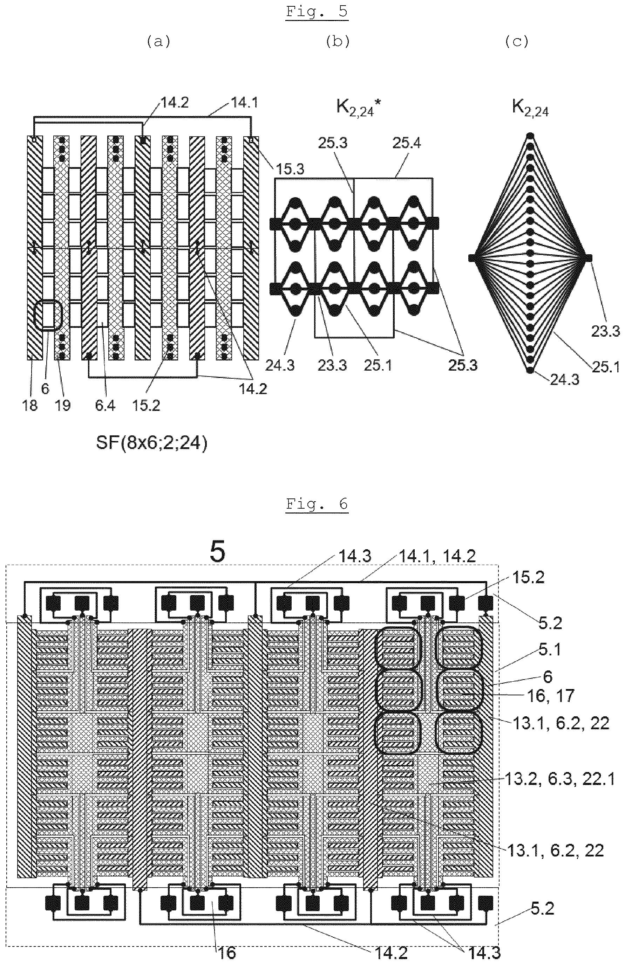

In den Reihen sind jeweils vorzugsweise mindestens 3, besonders bevorzugt mindestens 4, noch bevorzugter mindestens 6 Sensoren angeordnet. Vorzugsweise sind mindestens 8 benachbarte Reihen umfasst, wobei insbesondere die Reihen 1 bis 4 wie vorstehend beschrieben verschaltet sind, vorzugsweise auch die Reihen 5 bis 8 wie vorstehend beschrieben verschaltet sind und besonders bevorzugt auch die Reihen 3 bis 6 wie vorstehend beschrieben verschaltet sind. Eine beispielhafte Sensoranordnung mit 8 benachbarten Reihen und jeweils 6 Sensoren pro Reihe ist in Fig. 5 dargestellt.

In einer Weiterbildung der vorstehenden Ausführungsform der Erfindung umfassen die Reihen zwei randständige Reihen R und R', welche dadurch gekennzeichnet sind, dass sie jeweils mit lediglich einer der Reihen benachbart sind. Insbesondere können die randständigen Reihen randständig bezüglich aller auf dem Sensorfeld angeordneten Sensoren sein.

Vorgesehen ist nun eine Verschaltung derart, dass Elektroden in den randständigen Reihen umverbunden sind, d.h.: Die ersten Elektroden der in der Reihe R angeordneten Sensoren und die ersten Elektroden der in der Reihe R' angeordneten Sensoren sind mit demselben Kontaktpunkt verbunden.

Vorzugsweise sind mindestens 8 Reihen umfasst, noch bevorzugter mindestens 12 Reihen.

In einer anderen Ausführungsform der Erfindung umfasst die Sensoranordnung zumindest einen Anordnungsbereich in welchem zumindest einige der Sensoren in einer Matrix angeordnet sind, derart, dass die Positionen der Sensoren in dem Anordnungsbereich jeweils mit einem Zeilenindex i und einem Spaltenindex j als Position Pᵢⱼ charakterisiert werden können.

In dieser Ausführungsform ist nun folgende Verschaltung vorgesehen:
- Die ersten Elektroden der an den Positionen P₁₂, P₂₂, P₁₃ und P₂₃ angeordneten vier Sensoren sind mit demselben Kontaktpunkt, welcher als A bezeichnet sei, verbunden.
- Die ersten Elektroden der an den Positionen P₃₂, P₄₂, P₃₃ und P₄₃ angeordneten vier Sensoren sind mit demselben Kontaktpunkt, insbesondere mit einem anderen als dem als A bezeichneten Kontaktpunkt, verbunden.
- Die zweiten Elektroden der an den Positionen P₂₁, P₃₁, P₂₂ und P₃₂ angeordneten vier Sensoren sind mit demselben Kontaktpunkt, welcher als B bezeichnet sei, verbunden.
- Die zweiten Elektroden der an den Positionen P₂₃, P₃₃, P₂₄ und P₃₄ angeordneten vier Sensoren sind mit demselben Kontaktpunkt, insbesondere mit einem anderen als dem als B bezeichneten Kontaktpunkt, verbunden.

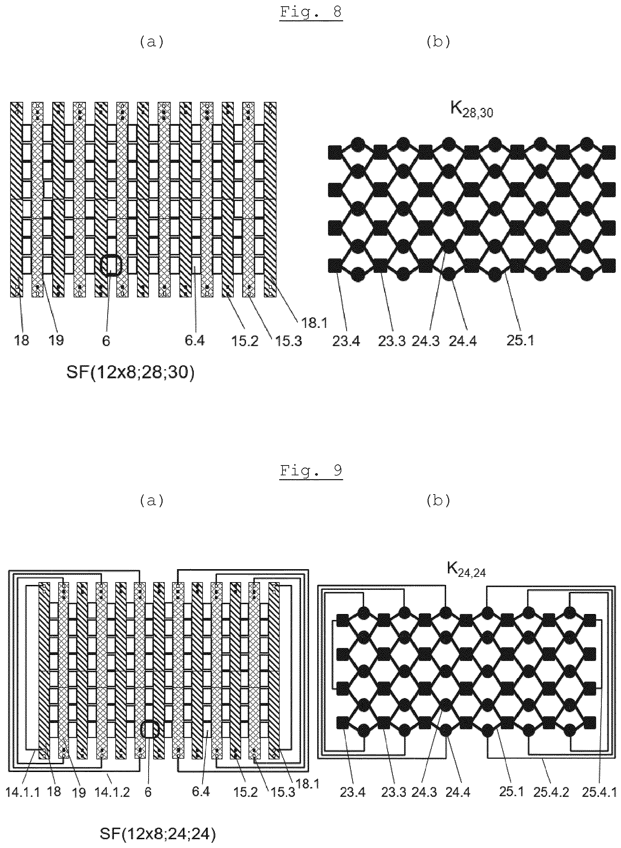

Die vorstehend beschriebene Verschaltung, welche Sensoren angeordnet in einer 4:4-Matrix umfasst, ist insbesondere als eine Elementarzelle zu verstehen. Es können demnach nach demselben Muster aufgebaute größerflächige Verschaltungen von Sensoren angeordnet in größeren m:n-Matrizen vorgesehen sein, wie dem Fachmann grundsätzlich bekannt ist. Vorzugsweise sind Matrizen mit mindestens 8 Zeilen und/oder 12 Spalten vorgesehen. Eine Sensoranordnung mit einer Anordnung von Sensoren in einer Matrix mit 8 Zeilen und 12 Spalten ist in der Fig. 8 dargestellt.

In einer ersten Weiterbildung der vorstehend genannten Ausführungsform der Erfindung umfasst die Matrix zwei randständige Zeilen mit Zeilenindizes i=1 bzw. i=m. Diese randständigen Zeilen können insbesondere randständig bezüglich aller auf dem Sensorfeld angeordneten Sensoren sein.

Vorgesehen ist nun eine Verschaltung derart, dass Elektroden der randständigen Zeilen wie folgt umverbunden sind:
- Die zweiten Elektroden der an den Positionen P₁₁, P₁₂, Pₘ₁ und Pₘ₂ angeordneten vier Sensoren sind mit demselben Kontaktpunkt verbunden sind, welcher als C bezeichnet sei.
- Die zweiten Elektroden, der an den Positionen P₁₃, P₁₄, Pₘ₃ und Pₘ₄ angeordneten vier Sensoren sind mit demselben Kontaktpunkt verbunden, insbesondere mit einem anderen als dem als C bezeichneten Kontaktpunkt.

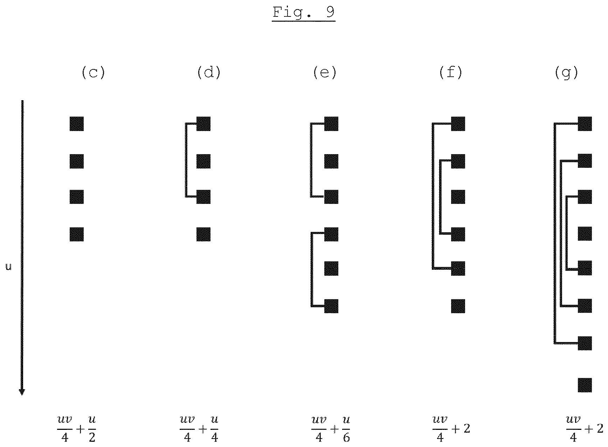

Die vorstehend beschriebene Verschaltung, welche Sensoren angeordnet in einer m:4-Matrix betrifft, ist wiederum insbesondere als eine Elementarzelle zu verstehen. Es können demnach analoge Umverbindungen in breiteren m:n-Matrizen vorgesehen sein, wie dem Fachmann grundsätzlich bekannt ist. Eine Sensoranordnung mit einer Anordnung von Sensoren in einer Matrix mit 8 Zeilen und 12 Spalten ist in der Fig. 9 dargestellt.

In einer zweiten Weiterbildung der vorstehend genannten Ausführungsform der Erfindung umfasst die Matrix zwei randständige Spalten mit Spaltenindizes j=1 bzw. j=n. Diese randständigen Spalten können wiederum insbesondere randständig bezüglich aller auf dem Sensorfeld angeordneten Sensoren sein.

Vorgesehen ist nun eine Verschaltung derart, dass innerhalb einer oder beiden der randständigen Spalten Elektroden miteinander wie folgt verbunden werden:
- Die ersten Elektroden der an den Positionen P₁₁, P₂₁, P₅₁ und P₆₁ angeordneten vier Sensoren sind mit demselben Kontaktpunkt verbunden, welcher als D bezeichnet sei, und/oder
- die ersten Elektroden der an den Positionen P₁ₙ, P₂ₙ, P₅ₙ und P₆ₙ angeordneten vier Sensoren sind mit demselben Kontaktpunkt verbunden, insbesondere mit einem anderen als dem als D bezeichneten Kontaktpunkt.

Die vorstehend beschriebene Verschaltung, welche insbesondere Sensoren angeordnet in einer 6:n-Matrix betrifft, kann wiederum als eine Elementarzelle verstanden werden. Es können demnach weitere solche Verbindungen randständiger Elektroden in längeren m:n-Matrizen vorgesehen sein, wie dem Fachmann grundsätzlich bekannt ist. Eine Sensoranordnung mit einer Anordnung von Sensoren in einer Matrix mit 8 Zeilen und 12 Spalten ist in der Fig. 9 dargestellt. Die beschriebene 6:n Elementarzelle tritt hier nur einmal auf. Sie vervielfacht sich erst bei einem Sensorfeld mit einem Vielfachen von 6 Zeilen.

Insbesondere in einer größeren Matrix kann auch vorgesehen sein, dass die ersten Elektroden der an den Positionen P_{x,1}, P_{x+1,1}, P_{x+4,1} und P_{x+5,1} angeordneten vier Sensoren mit demselben Kontaktpunkt verbunden sind, welcher als D' bezeichnet sei, und/oder dass die ersten Elektroden, der an den Positionen P_{x,n}, P_{x+1,}n, P_{x+4,n} und P_{x+5,n} angeordneten vier Sensoren mit demselben Kontaktpunkt verbunden sind, insbesondere mit einem anderen als dem als D' bezeichneten Kontaktpunkt, wobei x insbesondere die Werte 1,7,13,19, usw. annehmen kann.

Bezüglich aller vorstehend genannter Sensoranordnungen kann vorgesehen sein, dass die Sensoranordnung zumindest einen Anordnungsbereich umfasst in welchem eine Anzahl w der Sensoren in einer quadratischen Matrix angeordnet sind.

Darunter wird verstanden, dass diese w Sensoren in einer gleichen Anzahl von Zeilen und Spalten angeordnet sind; während der Anordnungsbereich nicht geometrisch quadratisch zu sein braucht.

Ferner ist nun vorgesehen, dass die Anzahl der Kontaktpunkte, welche mit den Elektroden der in dem Anordnungsbereich angeordneten w Sensoren verbunden sind, kleiner als w/2 + w^{1/2} ist, vorzugsweise kleiner oder gleich w/2 + w^{1/2}/2 ist, bevorzugter kleiner oder gleich w/2 + w^{1/2}/4, noch bevorzugter kleiner oder gleich w/2 + w^{1/2}/6 ist und ganz besonders bevorzugt kleiner oder gleich w/2 + 2 ist (wobei in jedem der genannten Fälle w/2 + 2 vorzugsweise eine untere Grenze bildet).

Dabei kann vorgesehen sein, dass der Anordnungsbereich mindestens w=9, vorzugsweise mindestens w=16, besonders bevorzugt mindestens w=25 und noch bevorzugter mindestens w=36 Sensoren umfasst.

Eine verschaltete Sensoranordnung, welche die vorstehend genannten funktionalen Zusammenhänge zwischen der Anzahl der Sensoren und der Anzahl der Kontaktpunkte aufweist, verbindet die Vorteile, einschichtiger Realisierbarkeit, wie sich bereits aus den genannten Ausführungsbeispielen ergibt, und eine besonders niedrigen Anzahl an Kontaktpunkten pro Anzahl an Sensoren.

In Weiterbildungen der Erfindung sind Verschaltungen entsprechend nachfolgender graphentheoretischer Beschreibungen vorgesehen.

Es kann demnach vorgesehen sein, dass die Leitungsbereiche und die Elektrodenzwischenräume einen bipartiten planaren, d.h. kreuzungsfrei darstellbaren, Graphen bilden, welcher eine Vielzahl von Knoten einer ersten Knotenmenge, eine Vielzahl von Knoten einer zweiten Knotenmenge und eine Vielzahl von Kanten umfasst, wobei die Kanten jeweils zwischen einem der Knoten der ersten Knotenmenge und einem der Knoten der zweiten Knotenmenge verlaufen.

Die Knoten des bipartiten Graphen entsprechen dabei den Leitungsbereichen: Diejenigen Leitungsbereiche, welche einen Kontaktpunkt der ersten Gruppe umfassen, bilden die Knoten der ersten Knotenmenge und diejenigen Leitungsbereiche, welche einen Kontaktpunkt der zweiten Gruppe umfassen, bilden die Knoten der zweiten Knotenmenge.

Die Kanten des Graphen entsprechen den Zwischenräumen zwischen den Elektrodenpaaren, d.h. den Sensor-Spalten: Die Elektrodenzwischenräume zwischen den ersten und den zweiten Elektroden der Sensoren bilden jeweils eine Kante zwischen denjenigen zwei Knoten, welche durch diejenigen zwei Leitungsbereiche gebildet sind, welche die jeweilige erste und zweite Elektrode umfassen. Kurz gesagt entsprechen die Spalte zwischen den Elektrodenpaaren den Kanten.

Insbesondere kann die erste Knotenmenge eine Mächtigkeit von zwei aufweisen und die zweite Knotenmenge eine Mächtigkeit von größer als zwei aufweisen. Ferner kann der bipartite Graph vollständig sein.

Mit anderen Worten kann eine 2:N-Verschaltung vorgesehen sein, wobei z.B. N=24 sein kann.

Es kann auch vorgesehen sein, dass die Vielzahl der Sensoren der Sensoranordnung matrixartig angeordnet ist. Es kann somit vorgesehen sein, dass die Vielzahl von Sensoren, welche im Erfassungsbereich angeordnet sind, eine Anzahl von u*v Sensoren ist, wobei die Sensoren in einer Matrix mit u Zeilen und v Spalten angeordnet sind.

In dieser Situation ist insbesondere vorgesehen, dass eine der Knotenmengen eine Mächtigkeit von u*v/4 aufweist und dass die andere der Knotenmengen eine Mächtigkeit von höchstens u*v/4 + u/2, vorzugsweise von höchstens u*v/4 + u/4, besonders bevorzugt von höchstens u*v/4 + u/6 (insbesondere für den Fall von 6 Zeilen und/oder eines Vielfachen von 6 Zeilen), nochmals bevorzugter von höchstens u*v/4 + 3 und ganz besonders bevorzugt von u*v/4 + 2 (insbesondere für den Fall von mindestens 8 Zeilen und/oder eines Vielfachen von 4 Zeilen), aufweist (wobei in jedem der genannten Fälle u*v/4 + 2 vorzugsweise eine untere Grenze bildet).

Ferner weisen die Knoten der Knotenmenge mit Mächtigkeit u*v/4 jeweils genau vier durch Kanten verbundene Nachbarknoten auf und bezüglich der anderen Knotenmenge gilt, dass eine Anzahl von mindestens u*v/4 - u/2, vorzugsweise von mindestens u*v/4 - u/4, besonders bevorzugt von mindestens u*v/4 - u/6, nochmals bevorzugter von mindestens u*v/4 - 3 und ganz besonders bevorzugt von u*v/4 - 2 der Knoten jeweils genau vier durch Kanten verbundene Nachbarknoten aufweisen (wobei in jedem der genannten Fälle u*v/4 - 2 vorzugsweise eine obere Grenze bildet) und eine (restliche) Anzahl von höchstens u, vorzugsweise von höchstens u/2, besonders bevorzugt von höchstens u/3, nochmals bevorzugter von höchstens 6 und ganz besonders bevorzugt von 4 der Knoten jeweils genau zwei durch Kanten verbundene Nachbarknoten aufweisen (wobei in jedem der genannten Fälle 4 vorzugsweise eine untere Grenze bildet).

Gleiches gilt selbstverständlich auch, wenn Zeilen mit Spalten vertauscht werden, derart dass die Variablen u und v vertauscht werden.

Die Erfindung betrifft ferner eine Übersetzungseinheit für eine zweidimensionale Sensoranordnung bei welcher die Vielzahl von Sensoren eine Anzahl von u*v Sensoren ist, welche in einer Matrix mit u Zeilen und v Spalten angeordnet sind.

Die Übersetzungseinheit umfasst einen oder mehrere erste Kontaktpunkt-Anschlüsse zum Anschließen der Kontaktpunkte der ersten Gruppe und einen oder mehrere zweite Kontaktpunkt-Anschlüsse zum Anschließen der Kontaktpunkte der zweiten Gruppe.

Ferner umfasst die Übersetzungseinheit eine Anzahl u von ersten Steuerungs-Anschlüssen und eine Anzahl v von zweiten Steuerungs-Anschlüssen. Die Anzahl der ersten und zweiten Steuerungsanschlüsse entspricht somit der Anzahl der Zeilen bzw. Spalten der matrixweise angeordneten Sensoren.

Die Übersetzungseinheit ist ausgebildet, es zu ermöglichen, die Sensoranordnung so zu betreiben, als wären die ersten Elektroden der in denselben Zeilen angeordneten Sensoren jeweils mit denselben ersten Steuerungsanschlüssen verbunden und als wären die zweiten Elektroden der in denselben Spalten angeordneten Sensoren jeweils mit denselben zweiten Steuerungsanschlüssen verbunden.

Die Übersetzungseinheit erlaubt somit ein Betreiben einer einschichtigen und kreuzungsfrei verschalteten Sensoranordnung mit derselben Steuerungselektronik, die für das Betreiben bekannter Sensoranordnungen eingesetzt wird, insbesondere für die im Hintergrund der Erfindung beschriebene Anordnung mit orthogonal zueinander verlaufenden, sich kreuzenden und durch eine Isolationsschicht getrennten Elektrodenstreifen.

Die Erfindung betrifft auch ein berührungsempfindliches Tastfeld (Touch-Pad) umfassend ein flächiges, insbesondere ebenes oder gekrümmtes, Substrat mit einer einem Außenbereich zugewandten, äußeren Substratoberfläche und einer gegenüberliegenden, dem Außenbereich abgewandten, inneren Substratoberfläche und einer an der inneren Substratoberfläche angeordneten zweidimensionalen Sensoranordnung zur Interaktion mit einem sich im Außenbereich befindlichen Benutzer.

Ferner betrifft die Erfindung einen berührungsempfindlichen Bildschirm (Touch-Screen) umfassend ein flächiges, insbesondere ebenes oder gekrümmtes, transparentes Substrat mit einer einem Außenbereich zugewandten, äußeren Substratoberfläche und einer gegenüberliegenden, dem Außenbereich abgewandten, inneren Substratoberfläche und eine an der inneren Substratoberfläche angeordnete zweidimensionale Sensoranordnung zur Interaktion mit einem sich im Außenbereich befindlichen Benutzer.

Der berührungsempfindliche Bildschirm umfasst ferner ein flächiges, insbesondere ebenes oder gekrümmtes, pixelbasiertes Anzeigeelement zur leuchtenden Darstellung von Informationen, welches mit seiner Vorderseite der inneren Substratoberfläche sowie dem Außenbereich zugewandt ist.

Außerdem betrifft die Erfindung eine berührungsempfindliche Bedienblende, umfassend ein flächiges, insbesondere ebenes oder gekrümmtes, transparentes Glas- oder Glaskeramik-Substrat mit einer einem Außenbereich zugewandten, äußeren Substratoberfläche und einer gegenüberliegenden, dem Außenbereich abgewandten, inneren Substratoberfläche und einer an der inneren Substratoberfläche angeordneten zweidimensionale Sensoranordnung zur Interaktion mit einem sich im Außenbereich befindlichen Benutzer.

Die berührungsempfindliche Bedienblende umfasst ferner mindestens ein flächiges, insbesondere ebenes oder gekrümmtes, pixelbasiertes Anzeigeelement zur leuchtenden Darstellung von Informationen, welches mit seiner Vorderseite der inneren Substratoberfläche sowie dem Außenbereich zugewandt ist und einen Träger zur Befestigung des Anzeigeelements vorzugsweise beabstandet von der inneren Substratoberfläche.

Die Erfindung betrifft auch eine Kochfläche mit einer berührungsempfindlichen Bedienblende, welche vorzugsweise in einem Kaltbereich der Kochfläche angeordnet ist.

Die Erfindung betrifft ferner ein Verfahren zur Herstellung einer zweidimensionalen Sensoranordnung auf einem vorzugsweise ebenen, transparenten Substrat, insbesondere einer Glas- oder Glaskeramik-Platte, wobei zumindest ein einschichtiges Netzwerk aus elektrisch leitenden Leitungsbereichen auf dem Substrat aufgebracht wird.

Das einschichtige Netzwerk aus Leitungsbereichen umfasst insbesondere
- eine Vielzahl von Elektrodenpaaren bestehend aus einer ersten Elektrode und einer zur ersten Elektrode durch einen elektrisch isolierenden Elektrodenzwischenraum beabstandeten zweiten Elektrode,
- eine Vielzahl von elektrisch leitenden Kontaktpunkten,
- eine Vielzahl von elektrischen Verbindungen zwischen den Elektroden und den Kontaktpunkten, welche jeweils entweder unmittelbar bestehen oder als eine elektrisch leitende Elektrodenzuleitung ausgebildet sind,
- wobei die Kontaktpunkte, die Elektrodenzuleitungen und die Elektroden zusammengenommen die Leitungsbereiche bilden, derart, dass die Leitungsbereiche jeweils einen der Kontaktpunkte und die mit dem jeweiligen Kontaktpunkt verbundenen Elektroden und Elektrodenzuleitungen umfassen.

Die Kontaktpunkte sind jeweils entweder mit einer oder mehreren der ersten Elektroden oder mit einer oder mehreren der zweiten Elektroden verbunden, so dass eine erste und eine zweite Gruppe von Kontaktpunkten definiert werden, wobei die erste Gruppe diejenigen Kontaktpunkte umfasst, die mit der oder den ersten Elektroden verbunden sind und die zweite Gruppe diejenigen Kontaktpunkte umfasst, die mit der oder den zweiten Elektroden verbunden sind.

Ferner ist jedes beliebig gebildete Paar bestehend aus einem der Kontaktpunkte der ersten Gruppe und einem der Kontaktpunkte der zweiten Gruppe mit dem Elektrodenpaar von höchstens einem der Sensoren paarweise verbunden.

Umfasst sein kann (a) das Aufbringen einer strukturierten, elektrisch leitfähigen, transparenten Beschichtung oder Aufbringen einer elektrisch leitfähigen strukturierten oder vollflächigen Beschichtung und nachträgliches Strukturieren (z.B. durch Laser) oder das Aufbringen einer Polymerfolie oder eines Glasträgers mit elektrisch leitfähigen Strukturen auf ein transparentes Substrat, vorzugsweise eine Glas- oder Glaskeramikplatte, mittels zumindest eines Verfahrens umfassend: Drucken, Rakeln, Tauchen, Sprühen, Roll-Coating, Rotationsbeschichtung, Schlitzbeschichtung / -gießen, Vorhanggießen, Fluten, physikalische oder chemische Gasphasenabscheidung, Kleben oder Laminieren oder Bonden.

Umfasst sein kann ferner (b) das Aufbringen einer opaken, leitfähigen, strukturierten Beschichtung, vorzugsweise nach einem Verfahrensschritt (a) und vorzugsweise außerhalb des Erfassungsbereiches des Sensorfeldes.

Umfasst sein kann ferner (c) das Aufbringen weiterer dekorativer Schichten (z.B. opak farbig, semitransparent farbig) und/oder Schutzschichten (z. B. Versiegelung, optische Ausgleichsbeschichtung, Barriereschicht) als Vollfläche oder Teilfläche, strukturiert oder ausgespart.

Die Abfolge der Schritte (a), (b) und (c) ist dabei nicht festgelegt. Das Aufbringen einer Beschichtung auf das Substrat mittels der beschriebenen Methoden kann jeweils einen Trocknungsschritt bzw. jeweils ein Härten der Beschichtung mittels UV-Bestrahlung oder IR-Strahlung oder thermischer Behandlung, vorzugsweise in einem Temperaturbereich von 100-500 °C, während einer Zeit von 30 Sekunden bis 3 Stunden beinhalten.

Die Erfindung betrifft schließlich ein Verfahren zur Herstellung einer Benutzerschnittstelle mit einer Sensorblende mit einem Sensorfeld, einem Anzeigebildschirm, einer Zuordnungseinheit und einer Steuereinheit.

Umfasst sind insbesondere Verfahrensschritte zur Herstellung eines Substrats mit einer zweidimensionalen Sensoranordnung.

Umfasst sein können ferner das Befestigen eines Anzeigebildschirms vorzugsweise auf einer Trägereinheit, das Anbringen der Trägereinheit an dem Bediensubstrat auf derjenigen Seite des Substrats, auf welcher die Erfassungszellen angeordnet sind (innere Substratoberfläche), wobei Kontaktelemente, welche vorzugsweise auf der Trägereinheit angebracht sind, die Kontaktflächen (Kontaktpunkte) der Sende- und Empfangselektroden mit den Kontaktflächen (Anschlusskontakten) auf der Trägereinheit verbinden.

Umfasst sein kann ferner das Anbringen einer Steuereinheit, die vorzugsweise als Mikrokontroller aufgebaut ist, insbesondere auf der Trägereinheit, die vorzugsweise als eine Platine ausgebildet ist.

Umfasst sein kann ferner das Einrichten einer Zuordnungseinheit, die als Hardware, beispielsweise als Mikrokontroller oder programmierbares Logikfeld (field programable gate array, FPGA) auf der Trägereinheit angebracht sein kann oder z.B. als zusätzliche Software-Subroutine, in der Steuereinheit ausgebildet sein kann.

Der Anzeigebildschirm kann durch bekannte Montageverfahren für elektronische Baugruppen adhäsiv mittels Kleben, Laminieren, Bonden, und/oder mechanisch mittels Anschrauben oder durch eine Steckverbindung an dem Träger angebracht werden.

Die Trägereinheit kann mittels einer Halteeinheit adhäsiv durch Kleben, Laminieren, Bonden und/oder mittels einer Halteeinheit mechanisch durch Einrasten oder Anschrauben an einen an das Bediensubstrat angebrachten Halterahmen und/oder mechanisch durch Andrücken an der inneren Substratoberfläche angebracht werden.

Ferner können Kontaktelemente angebracht werden.

Die Ausführung des Verfahrens in Schritten, für welche bekannte und bewährte Prozesse jeweils eingesetzt werden, ermöglicht eine problemlose und kosteneffiziente Herstellung der Sensorblende und einer Benutzerschnittstelle.

Die Erfindung wird nachfolgend unter Bezugnahme auf die beigefügten Zeichnungen näher erläutert. Gleiche oder ähnliche Elemente sind dabei mit denselben Bezugszeichen versehen. Die Merkmale verschiedener Ausführungsbeispiele können miteinander kombiniert werden.

Es zeigen:
Fig. 1: (a) vollständiger, planarer, bipartiter Graph, (b) vollständiger, bipartiter Graph, (c) und (d) unvollständige, planare, bipartite Graphen,
Fig. 2: ein Sensorfeld als 2:3 Matrixgruppe aus Erfassungszellen: (a) als Graph, (b) als Graph mit gesplitteten Knoten, (c) als Graph mit zusammengefassten Knoten einer ersten Knotenmenge, (d) als Schichtlayout von leitenden Flächen, (e) als abstrahierte Darstellung von (d),
Fig. 3: ein Sensorfeld als 8:6 Matrixanordnung aus acht 2:3-Matrixgruppen der Fig. 2: (a) als abstrahiertes Leiterschichtlayout, (b) als unvollständiger, planarer, bipartiter Graph,
Fig. 4: das Sensorfeld aus Fig. 3 mit Umverbindung genutzter Sensorelektroden/Knoten: (a) als abstrahiertes Leiterschichtlayout, (b) als unvollständiger, planarer, bipartiter Graph,
Fig. 5: das Sensorfeld aus Fig. 4 in 2:N-Verschaltung: (a) als abstrahiertes Leiterschichtlayout, (b) als vollständiger, planarer, bipartiter Graph, (c) als Minor des Graphen aus (b),
Fig. 6: ein Leiterschichtlayout eines 8:6-Sensorfelds aus Fig. 5 in 2:24-Verschaltung,
Fig. 7: ein Sensorfeld als 2:8 Matrixgruppe aus Erfassungszellen mit vierfach genutzten Knoten: (a) als Graphen, (b) als Graph mit gesplitteten Knoten, (c) als Schichtlayout von leitenden Flächen, (d) als abstrahierte Darstellung von (c),
Fig. 8: ein Sensorfeld als 12:8-Matrixanordnung von sechs 2:8-Matrixgruppen aus Fig. 7: (a) als abstrahiertes Leiterschichtlayout, (b) als unvollständiger, planarer, bipartiter Graph,
Fig. 9: das Sensorfeld aus Fig. 8 mit Umverbindung von unvollständig genutzten Sensorelektroden: (a) als abstrahiertes Leiterschichtlayout, (b) als unvollständiger, planarer, bipartiter Graph, (c)-(g) die linke randständige Spalte aus (b) mit verschiedenen Varianten der Umverbindung,
Fig. 10: eine Bedienblende bestehend aus Sensorblende, Anzeigebildschirm und Trägereinheit in seitlicher Schnittdarstellung,
Fig. 11: eine Benutzerschnittstelle in einer seitlichen Schnittdarstellung,
Fig. 12: ein Kochfeld mit Benutzerschnittstelle: (a) mit einem Display und einer Einschalt-Piktogrammanzeige, (b) mit einem Display, Segmentanzeigen zur Leistungsanzeige der Kochzonen und einer Einschalt-Piktogrammanzeige, (c) mit einem Display, Slider-Segmentanzeigen zur Leistungsanzeige der Kochzonen und einer Einschalt-Piktogrammanzeige,
Fig. 13: (a) Sechs Erfassungszellen in einer 2:3 Anordnung, (b) Darstellung als planarer, bipartiter Graph,
Fig. 14: (a) sechs Erfassungszellen in einer 2:3 Anordnung mit einer 2:3 Spalten-/Reihen-Verschaltung, (b) Darstellung als bipartiter Graph, (c) Vollständiger, planarer, bipartiter Graph,
Fig. 15: ein Sensorfeld in einer 2:3 Matrixanordnung aus Erfassungszellen: (a) als Layout von Sensorelektroden als leitenden Flächen, (b) als Graph, (c) als Layout von leitenden Flächen mit Sensorelektroden, Verbindungen und Kontaktflächen, (d) als Graph,
Fig. 16: eine Matrixanordnung K:L=4:6 aus Erfassungszellen: (a) als Einzelgraphen dargestellt, (b) mit Zweifachzuordnung von Knoten (Sensorelektroden) als Graph dargestellt.
Fig. 17: das Sensorfeld aus Fig. 6 mit verschiedenen Verschaltungen (a)-(c) der Elektroden zu unterschiedlichen Bussignalen.
Fig. 18: eine mit einer Steuereinheit verbundene Sensorelektrode.

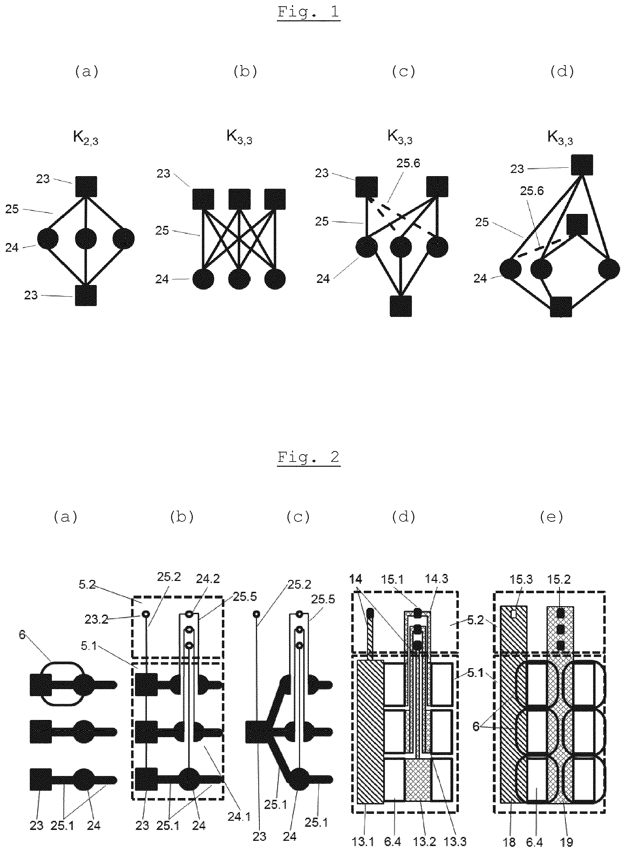

Die Fig. 1 führt zunächst einige Begriffe aus der Graphentheorie ein. Fig. 1a zeigt einen vollständigen, bipartiten, planaren Graphen K_{2,3}. Planar bedeutet, dass der Graph in einer Ebene ohne Kreuzungen von Kanten, d.h. kreuzungsfrei darstellbar ist. Bipartit heißt, dass der Graph aus zwei Knotenmengen aufgebaut ist, deren Knoten jeweils mit Knoten der anderen Knotenmenge über Kanten 25 verbunden sind. Die Knoten in einer Knotenmenge sind allerdings nicht untereinander verbunden. Der in Fig. 1a gezeigte Graph hat eine erste Knotenmenge mit Mächtigkeit 2 (eckige gezeichnete Knoten 23) und eine zweite Knotenmenge mit Mächtigkeit 3 (rund gezeichnete Knoten 24). Ein Graph wird als vollständig bezeichnet, wenn alle Knoten 23 einer ersten Knotenmenge mit allen Knoten 24 einer zweiten Knotenmenge über Kanten 25 verbunden sind.

Fig. 1b zeigt einen Graphen K_{3,3}, d.h. beide Knotenmengen habe eine Mächtigkeit von 3. Der Graph ist vollständig, bipartit aber nicht-planar. Vollständige, bipartite Graphen K_{3,N}, mit N>2, sind nicht mehr planar, also nicht mehr kreuzungsfrei darstellbar.

Bezugnehmend auf Fig. 1c, 1d lassen sich bipartite Graphen K_{M,N}, mit M, N > 2, jedoch mitunter planar darstellen, wenn sie nicht mehr vollständig sind, das heißt, wenn genügend Kanten 25.6 entfernt werden, dass keine Kreuzungen zwischen den verschiedenen verbleibenden Kanten mehr vorhanden sind.

Die Kanten 25 und 25.6 sind Teil des vollständigen Graphen K_{3,3}. Durch Weglassen der beispielhaft mit 25.6 markierten Kanten wird der Graph planar (kreuzungsfrei). Ohne die Kanten 25.6 handelt es sich hier um zwei unvollständige, bipartite, aber planare Graphen 0K_{3,3}. Ist die Anzahl der Kanten an jedem Knoten gleich, spricht man auch von regulären Graphen, im anderen Fall von nicht-regulären Graphen.

Eine weitere Größe, die im Folgenden verwendet wird, ist der Zuordnungsgrad. Der Zuordnungsgrad eines bipartiten Graphen gibt an, wie viele (über Kanten 25 verbundene) Nachbarknoten die Knoten 23 der ersten Knotenmenge aufweisen und wie viele (über Kanten 25 verbundene) Nachbarknoten die Knoten 24 der zweiten Knotenmenge aufweisen. Ein vollständiger K_{M,N}-Graph, d.h. mit M Knoten in der ersten Knotenmenge und N Knoten in der zweiten Knotenmenge, zeichnet sich dadurch aus, dass die M Knoten der ersten Knotenmenge jeweils N Nachbarn aufweisen und die N Knoten der zweiten Knotenmenge jeweils M Nachbarn aufweisen. Der Zuordnungsgrad beträgt demnach M_{N}:N_{M}. Der Zuordnungsgrad des in Fig. 1a gezeigten Graphen beträgt demnach 2₃:3₂, der des in Fig. 1b gezeigten Graphen 3₃:3₃. Die unvollständigen Graphen der Fig. 1c und 1d weisen einen Zuordnungsgrad auf, der mit 3_{<3}:3_{<3} bezeichnet wird.

Bipartite, planare K_{M,N}-Graphen mit M Knoten einer ersten Knotenmenge und N Knoten einer zweiten Knotenmenge werden im Folgenden zur Beschreibung von einlagigen Sensorfeldern mit verschalteten Sensor-Elektroden und Kontaktpunkten verwendet. Dabei entsprechen die Knoten 23 der ersten Knotenmenge den ersten Elektroden der Sensoren, die Knoten 24 der zweiten Knotenmenge den zweiten Elektroden der Sensoren (jeweils mit den zugehörigen Kontaktpunkten) und die Kanten 25 den Elektrodenzwischenräumen, d.h. den Sensor-Spalten, zwischen ersten und zweiten Elektroden eines Sensors. Die ersten und zweiten Elektroden der Sensoren bilden demnach eine erste bzw. zweite Sensorelektrodenmenge. Bei den Graphen der Fig. 1 entsprechen die Knoten 23 der ersten Knotenmenge den Sensorelektroden SE_{M} einer ersten Sensorelektrodenmenge und die Knoten 24 der zweiten Knotenmenge entsprechen den Sensorelektroden SE_{N} einer zweiten Sensorelektrodenmenge. Die Sensoren werden auch als Erfassungszellen bezeichnet, die Kontaktpunkte auch als Kontaktflächen.

Bei einer physischen Anordnung von Sensoren in einer K:L-Matrix und einer Verschaltung der Elektroden der Sensoren in eine M:N-Matrix wird typischerweise eine Mehrfachzuordnung der Kontaktpunkte zu den Elektroden der Sensoren vorgenommen. Das bedeutet, es wird eine Verschaltung der Sensorelektroden vorgenommen, wodurch die Zuordnungszahl der Sensorelektroden erhöht wird, ohne die Eindeutigkeit der Matrixpunkte zu verlieren. Jeder Erfassungszelle EZ_{KL} ist demnach genau ein eindeutiges Sensorelektrodenpaar zugeordnet, mit einer Sensorelektrode aus der ersten Sensorelektrodenmenge und einer Sensorelektrode aus der zweiten Sensorelektrodenmenge.

Der Verbindung von Elektroden steht es gleich, wenn eine und dieselbe (großflächig auf dem Substrat aufgebrachte) Elektrode für mehrere Erfassungszellen genutzt wird. D.h. es wird eine Mehrfachzuordnung der (ersten und/oder zweiten) Sensorelektroden (SE_{M} und/oder SE_{N}) zu einzelnen Erfassungszellen (EZ_{KL}) vorgenommen, so dass eine Zuordnungszahl m oder n einer Sensorelektrode (SE_{M} oder SE_{N}) größer als eins wird, indem diese jeweils über Sensorspalte mehrfach Sensorelektroden der jeweils anderen Sensorelektrodenmenge zugeordnet ist.

Dadurch werden die Komplexität, die Fehleranfälligkeit und die Kosten der Anordnung und des Gesamtsystems verringert, denn es wird die Anzahl der elektrischen Verbindungen reduziert, es wird deren Länge verkürzt und es wird die Anzahl der Kontaktflächen des Sensorfeldes und der Anschlussstellen an die Steuereinheit reduziert.

Dies lässt sich quantitativ insbesondere durch das Anschlussverhältnis AV beschreiben. Das Anschlussverhältnis (AV) ist das Verhältnis der Anzahl der Erfassungszellen (EZ) zur Hälfte der Anzahl der Kontaktflächen (KF). Es gilt somit allgemein AV=2*EZ/KF und für eine Anordnung von K*L Erfassungszellen und M+N Kontaktpunkten AV=2*K*L/(M+N).

Der Zuordnungsgrad einer M:N-Verschaltung lässt sich mit den Zuordnungszahlen m und n der Sensorelektroden SE_{M} und SE_{N} beschreiben und wird als Mₘ:Nₙ bezeichnet.

Vorzugsweise ist jede verschaltete Sensorelektrode und jede unverschaltete Sensorelektrode jeweils mit genau einer Kontaktfläche (KF) verschaltet. Eine Mehrfachzuordnung der Sensorelektroden kann in einem Sensorfeld für alle Sensorelektroden der jeweiligen Sensorelektrodenmengen SE_{M} und SE_{N} mit Zuordnungszahlen m und n gleich sein. Es sind dann alle Sensorelektroden einer ersten Elektrodenmenge SE_{M} in beschriebener Weise m-fach, alle Sensorelektroden einer zweiten Elektrodenmenge SE_{N} in beschriebener Weise n-fach zu Sensorelektroden der jeweils anderen Sensorelektrodenmenge zugeordnet. Eine der beiden Sensorelektrodenmengen kann als Sendeelektroden, die andere Sensorelektrodenmenge als Empfangselektroden genutzt werden.

Optional können Sensorelektroden einer der zwei Sensorelektrodenmengen auch zusätzlich als selbst-kapazitive Berührsensoren (self capacitance) ausgewertet werden bzw. eine selbst-kapazitive Erfassungszelle bilden. Hierbei bildet eine einzelne Sensorelektrode eine offene Kondensatorfläche, zu der bei Berührung eines Benutzers dessen Finger oder Berührutensil eine zweite Kondensatorfläche bildet. Durch die dadurch hervorgerufene Änderung der Kapazität in der Verschaltung der Sensorelektrode und deren Erdung über den Benutzer wird ein Strom- oder Spannungssignal als Berührsignal auswertbar.

Es kann vorgesehen sein, dass zumindest eine Elektrode eines Sensors mit einer Abschirmelektrode versehen ist. Beispielsweise können die Elektroden eines selbst-kapazitiven Berührsensors von einer weiteren Menge Elektroden umgeben sein, die als Abschirm- und/oder Schirmelektroden ausgelegt sind. Abschirmelektroden werden insbesondere auf einem festen Potential betrieben, vorzugsweise einem Erdungspotential, um elektromagnetische Störungen abzuschirmen. Schirmelektroden werden vorzugsweise mit dem gleichen Sensorwechselpotential betrieben, welches ein harmonisches oder gepulstes Wechselsignal oder eine Folge von Signalpulsen darstellt. Zwischen der selbst-kapazitiven Sensorelektrode und der Schirmelektrode bildet sich vorzugsweise keine Potentialdifferenz aus, so dass sich keine parasitären kapazitiven Impedanzen ausbilden, wodurch das Signal-Rausch-Verhältnis eines Berührungssignals auf dem Einzelelektrodensensor eines Benutzers verbessert wird.

Zumindest eine Sensorelektrode, bevorzugt jede der Sensorelektroden, kann vorzugsweise mit mindestens einem von z.B. vier Signalbussen alternierend und zeitlich intermittierend verbunden sein: einem Sendebus Tx, einem Empfangsbus Rx, einem Signalbus Z zur Auswertung von Eigenimpedanzen und einem Bus P mit festem Potential, vorzugsweise einem Erdpotential. Die Signalbusse können physisch als vier separate Signalbusleitungen ausgeführt sein oder als weniger als vier physisch separate Leitungen, wobei einzelne Signalbusleitungen von der Steuerung intermittierend mit verschiedenen Bussignalen angesteuert werden können.

Es können dann zeitlich intermittierend einzelne Sensorelektroden an einem Sensor mit den Sensorbussignalen Tx, Rx oder Z verbunden sein, während zu dem Abfragezeitpunkt dieses einen Sensors andere umliegende Elektroden mit Bussignalen Tx oder P zur Schirmung oder Abschirmung verbunden sein können. Weiterhin können Gruppen von Sensorelektroden für eine Nahfeld oder Fernfelderkennung zusammengeschaltet werden. Die funktionalen Elektroden sind somit in einer planaren und damit kreuzungsfreien Schichtstruktur darstellbar.

Wird ein Sensorfeld alternierend mit selbst-kapazitiven (self capacitance) Erfassungszellen und mit projiziert-kapazitiven (PCAP) Erfassungszellen betrieben, lassen sich Störsignale, die beispielsweise durch Flüssigkeit verursacht werden, besser diskriminieren, da die beiden Sensorarten das Signalverhältnis zwischen Bedienung und Flüssigkeit unterschiedlich darstellen; auch dies kann bei einer Anwendung auf einer horizontalen Bedienfläche, wie in einem Kochgerät von Bedeutung sein.

Bezugnehmend auf Fig. 1a ist der entsprechende Zuordnungsgrad dieses Graphen 2₃:3₂. Die Zuordnung der entsprechenden Sensorelektroden ist für 2₃:3₂ vollständig, das heißt an alle Knoten jeweils einer Knotenmenge knüpfen die gleiche Anzahl von Kanten an. Dies wird auch als m,n-regulärer Graph K_{M,N} bezeichnet. Ist die Zuordnungszahl im Sensorfeld nicht für jede Sensorelektrode einer der Sensorelektrodenmengen gleich, beispielhaft weisen Randelektroden kleinere Zuordnungszahlen auf, so wird dies im Folgenden als Verschaltung mit Zuordnungsgrad M_{<m}:N_{<n} bezeichnet, bei der m und n die höchsten Zuordnungszahlen bezeichnen, die im Sensorfeld für die Mehrzahl der Sensorelektroden vorkommen, beispielsweise im zentralen Bereich des Erfassungsbereiches, in dem Sensorelektroden in symmetrischer Anordnung vorliegen, im Gegensatz zum Randbereich des Erfassungsbereiches, in dem Randelektroden nicht symmetrisch zugeordnet oder verschaltet sind. Dies entspricht einem nicht-regulären K_{M,N}-Graphen. Ist eine Mₘ:Nₙ-Verschaltung vollständig, das heißt alle möglichen Kanten sind vorhanden, so entspricht dies einem vollständigen, bipartiten K_{M,N}-Graphen, der automatisch auch in den beiden Knotenmengen n- und m-regulär ist, und es gilt Mₘ:Nₙ mit m=N und n=M.

Wie bereits im Teil Hintergrund der Erfindung beschrieben, zeichnet sich die einfachste Anordnung dadurch aus, dass für jede Erfassungszelle EZ elektrische Verbindungen der zwei Sensorelektroden einzeln aus dem Erfassungsbereich herausgeführt und mit einer Steuereinheit verbunden werden. Dies kommt typischerweise nur in Anordnungen mit wenigen Erfassungszellen vor. Eine solche Anordnung entspricht dem Typ 1 in der untenstehenden Tabelle 1. Typ 1 hat ein Anschlussverhältnis von AV_{TYP1}=1.

Der Typ 1 (nicht verschaltete Einzel-Erfassungszellen) weist einen Zuordnungsgrad M₁:N₁ auf. Es wird jede der jeweils zwei Sensorelektroden einer Erfassungszelle zu einer separaten Kontaktfläche verbunden. Diese Anordnung ist zwar einlagig und kreuzungsfrei darstellbar, hat aber den Nachteil, dass sie durch das unvorteilhafte Anschlussverhältnis AV=1 bei größerer Anzahl von Erfassungszellen eine hohe Anzahl von Zuleitungen im Erfassungsbereich und Kontaktflächen im Kontaktbereich des Sensorfeldes zur Folge hat.

Möglich ist es auch, sämtliche erste Elektroden der Sensoren miteinander zu verschalten und einzelne, unverschaltete zweite Elektroden zu nutzen. Mit anderen Worten entspricht dann die erste Sensorelektrodenmenge einer einzelnen Sensorelektrode und es werden die Elektroden einer zweiten Sensorelektrodenmenge jeweils der ersten Sensorelektrode über Sensorspalte zugeordnet. Dies entspricht einer 1:N-Verschaltung und dem Typ 2 in der untenstehenden Tabelle 1. Bei Typ 2 reduziert sich die Anzahl der Kontaktflächen gegenüber Typ 1. Typ 2 hat ein Anschlussverhältnis von AV_{TYP2}=2.

Wie ebenfalls bereits im Teil Hintergrund der Erfindung beschrieben, können bei einem mehrlagigen Sensorfeld Reihen- und Spaltenelektroden als Streifenelektroden ausgebildet und in zwei Leiterschichten übereinander angeordnet und durch eine Isolationsschicht aus einem dielektrischen Material oder durch eine Beabstandung voneinander galvanisch isoliert sein. Diese M:N-Gesamtverschaltung entspricht in der untenstehenden Tabelle 1 dem Typ 3. Typ 3 hat ein Anschlussverhältnis von AV_{TYP3}=2*K*L/(K+L).

Dies ist eine erhebliche Verbesserung gegenüber der trivialen Anordnung aus unverschalteten Erfassungszellen (Typ 1). Beispielsweise ergibt sich, wie in der Tabelle 1 aufgeführt ist, bei einer 12:8 Matrixanordnung von Erfassungszellen mit einer Verschaltung zu 12 Spaltenelektroden und 8 Reihenelektroden die Anzahl der Kontaktflächen (KF) 15.1, insbesondere die Kontaktflächen auf den Leiterschichten, oder die entsprechenden Anschlussstellen an die Steuereinheit, zu KF_{TYP3;12:8}=20 und das Anschlussverhältnis beträgt in diesem Beispiel AV_{TYP3;12:8}=9³_{/5}. Es wird umso größer je größer die Anzahl der Spalten und Reihen wird. Der Zuordnungsgrad der Verschaltung beträgt M_{L}:N_{K}= K_{L}:L_{K}.

Die Fig. 2 bis 6 betreffen einlagige Sensoranordnungen mit 2:N-Verschaltung von Elektroden und Kontaktpunkten.

In Fig. 2 werden auf Graphentheorie basierende Darstellungen (a-c) mit der Leiterschichtstruktur (d) und einer abstrahierten Darstellung der Leiterschichtstruktur (e) verglichen.

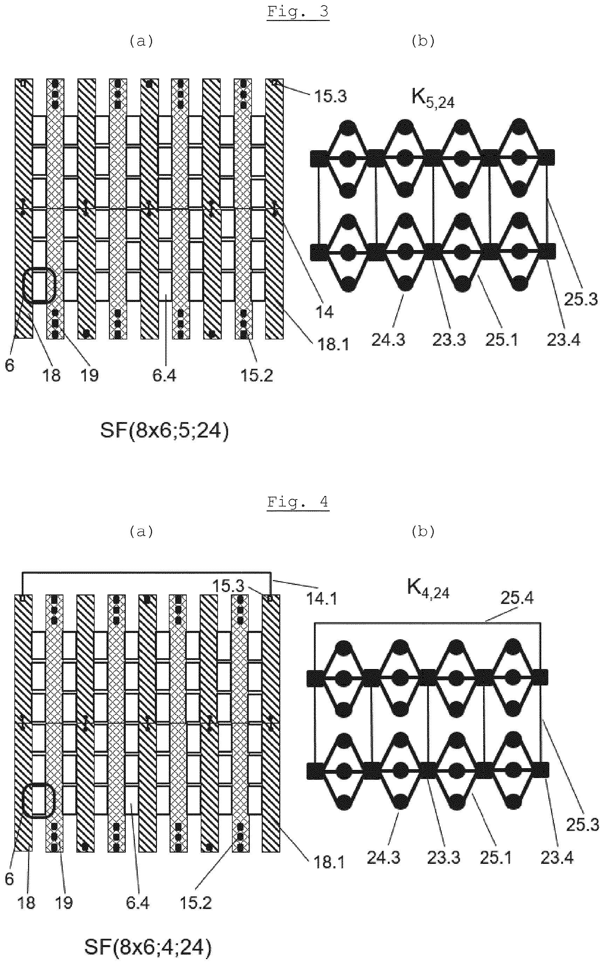

Das Ausführungsbeispiel der gesamten K:L-Anordnung stellt eine 8:6-Matrix dar (Fig. 3), die in Fig. 2 gezeigte Basiszelle ist eine 2:3 Anordnungsgruppe. Die Anordnungsgruppe umfasst zwei Spalten von je drei Sensoren, welche auch als Erfassungszellen 6 bezeichnet werden.

Die Erfassungszellen 6 setzen sich in Fig. 2a wie folgt zusammen: In der ersten, linken Spalte aus jeweils einem Knoten 23, einem Sensorspalt 25.1 und einem Knoten 24 (von links nach rechts aufgezählt). In der rechten Spalte besteht eine Erfassungszelle 6, von links nach rechts aufgezählt, aus einem Knoten 24, einem Sensorspalt 25.1 und einem nicht dargestellten Knoten 23, welcher erst bei der Aneinanderreihung der Basisgruppen ergänzt wird.

In Fig. 2b werden die drei Knoten 23, welche im Erfassungsbereich 5.1 angeordnet sind, über Kanten 25.2, welche Leiterverbindern entsprechen, verbunden und die Verbindung aus dem Erfassungsbereich 5.1 herausgeführt in den Kontaktbereich 5.2, in welchem ein Knoten 23.2 als Anschlusspunkt angeordnet ist. Die nunmehr miteinander verbundenen Knoten 23 entsprechen graphentheoretisch einem einzelnen Knoten.

Ferner werden Anschlusspunkte 24.2 für jeden Knoten 24 einzeln in den Kontaktbereich 5.2 mittels Kanten 25.5, welche wiederum Leiterverbindern entsprechen, herausgeführt. Damit die Kanten 25.5 sich nicht mit den Kanten 25.1, welche den Sensorspalten entsprechen, kreuzen, d.h. durch die Elektrodenzwischenräume hindurchgeführt werden, werden die Knoten 24 in zwei Hälften 24.1 gesplittet, so dass die Kanten 25.5 durch den Knotensplit geführt werden können. Die gesplitteten Knoten werden durch die Leiterverbindungen 25.5 als paarweise Umverbindung über den Kontaktbereich 5.2 wieder untereinander und mit den Knoten 24.2 als Anschlusspunkte (Kontaktpunkte) verbunden.

Fig. 2c zeigt, dass in der Graphendarstellung die einzelnen Knoten zu einem Knoten 23 zusammengeführt sind.

Fig. 2d stellt die Ausführung des Graphen in Fig. 2c als Leiterschichtstruktur dar. Hierbei entspricht der Knoten 23 der Sensorelektrodenfläche 13.1 (welcher einer ersten Sensorelektrodenmenge angehört), die Kanten 25.1 entsprechen den Sensorspalten 6.4, der Knoten 24 entspricht der Sensorelektrodenfläche 13.2 (welcher einer zweiten Sensorelektrodenmenge angehört), die gesplitteten Knoten entsprechen den Sensorelektrodenflächen 13.3, die Kanten 25.2 entsprechen den leitenden Flächen 14 als Leiterverbindung, die Kanten 25.5 den leitenden Flächen 14.3 als Leiterumverbindung gesplitteter Sensorelektroden und die Knoten 23.2 und 24.2 den Kontaktflächen 15.1 (Kontaktpunkten).

Die Sensorspalte 6.4 sind nur abstrahiert dargestellt. Sie sind als nicht-leitender Spalt ausgeführt, der gerade, gebogen oder auch mäanderförmig verlaufen kann.

Fig. 2e zeigt eine abstrahierte Darstellung der Schichtstruktur. Hierbei sind die Flächen 13.1, 14 und 15.1 zu einer Gruppe 18 von verschalteten ersten Sensorelektroden mit Kontaktfläche zusammengefasst.

Die Kontaktfläche 15.3 ist in diesem Fall eine Kontaktfläche von unvollständig mehrfach zugeordneten Sensorelektroden. Denn die Knoten 23 sind randseitige Knoten, die nur jeweils einer Kante 25.1 als Sensorspalt zugeordnet sind (vgl. Fig. 2a), im Gegensatz zu den Knoten 24, denen jeweils zwei Kanten 25.1 als Sensorspalt zugeordnet sind. Entsprechend sind die Flächen 13.2, 13.3, 14.3 und 15.1 in eine Gruppe 19 von verschalteten zweiten Sensorelektroden mit Kontaktfläche zusammengefasst. Die Kontaktflächen 15.2 sind in dem Fall die drei Kontaktflächen der vollständig mehrfach zugeordneten zweiten Sensorelektroden (Knoten 24). Über jedem Sensorspalt 6.4 ist eine Erfassungszelle 6 lokalisiert, die im Erfassungsbereich 5.1 liegt, während die Kontaktflächen 15.2 und 15.3 in dem Kontaktbereich des Sensorfeldes liegen.

Fig. 3 zeigt die aus den Basisgruppen der Fig. 2 zusammengesetzte 8:6-Matrix aus Erfassungszellen 6 in einer einlagigen 2:N Verschaltung.

Vier Basisgruppen der Fig. 2 sind aneinandergereiht und mit einer randseitigen Sensorelektrodengruppe 18.1 als Symmetrieergänzung abgeschlossen. Diese stellen die obere Hälfte des Sensorfeldes dar (Fig. 3a). Die untere Hälfte des Sensorfeldes erhält man durch Spiegelung der oberen Hälfte an der horizontalen Symmetrieachse des Gesamtfeldes.

Fig. 3b zeigt die entsprechende Graphendarstellung, wobei die Kontaktknoten 23.3 und 24.3 hier nicht als herausgeführt gezeigt werden.

Die jeweils obere und untere Hälfte der ersten Sensorgruppen 18 (welche in Fig. 2 der linken Spalte entsprechen) sind jeweils leitend durch Verbindungen 25.3 bzw. 14 zu einer Sensorgruppe 18 verbunden. Die randseitigen Sensorgruppen 18 weisen nach wie vor Kontaktflächen 15.3 von unvollständig zugeordneten Sensorflächen auf.

In Fig. 4a, welche eine abstrahierte Schichtstruktur zeigt, sind die beiden Randelektroden 18 verschaltet. In Fig. 4b sieht man anhand der Graphendarstellung, dass jeder zweite Knoten 24.3, der einer zweiten Sensorelektrode entspricht, zweifach einem ersten Knoten 23.4 bzw. 23.3 zugeordnet ist. Weiterhin ist jeweils eine der vier verschalteten Knotengruppen bestehend aus Knoten 23.3 bzw. 23.4 zwölf zweiten Knoten 24.3 zugeordnet und damit zwölf Kanten 25.1, die jeweils einem Sensorspalt entsprechen.

Diese Verschaltung zeichnet sich in vorteilhafter Weise durch eine sehr geringe Anzahl an Kontaktpunkten (Kontaktflächen) aus.

Die Eigenschaften dieser Verschaltung sind in der untenstehenden Tabelle 1 unter Typ 5 aufgeführt. Typ 5 weist in den in der Tabelle berechneten Ausführungsbeispielen "4:4" bis "12:8" eine niedrigere Anzahl von Kontaktflächen "KF" auf als der Typ 4. Dies kann auch so ausgedrückt werden, dass das Anschlussverhältnis von Typ 5 größer ist, als das Anschlussverhältnis von Typ4: Das Anschlussverhältnis von Typ 5 beträgt AV_{TYP5}=4*K*L/(K+K*L) > AV_{TYP4}=4*K*L/(2*K+K*L+2*L).

Der Typ 4 in der untenstehenden Tabelle 1 ist dabei z.B. so zu verstehen, dass die ersten Sensorelektroden SE_{M} in K Spalten verschaltet werden und die zweiten, für die Randelektroden unvollständig, zweifach zugeordneten Sensorelektroden SE_{N} bleiben unverschaltet; d.h. es liegt eine M_{L}:N_{<2}-Verschaltung vor. Das Anschlussverhältnis ist dann AV_{TYP4}=4*K*L/(2*K+K*L+2*L).

Der Typ 4 lässt sich demnach zum Typ 5 verbessern, indem die beiden äußeren zweiten Randelektroden verbunden werden (Umverbindungen) und verbundene Randelektroden jetzt auch zweifach zugeordnet sind und indem zusätzlich die ersten Sensorelektroden in doppelter Weise zugeordnet werden.

Fig. 5 zeigt einen weiteren vorteilhaften Verschaltungsschritt: Es werden die physischen fünf Spaltenelektroden 18, welche bereits durch die Verbindung der Randelektroden zu vier Spaltenelektroden 18 verschaltet sind, nun zu zwei Spaltenelektroden 18 verschaltet. Insgesamt ergibt sich dadurch eine 2:N-Verschaltung des Sensorfeldes.

Diese Verschaltung wird erreicht durch die Leiterverbindungen 14.2 (Fig. 5a, abstrahierte Schichtdarstellung) bzw. die entsprechenden Umverbindungen 25.3 (Fig. 5b, Graphendarstellung).

Bezugnehmend auf Fig. 5b besteht der Graph K_{2,24}* nur noch aus zwei verschalteten Knoten einer ersten Knotenmenge 23.3 und vierundzwanzig Knoten einer zweiten Knotenmenge 24.3.

Die ersten verschalteten Knoten sind jetzt vierundzwanzig Knoten der zweiten Knotenmenge zugeordnet und mit diesen über jeweils vierundzwanzig Kanten 25.1 verbunden, die jeweils einem Sensorspalt entsprechen. Dies sind für beide erste Knoten achtundvierzig Kanten 25.1 entsprechend achtundvierzig Erfassungszellen 6.

Wie in Fig. 5c gezeigt, lassen sich in der Graphendarstellung die kreuzungsfrei verschalteten Knoten 23.3 (Fig. 5b) zu insgesamt 2 Knoten 23.3 (Fig. 5c) zusammenführen, was zu dem Graph K_{2,24}, als Minor zu K_{2,24}* führt. Die in Fig.5a gezeigte Schichtstruktur entspricht also einem bipartiten, planaren, vollständigem Graphen K_{2,24}. Die Schichtstruktur ist einlagig kreuzungsfrei ausgeführt, in dem sich erfindungsgemäß weder Leiterschichten kreuzen noch Leiterverbinder durch Sensorspalte geführt werden.

Die Eigenschaften dieser Verschaltung sind in der untenstehenden Tabelle 1 als Typ 6 aufgeführt. Die Anzahl der Kontaktflächen KF ist gegenüber dem Typ 5 nochmals verringert und damit einhergehend das Anschlussverhältnis verbessert zu AV_{TYP6}=4*K*L/(4+K*L) > AV_{TYP5}=4*K*L/(K+K*L) > AV_{TYP4}=4*K*L/(2*K+K*L+2*L), wobei AV_{TYP6} > AV_{TYP5} für K>4 gilt.

Typ 6 ergibt sich demnach, wenn bei Typ 5 die K Spaltenelektroden zu insgesamt zwei Spaltenelektroden verschaltet werden. Es liegt demnach eine einlagige M:N-Verschaltung mit M:N=2:N vor. Im Grenzwert für große L und K gilt für Typ 6 wiederum AV→4.

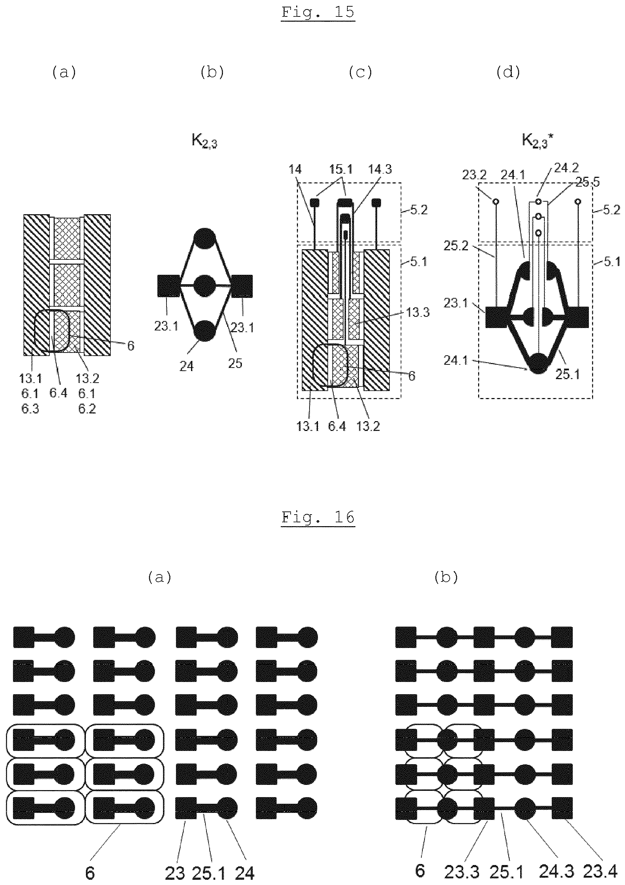

Strukturell, also hinsichtlich Aufbau und Komplexität der Strukturen, ist die vollständige 2:N-Verschaltung und eine Doppelzuordnung der zweiten Sensorelektroden SE_{N} (entspricht vollständigem K_{2,N}-Graphen) von K*L Erfassungszellen erheblich weniger komplex als eine unverschaltete Anordnung (Typ 1 in der Tabelle 1, vgl. Fig. 16a für eine 4:6-Anordnung). In der 2:N-Verschaltung werden K erste Sensorelektroden SE_{M} zu zwei Sensorelektroden verschaltet und die zweiten Sensorelektroden SE_{N} den beiden verschalteten ersten Sensorelektroden SE_{M} doppelt zugeordnet (Typ 6 in der Tabelle 1, vgl. Fig. 5c für eine 8:6-Anordnung). Der Zuordnungsgrad beträgt dann 2_{N}:N₂. Die Zahl der Kontaktflächen und Verbindungsleiter zwischen Kontaktflächen und den zugehörigen Sensorelektroden nicht verschalteter Sensorelektroden ist mit KF_{TYP1}=2*K*L mehr als doppelt so hoch als die Zahl KF_{TYP6}=2+N bei einer vollständigen 2:N-Verschaltung. Das Anschlussverhältnis AV von Erfassungszellen zu verschalteten Elektrodenpaaren beträgt bei Typ 1 AV_{TYP1}=1. Bei einer 2:N-Verschaltung gilt für das Anschlussverhältnis im Grenzfall für eine große Anzahl von Spalten K und Reihen L: AV_{TYP6}→4, d.h. gleich vier Erfassungszellen pro Anschlusspaar. Auch im Vergleich zum Typ 4 ergeben sich in vorteilhafter Weise für die beispielhaften Anordnungen "4:4", "8:4", "8:6" und "12:8" (vgl. untenstehende Tabelle 1) geringere Anzahlen von Kontaktflächen KF und höhere Anschlussverhältnisse AV. Folglich sind die elektrischen Eigenschaften, beispielsweise hinsichtlich i) Entkopplung der Signale unterschiedlicher Elektrodenpaare und deren Zuleitungen, ii) Störsicherheit, und iii) Signal/Rausch-Verhältnis, erheblich besser. Zudem sind die Kosten der 2:N-Verschaltung geringer, da auf Basis der einfacheren Struktur der Aufwand für Entwurf, Wartung und Material reduziert werden kann. Auch ein Kostenvergleich zu einer zweilagigen K:L-Verschaltung fällt für eine 2:N-Verschaltung günstiger aus. Die vollständige 2:N-Verschaltung weist zwar z.B. für K:L=8:6 mit KF_{TYP6}=2+N=2+K*L/2=26 etwa doppelt so viele Kontaktflächen wie KF_{TYP3}=K+L=14 und damit Verbindungen zwischen Sensorfeld und Trägereinheit auf, wird aber durch den einlagigen, kreuzungsfreien Aufbau der Leiterschicht kostengünstiger. Ursächlich hierfür ist, dass nur ein Beschichtungsschritt für das Sensorfeld inkl. Verschaltung erforderlich ist.

Fig. 6 zeigt ein Ausführungsbeispiel eines Sensorfeldes mit Sensoren 6 und Kontaktpunkten 15.2. Es handelt sich um eine Schichtstruktur des Typs 6 (2:N-Verschaltung) für eine Matrix von K:L=8:6 Erfassungszellen.

Die leitenden Schichten, die die Sensorelektrodenflächen 13.1 einer ersten Sensorelektrodenmenge und die Sensorelektrodenflächen 13.2 einer zweiten Sensorelektrodenmenge bilden, liegen im Erfassungsbereich 5.1 des Sensorfeldes 5.

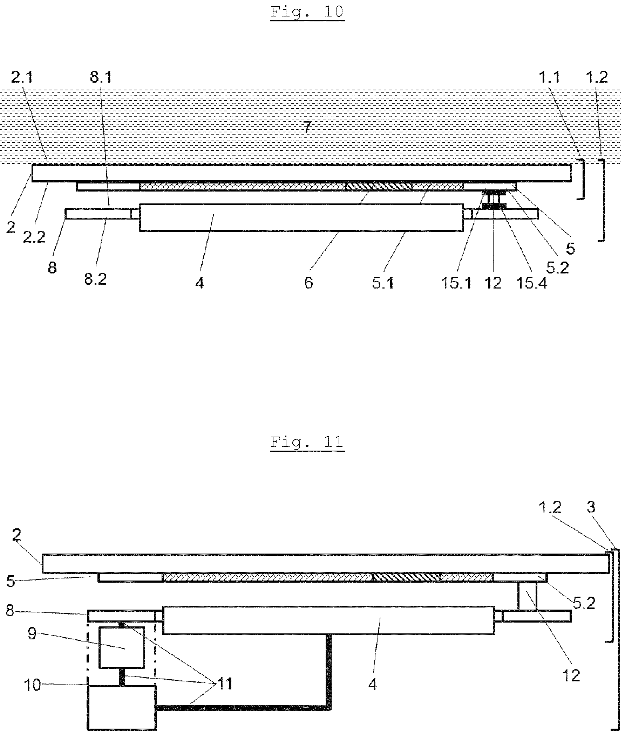

Die leitenden Schichten im Erfassungsbereich 5.1 sind bevorzugt transparent ausgebildet, so das ein darunter angeordneter Anzeigebildschirm 4 (siehe Fig. 10) von diesen leitenden Flächen in seiner Anzeigefunktion nicht merklich beeinträchtigt wird.

Die Schichten 13.1 und 13.2 sind durch elektrisch nicht-leitfähige Flächen 16 und 17 voneinander galvanisch isoliert.

Die Schichten 13.1 und 13.2 können mit einem Aufbringverfahren, beispielhaft einem Siebdruck, in der beschriebenen Form aufgebracht werden. Auch können die Schichten 13.1 und 13.2 zunächst als eine leitende Fläche in einem Aufbringverfahren als eine durchgehend leitfähige Fläche aufgebracht und in einem nachfolgendem Schritt, beispielsweise durch Laser-Ablation in die gewünschten Strukturen 13.1 und 13.2 aufgetrennt werden.

Die Sensorelektrodenflächen 13.1 und 13.2 greifen im Bereich der Erfassungszellen kammartig ineinander und sind dort durch den Sensorspalt 17 (Elektrodenzwischenraum) voneinander getrennt. Die kammartige Struktur ist beispielhaft zu verstehen. Sie kann auch beispielhaft als gerade oder gebogene Linie oder in gebogenen Mäanderformen ausgeführt sein.

Die Breite der elektrisch nicht-leitenden Flächen, d.h. der Sensorspalte 17 kann insbesondere 5 µm bis 8 mm betragen, bei einem strukturierten Auftragsverfahren (z.B. Siebdruck) besonders bevorzugt 0,2 mm - 8,0 mm; bei einem nachgeschalteten Strukturierungsverfahren (z.B. Laserablation) auch weniger als 2000 µm, vorzugsweise weniger als 500 µm, besonders bevorzugt weniger als 100 µm, und noch bevorzugter weniger als 20 µm.

Innerhalb des Sensorspalts können weitere galvanisch entkoppelte beschichtete Bereiche (Blindflächen) liegen, die aus demselben transparenten elektrisch leitfähigen Beschichtungsmaterial wie die Sensorelektroden bzw. die Verbindungsleiter beschaffen sind und lediglich einem homogenen optischen Eindruck der Gesamtheit der transparent leitfähigen Flächen dienen. Mit anderen Worten können die Auftrennungen durch nicht-leitende Flächen 16 und 17 auch paarweise ausgeführt sein, so dass sich zwischen zwei z.B. parallel verlaufenden Spalten leitfähige Blindflächen ausbilden. Diese Blindflächen sind von den jeweils benachbarten Elektroden, z.B. den Sensorelektrodenflächen 13.1 und 13.2, vorzugsweise zwischen 1 bis 50 µm, besonders bevorzugt zwischen 5 µm bis 30 µm, noch bevorzugter zwischen 10 µm bis 20 µm beabstandet. Dies ist vorteilhaft wenn Sensorspalte beispielsweise im mm-Bereich erforderlich sind, die Auftrennung durch nicht-leitfähige Schichten 16 und 17 aber für das menschliche Auge nicht wahrnehmbar im 10µm-Bereich ausgeführt werden soll. Die Spaltbreiten d im mm-Bereich betragen bezogen auf die Substratdicke D vorzugsweise ¼D < d < 2D oder ½D < d < D.

Die Breite der Blindflächen kann zwischen 50 µm und 8 mm liegen, besonders bevorzugt zwischen 100 µm und 2 mm.
Die Blindflächen zählen insbesondere nicht zu den Leitungsbereichen des Netzwerks.

Über die kammartigen Auftrennungen 17 als Sensorspalt bilden die Sensorelektrodenflächen 13.1 und 13.2 durch ihre Verschaltung als mehrfachzugeordnete Sensorelektroden 22 jeweils in einer eindeutigen Kombination aus einer Fläche 13.1 und einer Fläche 13.2 insgesamt 48 Erfassungszellen in einer 8:6 Matrixanordnung.

Die Sensorelektrodenflächen 13.1 und 13.2 sind über Leiterverbindungen 14.1 bis 14.3 mit Kontaktflächen 15.2 verschaltet. Die leitfähigen Flächen 14.1 bis 14.3 und 15.2 liegen im Kontaktbereich 5.2 des Sensorfeldes 5. Sie können transparent aber auch opak ausgeführt sein.

Die Kontaktflächen (Kontaktpunkte) dienen dazu, eine Verbindung zwischen dem Sensorfeld und mindestens einer Steuereinheit als Teil eines elektronischen Gerätes herzustellen. Die Verbindung zwischen den Kontaktpunkten und der Steuereinheit wird beispielsweise als Steckverbindung oder als leitende Klebeverbindung oder als leitende Andruckverbindung hergestellt. Die Verbindung kann galvanisch leitend sein oder durch eine dielektrische Schutzschicht hindurch kapazitiv leitend sein.

Es bestehen zwei voneinander isolierte Leitungsbereiche, welche jeweils miteinander verschaltete Flächen 13.1, Elektrodenzuleitungen 14.1 bzw. 14.2 und damit verbundene Kontaktpunkte umfassen. Diese zwei Leitungsbereiche entsprechen den beiden Sensorelektrodengruppen 18 mit den zugehörigen Kontaktflächen in der Fig. 5a.

Zudem bestehen vierundzwanzig weitere Leitungsbereiche, welche jeweils Flächen 13.2, Elektrodenzuleitungen 14.3 und zugehörige Kontaktpunkte 15.2 umfassen. Sechs solche in einer Spalte angeordnete Leitungsbereiche entsprechen einer der Sensorelektrodengruppen 19 in der Fig. 5a.

Beispielsweise werden in dieser 2:N=2:24 Verschaltung die zwei Sensorelektrodenflächen 13.1 einer ersten Sensorelektrodenmenge als Empfangselektroden 6.2 betrieben und die vierundzwanzig zweiten Sensorelektrodenflächen 13.2 als Sendeelektroden. Noch günstiger kann es sein, dass die zwei Sensorelektrodenflächen 13.1 einer ersten Sensorelektrodenmenge als Sendeelektroden 6.2 betrieben werden und die vierundzwanzig zweiten Sensorelektrodenflächen 13.2 als Empfangselektroden. Die Sensorelektroden 13.1 und 13.2 sind jeweils paarweise über die nicht-leitende Fläche 17 als Sensorspalt kapazitiv gekoppelt (Gegenkapazität, mutual capacitance).

Ein Sensorfeld (Berührungssensorfeld), insbesondere das Sensorfeld 5 kann auf einem eigenen Trägersubstrat aufgebracht sein, welches mit einem Anzeigebildschirm 4 oder mit einem gesonderten Oberflächensubstrat (Bedienblendensubstrat) verbunden sein kann. Das Sensorfeld kann auch in dem Anzeigebildschirm 4 oder in dem Oberflächensubstrat mittelbar oder unmittelbar integriert sein.

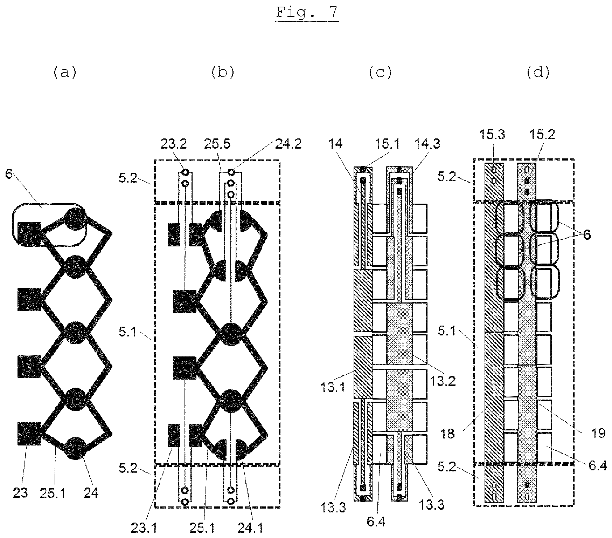

Die Fig. 7 bis 9 betreffen einlagige Sensoranordnungen mit M:N-Verschaltung von Elektroden und Kontaktpunkten und einem Zuordnungsgrad von M₄:N₄ (vgl. Erläuterungen zu Fig. 1). Dies wird auch kurz als M₄:N₄-Verschaltung bezeichnet.

In Fig. 7 wird für eine Basisgruppe bestehend aus zwei Spalten von Erfassungszellen einer M₄:N₄-Verschaltung die graphentheoretische Darstellung mit der Leiterschichtstruktur und einer abstrahierten Darstellung der Leiterschichtstruktur verglichen.

Das Ausführungsbeispiel der gesamten M₄:N₄-Verschaltung stellt eine K:L=12:8 Anordnung dar (Fig. 8), die Basiszelle eine 2:8-Anordnungsgruppe (Fig. 7).

Die Fig. 7a zeigt in Graphendarstellung zwei Spalten von je acht Erfassungszellen 6. In der ersten, linken Spalte setzen sich diese (von links nach rechts aufgezählt) aus jeweils einem Knoten 23, einem Sensorspalt 25.1 (d.h. einer Kante) und einem Knoten 24 zusammen. In der rechten Spalte besteht eine Erfassungszelle 6 (von links nach rechts aufgezählt) aus einem Knoten 24, einem Sensorspalt 25.1 und einem nicht dargestellten Knoten 23, welcher erst bei der Aneinanderreihung der Basisgruppen ergänzt wird.

In Fig. 7b sind die randseitigen der vier Knoten 23 als gesplittete Knoten 23.1 ausgebildet. Dadurch können die mittleren zwei der vier Knoten 23 mittels Leiterverbinder-Kanten durch den Knotensplit in den Kontaktbereich 5.2 herausgeführt werden, ohne dass sich die Leiterverbinder-Kanten mit den Kanten 25.1 (d.h. den Sensorspalten) kreuzen. Das bedeutet, dass die Leiterverbinder nicht durch die Sensorspalte hindurchgeführt werden.

Die zwei Teile der geplitteten Knoten 23.1 werden elektrisch verbunden, indem sie mit demselben Anschlusspunkt 23.2 im Kontaktbereich verbunden sind.

Ferner werden Anschlusspunkte 24.2 zu jedem Knoten 24 einzeln in den Kontaktbereich 5.2 mittels Kanten als Leiterverbinder herausgeführt und entsprechend werden die randseitigen der Knoten 24 in zwei Hälften 24.1 gesplittet und durch Kanten 25.5 als Umverbindung über den Kontaktbereich 5.2 wieder untereinander und mit dem Knoten 24.2 als Anschlusspunkt (Kontaktpunkt) verbunden.

Die Fig. 7c stellt den Graphen aus Fig. 7b als Leiterschichtstruktur dar. Hierbei entsprechen die Knoten 23 den Sensorelektrodenflächen 13.1 einer ersten Sensorelektrodenmenge, die Kanten 25.1 den Sensorspalten 6.4, die Knoten 24 den Sensorelektrodenflächen 13.2 einer zweiten Sensorelektrodenmenge, die gesplitteten Knoten 23.1 und 24.1 den Sensorelektrodenflächen 13.3, die Leiterverbinder-Kanten den leitenden Flächen 14 als Leiterverbindung, die Kanten 25.5 den leitenden Flächen 14.3 als Leiterumverbindung gesplitteter Sensorelektroden und die Knoten 23.2 und 24.2 den Kontaktflächen 15.1.

Die Sensorelektrodenflächen sind über Sensorspalte vierfach zugeordnet, d.h. der Zuordnungsgrad ist M₄:N₄.

Die Sensorspalte 6.4 sind nur abstrahiert dargestellt. Sie können, wie bereits ausgeführt, beispielhaft als nicht-leitender Spalt ausgeführt sein, der gerade, gebogen oder auch mäanderförmig verläuft.

Die Fig. 7d zeigt eine weiter abstrahierte Darstellung der Schichtstruktur aus Fig. 7c. Hierbei sind die Flächen 13.1 und 14 und die zugehörigen Kontaktpunkte 15.1 zu einer Gruppe 18 von verschalteten ersten Sensorelektroden mit Kontaktpunkten (Kontaktflächen) 15.3 zusammengefasst.

Die Kontaktfläche 15.3 ist in diesem Fall eine Kontaktfläche von unvollständig vierfach zugeordneten Sensorelektroden. Denn die Knoten 23 sind randseitige Knoten, die nur jeweils zwei Kanten 25.1 als Sensorspalt zugeordnet sind (vgl. Fig. 7a). Im Gegensatz dazu sind den Knoten 24 jeweils vier Kanten 25.1 als Sensorspalt zugeordnet.

Entsprechend sind die Flächen 13.2, 13.3, 14.3 und 15.1 in eine Gruppe 19 von verschalteten zweiten Sensorelektroden mit Kontaktfläche zusammengefasst. Die Kontaktflächen 15.2 entsprechen in dem Fall den drei Kontaktflächen der vollständig vierfach zugeordneten zweiten Sensorelektroden (Knoten 24) und die Kontaktflächen 15.3 der nur unvollständig, zweifach zugeordneten Randelektroden.

Jeder Sensorspalt 6.4 mit seinen zwei zugehörigen Elektroden bildet eine Erfassungszelle 6 (Sensor). Die Sensoren liegen im Erfassungsbereich 5.1, während die Kontaktflächen 15.2 und 15.3 in dem Kontaktbereich des Sensorfeldes liegen.

Die Fig. 8 zeigt eine aus den Basisgruppen der Fig. 7 zusammengesetzte 12:8 Matrix aus Erfassungszellen 6 in einer einlagigen M:N-Verschaltung. Hier werden sechs Basisgruppen aneinandergereiht und mit einer randseitigen Sensorelektrodengruppe 18.1 als Symmetrieergänzung abgeschlossen. Fig. 8b zeigt die entsprechende Graphendarstellung, wobei die Kontaktknoten 23.3 und 24.3 hier nicht als herausgeführt gezeigt werden. Die randseitigen Knoten 23.4 und 24.4 sind jeweils nur zweifach zugeordnet, während die inneren Knoten 23.3 und 24.3 jeweils vierfach zugeordnet sind. Dadurch weisen die randseitigen Sensorgruppen 18 und alle Sensorgruppen 19 nach wie vor Kontaktflächen 15.3 von unvollständig zugeordneten Sensorflächen auf.

Bezugnehmend auf Fig. 9a, welche eine abstrahierte Schichtstruktur zeigt, werden einige der unvollständig zugeordneten Knoten 23.4 der beiden Randelektrodengruppen 18 und sämtliche der randseitigen unvollständig zugeordneten Knoten 24.4 aller Elektrodengruppen 19 paarweise durch Umverbindungen verschaltet.

Fig. 9b zeigt in Graphendarstellung, dass jetzt viele zusätzliche (zuvor lediglich zweifach zugeordnete) Knoten der ersten Knotenmenge, 23.3 und 23.4, vierfach einem Knoten einer zweiten Knotenmenge, 24.3 und 24.4 (über Kanten 25.1, welche jeweils einem Sensorspalt entsprechen) zugeordnet sind und umgekehrt.

Die Eigenschaften dieser Verschaltung sind in der untenstehenden Tabelle 1 unter Typ 10 aufgeführt. Typ 10 weist in den in der Tabelle gezeigten Ausführungsbeispielen "4:4" bis "12:8" eine niedrigere Anzahl von Kontaktflächen "KF" auf als z.B. der Typ 4. Damit ist auch das Anschlussverhältnis verbessert zu AV_{TYP10} > AV_{TYP4}=4*K*L/(2*K+K*L+2*L).

Gegenüber den zweilagigen Typen 7, 8 und 9, die drei- bzw. vierfach Zuordnungen der Sensorelektroden betreffen, stellt der Typ 10 eine vorteilhafte einlagige, kreuzungsfreie Verschaltung dar. Der Typ 7 ist dabei beispielsweise zu verstehen als eine zweilagige Sensorelektrodenanordnung, bei welcher, ausgenommen der ersten und zweiten Randelektroden, die Sensorelektroden vierfach zugeordnet und die ersten Sensorelektroden zu vier Sensorelektroden verschaltet werden, d.h. es handelt sich um eine M<_{K*L/4}:N₄-Verschattung. Das Anschlussverhältnis AV wird dann: AV_{TYP7}=8*K*L/(2*K+16+K*L). Die Typen 8 und 9 sind als Varianten des Typs 7 zu verstehen, wobei eine Dreifachzuordnung der Sensorelektroden erfolgt. Die Anschlussverhältnisse betragen AV_{TYP8}=6*K*L/(9+K*L) und AV_{TYP9}=6*K/(3*L+K*L). Im Grenzwert für große K und L Werte gilt für die Anschlussverhältnisse AV_{TYP7}→8 und AV_{TYP8}→6 und AV_{TYP9}→6.

Wie bei Typ 10 ausgestaltet worden ist, lassen sich jedoch auch in einer einlagigen Ausführung die Sensorelektroden insbesondere vierfach zuordnen. Das Anschlussverhältnis ist zwar niedriger als bei den zweilagigen Ausführungen, aber höher als z.B. bei dem einlagig verschalteten Typ 4. Insbesondere ist die Anzahl der Kontaktflächen M+N des Typs 10b identisch der des Types 6, KF(M+N)=½*K*L+2=N+2, und somit gilt auch für die Anschlussverhältnisse AV_{TYP10} = AV_{TYP6}, für (L mod 4)=0 und L≥8 bei Typ 10b (siehe Tabelle 1). Das bedeutet, eine M_{<4}:N₄ Anordnung des Typs 10b, mit (L mod 4)=0 und L≥8, entspricht im Anschlussverhältnis einer 2_{N}:N₂ Anordnung des Typs 6.

Fig. 9c-g zeigt die linke randständige Spalte aus Fig. 9b mit verschiedenen Varianten von Umverbindungen. Am Fuß der Darstellung ist jeweils die resultierende Mächtigkeit der ersten Knotenmenge angegeben. Für die rechte randständige Spalte kann von analogen Umverbindungen ausgegangen werden. Bezüglich Fig. 9e kann die Anzahl der Zeilen u um 3 oder Vielfache von 3 ergänzt werden. Bezüglich Fig. 9f kann die Anzahl der Zeilen u um 2 oder Vielfache von 2 ergänzt werden, wie z.B. in Fig. 9g dargestellt.

Die Graphen in Fig. 8b und 9b sind bipartite, planare, unvollständige K_{24,24}-Graphen. Der Grund dafür kann darin gesehen werden, dass gemäß der Graphentheorie vollständige Graphen K_{M,N} mit M>2 und N>2 nicht mehr planar sind; als unvollständige Graphen kann eine planare Darstellung aber ermöglicht werden. Dies entspricht einem unvollständigen Zuordnungsgrad Mₘ:Nₙ, n<M und m<N. Die Sensorelektroden SE_{M} und SE_{N} sind untereinander mehrfach aber nicht vollständig zugeordnet.

Die in den Fig. 8b und 9b gezeigten Graphen entsprechen unvollständigen, bipartiten, planaren K_{M,N}-Graphen, mit M>2 und N>2 und weisen eine unvollständige Vierfach-Zuordnung, M_{<4}:N_{<4} in Fig. 8b und M_{<4}:N₄ in Fig. 9b, der Sensorelektroden (nicht-regulärer Graph) auf. Diese Ausgestaltungen zeichnen sich durch geringere Anzahlen von Kontaktflächen KF und höhere Anschlussverhältnisse AV aus als der Typ 4.

Insgesamt zeichnen sich demnach die Typen 5, 6 und 10 durch ein besonders niedriges Verhältnis aus Anzahl der Kontaktpunkte und Anzahl der Sensoren aus. Mit anderen Worten ist das Anschlussverhältnis dieser Typen jeweils besonders hoch. Mit diesen Strukturen wird demnach eine vorteilhafte einlagige Anordnung von Sensorelektroden und Leiterverbindungen mitsamt ihrer Verschaltung auf einem Substrat ermöglicht, z.B. an der Unterseite eines Bediensubstrates. Einlagig bedeutet dabei, dass sich weder Verschaltungen kreuzen, noch dass Verschaltungen durch Sensorspalte geführt werden. Eine einlagige Anordnung und Verschaltung der Erfassungszellen ermöglichen eine kostengünstige und weniger fehleranfällige Herstellung.

Die beschriebene 2:N- und M:N-Verschaltung führen somit zu eine niedrigen Anzahl an Kontaktflächen, insbesondere für eine K:L-Sensormatrix. Die Verschaltungen sind einlagig, d.h. kreuzungsfrei.

Eine 2:N-Verschaltung mit Zuordnungsgrad 2ₓ:N₂, x≤N, bietet insbesondere den Vorteil, dass die kostenintensiveren Empfangskanäle auf zwei reduziert werden können und die kostengünstigeren Sendekanäle auf N ausgelegt werden. Diese Verschaltung erfordert eine Zuordnungseinheit, wie beschrieben.

Andererseits ist es für das Signal/Rausch-Verhältnis vorteilhaft, wenn die empfangende Elektrode von kleiner Fläche ist. Eine kleine Sensorfläche erzeugt bei Bedienung ein besseres Signal/Rausch-Verhältnis als eine große Sensorfläche, da die kapazitive Kopplung zum bedienenden Finger (self-capacitance) im Verhältnis zur parasitären kapazitiven Kopplung der abseits des Fingers angeordneten Sensorfläche zu Umgebung größer wird, bzw. die parasitäre Kopplung zu umgebenden Elektroden im Vergleich zur Gegenkapazität (mutual capacitance) des Sensorspaltes gering bleibt. Weiterhin ist es vorteilhaft, wenn die aktive, empfangende Elektrode von leitenden Flächen auf konstantem elektrischen Potential, bevorzugt auf Massepotential, umgeben ist. In diesem Fall kann eine 2:N Verschaltung mit N Empfangskanälen und 2 Sendekanälen ausgelegt werden. Elektroden, die nicht zur unmittelbar abgefragten Erfassungszelle gehören, können auf ein bevorzugtes elektrisches Potential gelegt werden.

Je nach Anwendungsfall kann insbesondere zwischen den Verschaltungen 2ₓ:N₂, x≤N oder M_{<4}:N_{<4} entschieden werden. Die Erfindung beschränkt sich jedoch nicht auf diese. Es sind auch Verschaltungsgrade M_{<m}:N_{<n}, mit n=2 bis 4 und m=2 bis 4 in verschiedenen Ausführungsformen möglich. Vorzugsweise ist die Anzahl der Sensorelektroden SE_{M} und SE_{N}, also auch die Anzahl der Erfassungszellen EZ, jeweils ein Vielfaches von zwei, d.h. K mod 2 = 0 und L mod 2 = 0.

Eine unvollständige M_{<4}:N_{<4}- oder M_{<4}:N₄-Vierfach-Verschaltung hat ein Anschlussverhältnis AV<4 aber im Grenzwert großer K und L Werte gilt AV→4, ebenso wie es für den Typ 6 in der 2:N-Verschaltung gilt. Auch bei einer 2ₓ:N₂-Verschaltung mit x≤N ist es, um eine vollständige Verschaltung zu verwirklichen, vorteilhaft, wenn die Anzahl der Erfassungszellen ein Vielfaches von zwei beträgt.

Im Übrigen sei angemerkt, dass sich bereits auch eine unvollständige Fünffach-Zuordnung (5-regulärer, unvollständiger K_{M,N}-Graph mit M>5 und N>5) nicht mehr planer darstellen lässt. Hingegen sind unvollständige M_{<m}:N_{<n}-Zuordnungen für 5>m>3 und 5>n>3 (nicht-m,n-reguläre K_{M,N}-Graphen mit M>4 und N>4) noch planar darstellbar. Diese Zuordnungen oder auch Zuordnungen mit m=3 und n=3 oder Kombinationen solcher können als unvollständige Zuordnungen einlagig und kreuzungsfrei dargestellt werden.

Die Fig. 10 zeigt eine Bedienblende 1.2 bestehend aus einer Sensorblende 1.1, einer Trägereinheit 8 und einem Anzeigebildschirm 4.

Die Sensorblende 1.1 ist aus einem transparenten, vorzugsweise ebenen Bediensubstrat 2, besonders bevorzugt in Gestalt einer Platte aus Glas oder Glaskeramik aufgebaut. Die äußere Substratoberfläche 2.1 ist dem Außenbereich 7 zugewandt, in dem sich der Benutzer der Bedienblende aufhält. An der inneren Substratoberfläche 2.2 ist ein Sensorfeld 5 angebracht, das sich räumlich in den Erfassungsbereich 5.1 und den Kontaktbereich 5.2 unterteilt. Der Erfassungsbereich ist der aktive Bereich des Sensorfeldes 5, in dem der Benutzer Bedienvorgänge auslösen kann und der aus Erfassungszellen 6, d.h. aus Sensoren, aufgebaut ist. Die äußere Substratoberfläche 2.1 stellt für den Benutzer eine Bedienoberfläche dar, die der Benutzer zum Steuern des elektrischen Gerätes berühren kann. Die innere Substratoberfläche 2.2, an welcher Erfassungszellen 6 des Sensorfeldes 5 angeordnet sind, ist dem Außenbereich 7 und dem Benutzer abgewandt und befindet sich somit auf der gegenüberliegenden Seite der Bedienoberfläche 2.1.

Der Erfassungsbereich 5.1 überlappt sich mit dem Anzeigebereich des Anzeigebildschirms 4 und ist wie beschrieben transparent gestaltet. Dem Sensorfeld zugewandt ist eine Trägereinheit 8 angebracht, in deren zentraler Öffnung ein Anzeigebildschirm 4 angebracht ist. Der Anzeigebildschirm 4 stellt graphische Informationen für den Benutzer bereit, die vom Anzeigebildschirm ausgehend durch den Erfassungsbereich 5.1 des Sensorfeldes 5 und durch das transparente Bediensubstrat 2 für den im Außenbereich 7 befindlichen Benutzer sichtbar dargestellt werden.

Die Kontaktelemente 12 verbinden die leitenden Flächen des Sensorfeldes mit den leitenden Flächen der Trägereinheit 8 elektrisch. Die Kontaktelemente 12 sind am Kontaktbereich 5.2 der inneren Substratoberfläche 2.2 und an der äußeren Trägeroberfläche 8.1 angebracht und kontaktieren die Kontaktflächen (Kontaktpunkte) 15.1 auf der inneren Substratoberfläche 2.2 und die Kontaktflächen (Kontaktpunkte) 15.4 auf der äußeren Trägeroberfläche 8.1.

Die Kontaktflächen 15.1 sind vorzugsweise in einem Kontaktbereich 5.2 außerhalb des Erfassungsbereichs 5.1 angeordnet. Der Kontaktbereich 5.2 umrandet den Erfassungsbereich 5.1 mindestens teilweise. Der Kontaktbereich 5.2 überlappt bevorzugt nicht mit dem darstellenden Bereich des Anzeigebildschirms 4.

Die ebene Trägereinheit 8 weist eine dem Außenbereich 7 zugewandte, äußeren Trägeroberfläche 8.1 auf. Das ebene Bediensubstrat 2, welches vorzugsweise zumindest teilweise aus Glas- oder Glaskeramikmaterial besteht, weist eine dem Außenbereich 7 zugewandte, äußeren Substratoberfläche 2.1 und einer gegenüberliegenden, dem Außenbereich 7 abgewandte und der äußeren Trägeroberfläche 8.1 zugewandte, inneren Substratoberfläche 2.2 auf.

Insbesondere in einem Haushaltsgerät, vorzugsweise einem Kochgerät, kann eine Bedienblende 1.2 umfasst sein. Die Bedienblende 1.2 ist vorzugsweise in einem Kaltbereich einer Kochfläche eines Kochgeräts angeordnet.

Das Sensorfeld 5 der Bedienblende 1.2 weist vorzugsweise eine K:L-Anordnung von Sensoren mit einer 2:N- oder M:N-Verschaltung auf, wobei K, L, N, M > 2 gilt und vorzugsweise ferner zumindest eine weitere einzelne Erfassungszelle mit separaten Kontaktflächen in der Bedienblende. Die separate Erfassungszelle stellt beispielsweise den Ein/Aus-Schalter des elektronischen Gerätes, z.B. des Kochgerätes dar. Im Hinblick auf Sicherheitsnormen für Ein/Aus-Schalter Kann bei diesen vorgesehen sein, die Kontaktierung und Verbindung zur Steuereinheit getrennt zur Kontaktierung der K:L-Anordnung auszuführen. Auch kann eine zusätzliche, zweite, unabhängige Steuereinheit dafür vorgesehen sein.

Die Trägereinheit 8 der Bedienblende 2.1 ist insbesondere hergerichtet zum Tragen und/oder Halten des Anzeigebildschirms 4 (insbesondere einer Displayeinheit in Form eines LCD-, LED-, OLED-, Plasma-, EL- oder projektiven Bildschirms), sie kann auch als Platine für elektronische Bauelemente ausgebildet sein, die beispielsweise einer Steuerung für die Benutzerschnittstelle und/oder für das Haushaltsgerät angehören.

Die Fig. 11 zeigt eine graphische Benutzerschnittstelle 3, bestehend aus einer Bedienblende 1.2, einer Übersetzungseinheit 9, welche auch als Zuordnungseinheit bezeichnet wird, einer Steuereinheit 10 und elektrischen Verbindungen 11 zwischen Trägereinheit 8, Anzeigebildschirm 4, Zuordnungseinheit 9 und Steuereinheit 10.

Die Zuordnungseinheit 9 kann eine physisch von der Steuereinheit getrennte Einheit darstellen, die beispielhaft auf der Trägereinheit angebracht ist, oder sie kann Teil der Steuereinheit 10 in Form von elektronischen Bauelementen und/oder Soft-/Firmware sein.

Eine Sensorblende 1.1 mit einem Substrat und einem Sensorfeld 5 ist insbesondere zur Bedienung eines elektronischen Gerätes, besonders bevorzugt eines Haushaltsgeräts geeignet. Dazu kann in einem Haushaltsgerät die Sensorblende 1.1 integriert sein. Vorzugsweise ist die Sensorblende 1.1 Teil einer Bedienblende 1.2 bestehend aus einer Sensorblende 1.1, einer Trägereinheit 8 und einem Anzeigebildschirm 4 oder Teil einer graphischen Benutzerschnittstelle 3 mit einer Bedienblende 1.2, einer Zuordnungseinheit 9 und einer Steuereinheit 10.

Eine graphische Benutzerschnittstelle 3 (GUI) mit einer Bedienblende 1.2 sowie einer Steuereinheit 10 kann ein kombiniertes Ein- und Ausgabegerät sein. Ein Sensorfeld 5 kann mit dem Anzeigebildschirm 4 dahingehend wechselwirken, dass der Anzeigebildschirm 4 eine Interaktion des Benutzers mit dem Sensorfeld 5 anzeigt; hierzu kann das Sensorfeld 5 mit dem Anzeigebildschirm 4 elektrisch verbunden sein.

Das Sensorfeld 5 und der Anzeigebildschirm 4 können elektrisch auch mit einer Steuerung für die Benutzerschnittstelle 3 oder für das Haushaltsgerät elektrisch verbunden sein.

Die Steuereinheit 10 kann beispielsweise auf einer Platine als Mikrokontroller mit weiteren elektronischen Bauteilen aufgebaut sein und kann räumlich separat von der Benutzerschnittstelle 3 angeordnet sein oder kann auf der Trägereinheit 8 angeordnet sein. Über die Software oder Firmware im Mikrokontroller wird die Abfrage des Sensorfeldes 5 gesteuert und die Berührfolge der Erfassungszellen (Sensoren) als Punktbedienung oder zweidimensionale Wischgestik interpretiert.

Es kann vorgesehen sein, dass Bediensubstrat 2 der Benutzerschnittstelle 3 mit dem Sensorfeld 5 ein Teil einer Anzeigeeinheit ist, entweder als äußeres Substrat (on-cell Anordnung) oder als ein inneres Substrat (in-cell Anordnung), das von einem äußeren Substrat der Anzeigeeinheit zum Außenbereich 7 oder Benutzerbereich abgeschlossen ist.

Der Anzeigebildschirm 4 der Benutzerschnittstelle 3 ermöglicht eine optische Ausgabe an den Benutzer. Die Informationen können an den Anzeigebildschirm 4 in Form eines analogen oder digitalen Signals von einem Außenbereich 7 der Benutzerschnittstelle 3, vorzugsweise einer Steuerung der Benutzerschnittstelle, bereitgestellt werden. Die pcap-Erfassungszellen ermöglichen zudem eine Eingabe von Daten oder Informationen: Mittels Berühren des Bediensubstrats 2 durch den Benutzer in einem Bereich einer Erfassungszelle, insbesondere in einem Bereich des Sensorspalts zwischen den beiden Sensorelektroden der Erfassungszelle, kann die Erfassungszelle ein Berührsignal erzeugen, welches die Benutzerschnittstelle 3 vorzugsweise in Form eines analogen oder digitalen Signals an eine Steuerung 10 der Benutzerschnittstelle 3 oder des elektronischen Geräts bereitstellt.

Die Empfindlichkeit und Interpretation der Berührsignale der Erfassungszellen kann auch so eingestellt sein, dass eine Bedienung im Nahfeld der Erfassungszellen ermöglicht wird, beispielsweise im Abstand ≤ 50 mm, ≤ 30 mm, oder ≤ 10 mm, ohne das Bediensubstrat zu berühren.

Bei geeigneter Auslegung der Erfassungszellen können auch Punkt- oder Gestikbedienung im Nahfeld über dem Sensorfeld 5 erfasst werden.

Weiterhin kann die Signalerkennung so eingestellt sein, dass eine Annäherung im Nahfeld von einer Berührung auf der Bedienoberfläche unterschieden werden kann. Dadurch können beispielsweise bei Annäherung die Anzeigen oder ein Anzeigenteilbereich aufgehellt und oder farblich verändert und oder die Informationsdarstellung verändert werden, um eine Benutzerführung intuitiver zu unterstützen. Bei Berührung erfolgt dann der eigentliche Bedienvorgang. Weiterhin können Elektroden aus der Gesamtheit der Elektrodenanordnung, insbesondere im Randbereich der Benutzerschnittstellenanordnung derart von der Steuerung ausgewertet werden, dass über die zeitliche Abfolge der Elektrodensignale eine Annäherung eines Benutzers oder eine Gestikbedienung im Fernfeld, letztere vorzugsweise eingeschränkt auf einen Abstand von < 300 mm, < 200 mm, oder < 100 mm, über der Gesamtheit oder über Teilen der Gesamtheit der Elektrodenanordnung Bediengesten erkannt werden. Diese können insbesondere für die Bedienung von übergeordneten Funktionen, wie einem visuell animierten Aufwachen des Gerätes bei Annäherung eines Benutzers, einer Schnellabschaltung, einer Auswahl einer Kochzone oder auch einem Einschalten einer mit dem Kochgerät vernetzten Abzugshaube dienen. Zur verbesserten Erkennung von besagten Fernfeldgestiken können einzelne Elektroden großflächig ausgebildet sein. Zur Nahfeld und oder Fernfelderkennung können auch einzelne Elektroden in einer Abfragesequenz verschaltet werden, so dass sie eine größere, zusammenhängende Elektrodenfläche darstellen. Die Nah- und/oder Fernfelderkennung erfolgt bevorzugt im self-capacitance Betrieb.

Weiterhin wird die Anzeigeeinheit 4, insbesondere auf die Sensorfeldbedienung reagierend gesteuert und es werden Steuerbefehle an optional weitere Steuereinheiten, die Funktionen des elektronischen Gerätes steuern, übermittelt und Information von diesen empfangen, die wiederum in der Anzeigeeinheit 4 angezeigt werden können. Wenn keine optionalen weiteren Steuereinheiten im elektronischen Gerät vorhanden sind oder auch optional neben weiteren solchen Steuereinheiten, übernimmt die Steuereinheit des GUI mindestens teilweise die Funktionssteuerung des elektronischen Gerätes.

Die Zuordnungseinheit (Übersetzungseinheit) 9 übersetzt die 2:N- oder M:N-Matrixverschaltung beispielsweise in eine der im Sensorfeld physischen K:L-Spalten/Reihen-Matrixanordnung (vgl. bspw. Typ 3 in der untenstehenden Tabelle 1) entsprechende Verschaltung. Dies ist zum einen erforderlich, um räumlich benachbarte Erfassungszellen für die Auswertung von Gestikbedienungssignalen richtig zuzuordnen und zum anderen kann es erforderlich sein, wenn eine standardisierte Steuereinheit eine K:L-Verschaltung und -Anordnung zur Sensorabfrage und Interpretation der Bediensignale aus benachbarten Erfassungszellen erwartet.

Die Zuordnungseinheit 9 setzt den K:L-Sensorabfragezyklus in einen 2:N- oder M:N-Abfragezyklus um. Mit anderen Worten übersetzt sie die im 2:N- oder M:N-Abfragezyklus erhaltenen Bediensignale in die physische K:L-Anordnung der Erfassungszellenmatrix.

Die Zuordnungseinheit 9 kann als Hardware ausgebildet sein, beispielsweise als Mikrokontroller oder programmierbares Logikfeld (field programable gate array, FPGA), welches auf der Trägereinheit 8 angeordnet ist. Es ist auch möglich, dass die Zuordnungseinheit 9 in einfacher und kostengünstiger Weise als Software, beispielsweise als zusätzliche Subroutine, in der Steuereinheit ausgebildet ist.

Gemäß Graphentheorie gilt, dass die physische Anordnung einer K:L-Matrix aus Erfassungszellen mit K>2 und L>2 nicht als leitende Struktur in einem einlagigen Sensorfeld als Verbindungsmatrix einlagig kreuzungsfrei ausgebildet werden kann. Sie ist auch nicht durch zusätzliche passive Leiterverbindungen beispielhaft auf dem Träger umsetzbar, da eine Elektrodenmenge, z.B. mit K Spaltenelektroden, K>2, bereits zu zwei Elektroden in der 2:N-Struktur oder M und N Elektroden in der M:N-Struktur vorteilhaft verbunden sind, um die Anzahl der Kontaktflächen auf 2+N oder M+N zu reduzieren. Die 2:N- und M:N-Verschaltungen beinhalten Verschaltungen, die in einer üblichen K:L-Verschaltung nicht vorkommen und daher nicht durch passive Leiterverbindungen rückgängig gemacht werden können. Das bedeutet, dass die Zuordnungseinheit vorteilhaft ein aktives Element ist, um die 2:N- oder M:N-Verschaltung in eine K:L-Zuordnung übersetzen.

Aus der Graphentheorie ist bekannt, dass sich vollständige 2:N-Matrixverschaltungen noch kreuzungsfrei darstellen lassen. Dies entspricht vollständigen, bipartiten Graphen K_{2,N}, mit N beliebig. Diese Graphen sind noch planar. Das bedeutet, dass die Struktur der Elektroden einschließlich ihrer Zuleitungen zur Steuereinheit 10 kreuzungsfrei in einer Leiterschicht, das heißt in einer Schicht aus leitenden Flächenelementen, darstellbar sind und keine leitenden Verbindungen durch Sensorspalten geführt werden müssen. Diese Leiterschicht kann auf einer gebogenen oder nicht gebogenen Oberfläche aufgebracht sein.

Bezugnehmend auf die Fig. 10 und 11 kann das Sensorfeld 5 aus K*L Erfassungszellen aufgebaut sein, die physisch in einer K:L-Matrix angeordnet sind. Vorzugsweise ist das Sensorfeld an der inneren Oberfläche des Bediensubstrates (innere Substratoberfläche) angebracht, zur Interaktion mit einem sich in dem Außenbereich befindlichen Benutzer.

Die Erfassungszellen können jeweils aus mindestens einer Sende- und mindestens einer Empfangselektrode aufgebaut sein und insbesondere in einer 2:N-Matrixstruktur, vorzugsweise mit N=1/2*K*L, oder einer M:N-Matrixstruktur, vorzugsweise im Grenzfall großer K und L mit M=N=1/4*K*L, kreuzungsfrei verschaltet sein. Es ist bevorzugt, dass keine der Leiterverbindungen durch einen Sensorspalt zwischen einer Sende- und einer Empfangselektrode verläuft. Die Anordnung und Verschaltungen entsprechen dabei insbesondere bipartiten, planaren K_{2,N}- oder K_{M,N}-Graphen, wobei die Sende- und Empfangselektroden 6.2 und 6.3 zusammen mit den zugehörigen Kontaktflächen jeweils einer der beiden Knotenmengen des bipartiten Graphen und die Sensorspalte 6.4 den Kanten des Graphen entsprechen. Die Erfassungszellen sind vorzugsweise überlappend mit dem Anzeigebildschirm angeordnet.

Wird eine Erfassungszelle als selbst-kapazitiver Sensor betrieben, so kann mindestens eine der zwei einer Erfassungszelle zugeordneten Elektroden (im Wechsel) als selbst-kapazitiver Sensor betrieben werden. Die jeweils zweite Elektrode und optional weitere Elektroden in der Umgebung können als Schirm- oder Abschirmelektroden betrieben werden.

Die Trägereinheit 8 weist mindestens an ihrer äußeren Oberfläche 8.1 Leiterstrukturen auf, insbesondere Kontaktflächen 15.4, zur Kontaktierung der Kontaktflächen 15.1 auf dem Bediensubstrat. Um elektrisch leitende Verbindungen zwischen Kontaktflächen auf dem Träger und dem Bediensubstrat und damit mit den Sensorelektroden herzustellen, beziehungsweise allgemein, um die Leiterstrukturen von Substrat und Träger elektrisch zu kontaktieren, sind entsprechende geeignete Kontaktelemente 12 vorgesehen. Die Kontaktelemente 12 können die entsprechenden Kontaktflächen kapazitiv durch eine Isolationsschicht kontaktieren oder elektrisch leitend (galvanisch) kontaktieren. Elektrisch leitfähige Kontaktelemente können verschiedenartig ausgestaltet sein, beispielsweise in Form von Federkontakten oder elektrisch leitfähigen, flexiblen Schaumstoffen oder in Form von elektrisch leitfähigen Klebe- oder Lötverbindungen oder auch in Form von Drahtverbindungen.

Das Substrat 2 ist transparent für vom Anzeigebildschirm 4 abgestrahltes Licht, derart, dass der Anzeigebildschirm 4 durch das Substrat hindurch für einen Benutzer erkennbar ist.

Die äußere Substratoberfläche 2.1, welche dem Außenbereich 7 und dem Benutzer zugewandt ist und die der Benutzer zum Steuern des elektronischen Geräts berühren kann, stellt eine Bedienoberfläche dar. Das Substrat ist vorzugsweise eben. Gemäß einer anderen Ausführungsform kann das Substrat, insbesondere auch im Bedienbereich, gebogen sein.

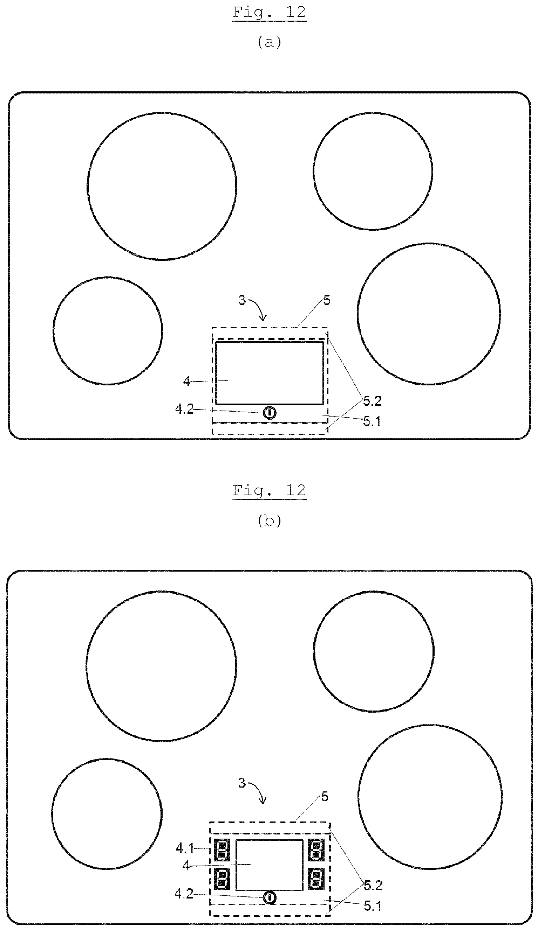

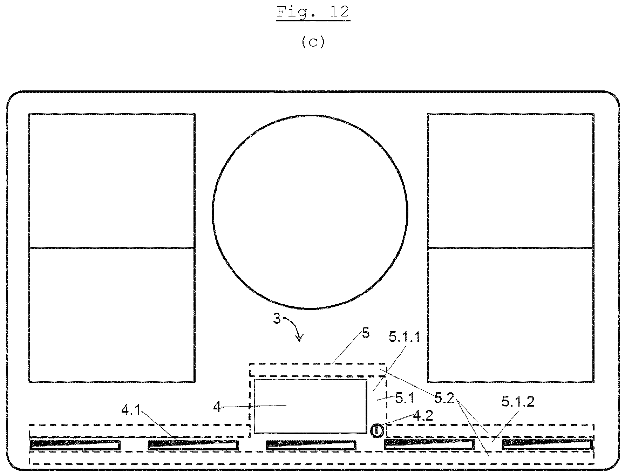

Die Fig. 12 zeigt Ausführungsformen für Kochfelder in der Ansicht von oben. In Fig. 12a ist ein Kochfeld mit vier Kochzonen abgebildet und einer auf der Unterseite des Kochfeldsubstrats angebrachten Benutzerschnittstelle 3, bei der das Sensorfeld 5, der Erfassungsbereich des Sensorfeldes 5.1 und der Anschlussbereich 5.2 des Sensorfeldes angedeutet sind.

Im Erfassungsbereich sind ein Anzeigebildschirm 4 und eine Einschalt-Piktogrammanzeige 4.2 angeordnet. Der Anzeigebildschirm ist beispielsweise ein TFT-LCD-Display, welches dem Benutzer Bedien-, Zustands- und/oder Hilfsinformationen anzeigt, wobei die Anzeige der Informationen durch die K:L-Erfassungszellen-Matrix und durch das Kochfeldsubstrat hindurch geschieht.

Der Ein-/Ausschalter ist als einzelne Erfassungszelle ausgebildet, die durch die Piktogrammanzeige hinterleuchtet wird und/oder durch ein gedrucktes Ein-/Ausschaltsymbol auf der Ober- oder Unterseite des Kochfeldsubstrats überlagert ist.

Bezugnehmend auf Fig. 12b sind neben dem zentralen Anzeigebildschirm 4 und einer Ein-/Ausschalt-Piktogrammanzeige 4.2 noch Segmentanzeigen 4.1 im Erfassungsbereich angeordnet. Über diesen 7-Segmentanzeigen kann die Leistung einer einzelnen Kochzone beispielsweise per Wischgestik durch hoch und runter Scrollen der Anzeige eingestellt werden.

Im Anzeigebildschirm können Zusatzinformationen abgerufen werden und weitere Einstellungen durch Touch-Bedienung des dem Bildschirm überlagerten Sensorfeldes vorgenommen werden, beispielsweise das Abrufen von Rezeptinformationen, Einstellungen von automatischen Kochvorgängen, Einstellungen einer Zeitschaltuhr, Informationen anderer vernetzter Hausgeräte oder Informationen aus anderen vernetzten Informationsquellen.

Die Kontaktierung der auf der Unterseite des Kochfeldsubstrates angebrachten Sensorelektroden und deren Kontaktflächen erfolgt im Anschlussbereich 5.2 des Sensorfeldes.

In Fig. 12c ist ein Kochfeld mit fünf Kochzonen gezeigt, das neben einem Anzeigebildschirm 4 und einer Ein-/Ausschalt-Piktogrammanzeige 4.2 noch fünf Schiebeschalteranzeigen (Slider) 4.1 im Erfassungsbereich 5.1 aufweist.

Der Erfassungsbereich 5.1 ist hier nicht mehr von rechteckiger Form, sondern ist zum Teil an die Breite des Kochfelds angepasst. Der Erfassungsbereich weist Teilbereiche 5.1.1 und 5.1.2 auf, in denen die Anordnung der Erfassungszellen in unterschiedlicher Auflösung erfolgen kann, beispielsweise mit Matrixanordnungen K1:L1 (für 5.1.1) und K2:L2 (für 5.1.2), mit K1<K2 und L1>L2.

Der Kontaktbereich 5.2 kann, wie hier beispielhaft gezeigt, über die gesamte Breite des Erfassungsbereiches unterhalb und oberhalb von diesem angeordnet sein. Er kann aber auch auf einen kleineren Bereich reduziert sein, wenn im Sensorfeld die Leiterverbindungen und Kontaktflächen entsprechend angeordnet sind.

Wie in Fig. 12a bis Fig. 12c gezeigt ist, kann ein Sensorfeld mit den beschrieben Aufbringverfahren individuell für ein jeweiliges Kochfeld ausgelegt werden. Umgekehrt können die Trägereinheiten mit den Anzeigebildschirmen in einfachen standardisierten Modulen gefertigt sein und an den entsprechenden Stellen unter dem Kochfeldsubstrat angebracht werden. Dadurch erhält man ein hohes Maß an Flexibilität in der Gestaltung der Benutzerschnittstelle bei einem hohen Grad an standardisierten Trägerbaugruppen, die sich im Wesentlich auf die Anordnung von Anzeigebildschirmen oder Anzeigeelementen beschränken. Demgegenüber sind die Werkzeugkosten für Trägereinheiten mit elektronischen Platinen hoch und bedürfen einer Plattform-Standardisierung.

Das Layout des Sensorfeldes kann demnach mit vergleichsweise geringen Werkzeugkosten von Gerätemodell zu Gerätemodell variiert werden. Hierbei kann vorgesehen sein, die Erfassungszellen und deren Kontaktflächen so anzuordnen, dass verschiedene Trägermodule in passender Kontaktierung, aber auch in verschiedener Anordnung zueinander angebracht werden können. Die Anordnung der Anzeigen auf den Trägermodulen kann frei von solchen Einschränkungen erfolgen, die sich ergeben, wenn die Berührsensoren auf der Trägereinheit aufgebracht sind.

Ohne Beschränkung auf die gezeigten Ausführungsbeispiele ist ein Sensorfeld 5 vorzugsweise rechteckig geformt und/oder der Form und Größe einer Anzeigeeinheit 4 angepasst. Es kann aber auch in beliebigen Formen wie vieleckig oder in runden Formen ausgestaltet sein, beispielsweise kann es sich auch aus mindestens zwei rechteckigen Matrixanordnungen K:L₁, K:L₂, etc. zusammensetzen, wobei L₁<>L₂ ist.

Die K:L-Anordnung der Erfassungszellen ist insbesondere über einem Anzeigebildschirm 4 wie einem hochauflösenden graphischen LCD-Display regelmäßig, orthogonal in longitudinaler und horizontaler Ausrichtung, schachbrettartig angeordnet. Es kann vorgesehen sein, dass ein Anzeigeelement auf einem Träger befestigt ist, wobei der Träger wiederum an dem Substrat angebracht ist. Die zweidimensionale Sensoranordnung kann hingegen unmittelbar an dem Substrat angeordnet sein. Somit kann Form und Größe der Sensoranordnung unabhängig von der Anzeigeeinrichtung sein. Die Sensoranordnung kann insbesondere größer sein und sich z.B. auch über mehrere Anzeigen erstrecken.

Die Ausdehnung oder die Abstände der Erfassungszellen können in longitudinaler und horizontaler Richtung unterschiedlich sein. Sind in der Bedienerschnittstelle im Erfassungsbereich anstelle oder in Kombination mit einem typischerweise rechteckigen LCD-Display auch andere Anzeigen angeordnet, beispielsweise Segmentanzeigen oder Piktogrammanzeigen, so kann die umfassende Anordnungsfläche von der typische Rechteckform abweichen, so dass die Anordnung der Erfassungszellen mit variabler Anzahl K an Spalten und variabler Anzahl L an Zeilen ausgestaltet sein kann.

Beispielsweise kann die Anordnung in zwei benachbarten Bereichen eine Matrix K₁:L₁ und K₂:L₂, mit K₁<>K₂ und L₁<>L₂ sein. Genauso können die Abstände, Größen und Formen der Erfassungszellen in verschiedenen Bereichen des Erfassungsbereiches variieren. Die gesamte Form des Erfassungsbereiches kann anstelle einer rechteckigen Form auch andere Formen, wie mehreckige, runde, gebogene Formen annehmen oder er kann auch in mindestens zwei Erfassungsbereiche aufgetrennt sein.

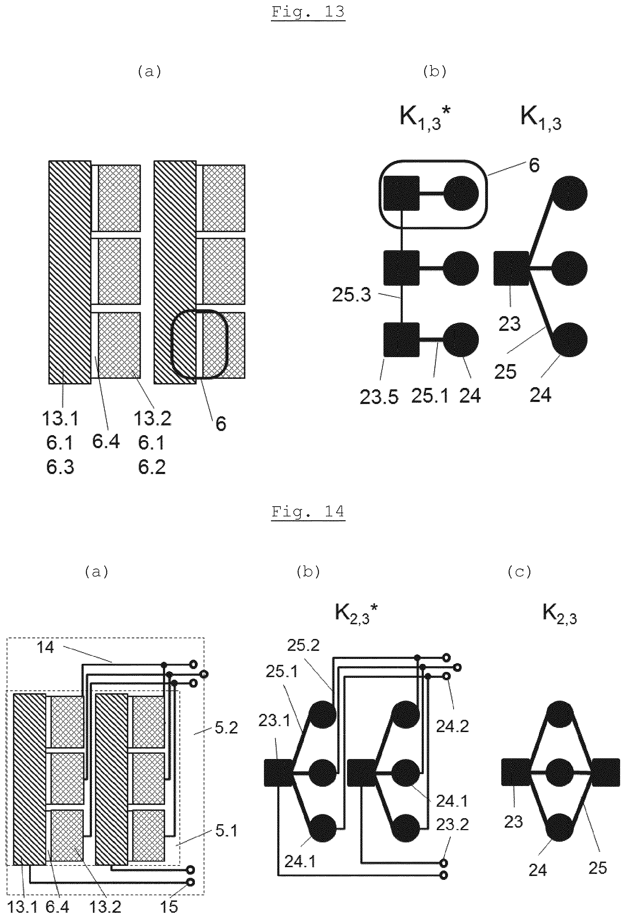

Fig. 13a zeigt eine Anordnung von sechs Sensoren 6 in zwei Spalten und drei Zeilen. Jeder der Sensoren 6 umfasst zwei Elektroden (einer erste, hier linke Elektrode 13.1 und eine zweite, hier rechte Elektrode 13.2), welche voneinander durch einen Spalt 6.4 beabstandet sind.

Die ersten, hier linken Elektroden 13.1 der in einer Spalte angeordneten Sensoren sind miteinander verschaltet (d.h. miteinander elektrisch verbunden), indem eine großflächige Elektrode zum Einsatz kommt. Demgegenüber sind die zweiten, hier rechten Elektroden 13.2 nicht miteinander verbunden.

Es handelt sich demnach um eine R:S-Verschaltung im Erfassungsbereich mit R=2 und S=6. Fig. 13b zeigt eine der Fig. 13a entsprechende Graphendarstellung mit Knoten 23, welche den ersten, linken Elektroden 13.1 entsprechen und Knoten 24, welche den zweiten, rechten Elektroden 13.2 entsprechen. Zwischen Knoten 23 und 24 verlaufen Kanten 25. Eine Kante 25, zusammen mit zwei zugehörigen Knoten entspricht einem Sensor 6. Mehrere Knoten 23, welche durch Kanten 25.3 miteinander verbunden sind, können zu einem Knoten 23 zusammengefasst werden. Dadurch entsteht ein bipartiter Graph.

Fig. 14a zeigt das Sensorfeld aus Fig. 13a mit Elektrodenzuleitungen 14. Die Elektrodenzuleitungen 14 verbinden Elektroden, welche im Erfassungsbereich 5.1 angeordnet sind, mit Kontaktpunkten 15, welche im Kontaktbereich 5.2 angeordnet sind.

Die zweiten, rechten Elektroden einer Zeile sind jeweils miteinander verschaltet. Dadurch ergibt sich im Kontaktbereich eine M:N-Verschaltung mit M=2 und N=3. Gegenüber der R:S-Verschaltung im Erfassungsbereich (Fig. 13a) ist demnach eine weitere Reduktion der unabhängigen Leiterbereiche erfolgt.

Die Elektrodenzuleitungen 14 sind allerdings nachteiligerweise derart verlegt, dass sie sich überkreuzen.

Fig. 14b zeigt eine der Fig. 14a entsprechende Graphendarstellung. Die ersten Elektroden 13.1 entsprechen den Knoten 23.1 (eckiger Typ), die zweiten Elektroden 13.2 den Knoten 24.1 (runder Typ) und die Sensorspalte 6.4 den Kanten 25.1 zwischen Knoten verschiedenen Typs. Um einen bipartiten Graphen zu erhalten, werden mehrere Knoten des gleichen Typs, welche über Elektrodenzuleitungen 25.2 miteinander verbunden sind, zu einem Knoten zusammengefasst.

Fig. 14c zeigt den so erhaltenen bipartiten Graphen. Anhand dieses Graphen erkennt man, dass prinzipiell eine kreuzungsfreie Verschaltung des in Fig. 14a gezeigten Sensorfeldes möglich wäre, denn es kreuzen sich in der ebenen Graphendarstellung keine der Kanten 25.

Fig. 15 zeigt, wie eine solche kreuzungsfreie Verschaltung in der Praxis ausgeführt sein kann. Die in Fig. 15 gezeigte Verschaltung entspricht der in Fig. 2 bereits gezeigten.

Das Sensorfeld in Fig. 15a umfasst, wie bereits in Fig. 14, zwei Spalten und drei Zeilen von Sensoren 6. Wiederum sind die ersten Elektroden 13.1 (hier die beiden äußeren), welche in derselben Spalte sind, im Erfassungsbereich miteinander verschaltet (es handelt sich um eine gemeinsame Elektrode). Darüber hinaus sind auch die zweiten Elektroden 13.2 (hier die drei inneren), welche in derselben Zeile sind, miteinander verschaltet (gemeinsame Elektrode).

Bezugnehmend auf Fig. 15c ist eine kreuzungsfreie, d.h. einschichtige Verschaltung der Elektroden im Erfassungsbereich 5.1 mit Kontaktpunkten im Kontaktbereich 5.2 möglich, indem einige der zweiten (inneren) Elektroden im Erfassungsbereich in zwei Teile 13.3 aufgespalten sind und diese zwei Teile im Kontaktbereich wiederum über Umverbindungen 14.3 miteinander verbunden sind. An den Umverbindungen 14.3 sind zugleich Kontaktpunkte 15.1 angeschlossen.

Fig. 15d zeigt eine der Fig. 15c entsprechende Graphendarstellung mit gesplitteten Knoten. Die Kontaktpunkte 15.1 entsprechen den Knoten 23.2 bzw. 24.2. Die Umverbindungen 14.3 entsprechen den Kanten 25.5.

Fig. 16a zeigt ein Sensorfeld in Graphendarstellung mit vierundzwanzig Sensoren 6 in vier Spalten und sechs Zeilen. Jeder Sensor besteht aus einem Knoten 23, einer Kante 25.1 und einem Knoten 24.

Fig. 16b zeigt ein Sensorfeld in Graphendarstellung mit ebenfalls vierundzwanzig Sensoren 6, wobei in jeder der Zeilen Elektroden miteinander verschaltet sind. Zwei der Elektroden 23 aus Fig. 16a sind nunmehr zu einem Knoten 23.3 verschaltet. Zudem sind zwei der Knoten 24 aus Fig. 16a zu einem Knoten 24.3 verschaltet.

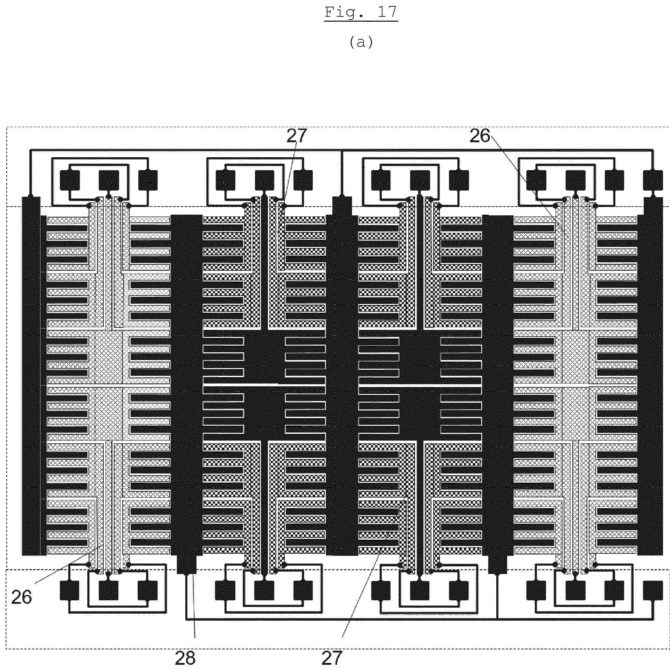

Die Fig. 17a-c zeigen die Sensormatrix aus Fig. 6 mit verschiedenen Verschaltungen der Elektroden zu unterschiedlichen Bussignalen, so dass sich unterschiedliche Sensorfunktionen darstellen.

In Fig. 17a sind mehrere Elektroden zu fünf verschiedenen, großflächigen Elektrodengruppen verschaltet, die zur Detektion von Gestikbedienung im Fernfeld dienen. Die zwei getrennten Elektroden 26 dienen zur Bewegungserkennung in horizontaler Richtung, die zwei Elektroden 27 zur Bewegungserkennung in vertikaler Richtung. Die Elektroden 28 sind zu einer Abschirmelektrode zusammengeschaltet und mit dem Bussignal P, vorzugsweise einem Erdpotential verbunden. Die Elektroden 26 und 27 sind vorzugsweise alternierend mit dem Bussignal Z zur Bedienererkennung und mit dem Bussignal P zur verbesserten Abschirmung verbunden, um eine der anderen mit Z verbundenen Elektroden weiter von Störsignalen abzuschirmen.

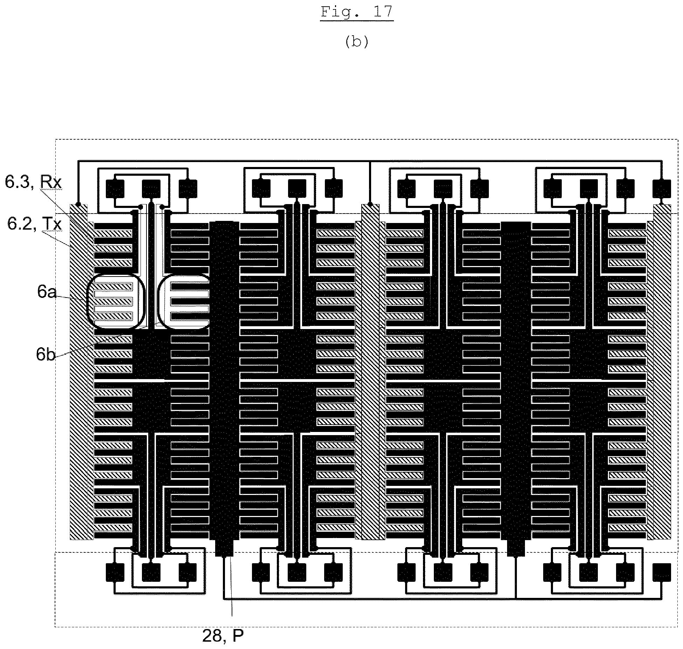

Fig. 17b verdeutlicht den Betrieb als pcap-Sensor in einer 2:N Elektroden-Matrix. Die Empfangselektrode 6.3 (Bussignal Rx) (weiß dargestellt) bedient zwei Erfassungszellen 6a (links) und 6b (rechts). In der Erfassungszelle 6a ist die Empfangselektrode 6.3 mit der Sendeelektrode 6.2 (schraffiert dargestellt) durch einen Sensorspalt beabstandet, die mit dem Bussignal Tx verbunden ist. In der Erfassungszelle 6b ist die zur Elektrode 6.3 beabstandete Elektrode 28 (schwarz dargestellt) mit einem festen Potential, vorzugweise dem Erdpotential (Bussignal P) verbunden. Die Erfassungszelle 6a agiert dadurch als aktive Erfassungszelle, die in diesem Schaltungszyklus hinsichtlich einer Berührung abgefragt wird. Die Zelle 6b ist inaktiv.

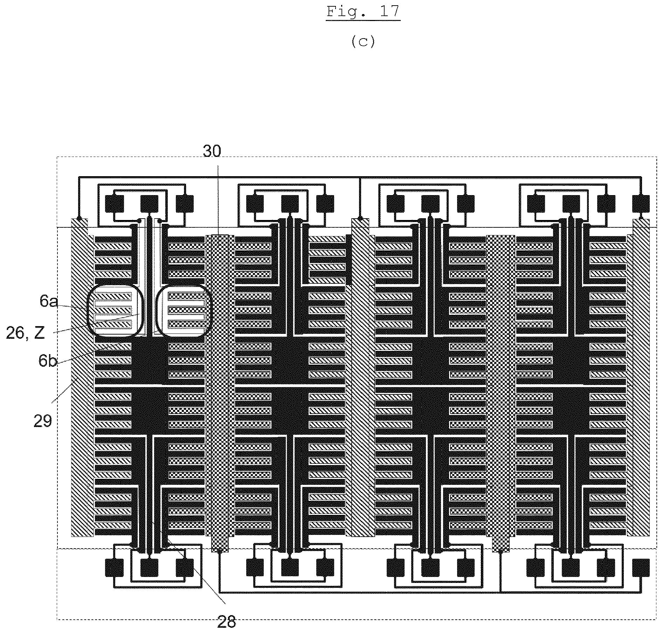

Fig. 17c verdeutlicht den Betrieb als selbst-kapazitiver Sensor in einer 2:N Elektroden-Matrix. Die Elektrode 26 ist mit dem Bussignal Z zur Eigenimpedanzmessung verbunden. Die Elektroden 29 und 30 sind im Wechsel mit dem Bussignalen Tx als Schirmelektrode und P mit Erdpotential als Abschirmelektrode verbunden. Diejenige Erfassungzelle 6a oder 6b, in der das Schirmsignal anliegt, bildet die aktive Erfassungszelle. Dort ist das Eigenimpedanzsignal bei Berührung größer als in der jeweils anderen Zelle, in der das Bussignal P zur Abschirmung anliegt. Die übrigen Elektroden 28 sind zur weiteren Abschirmung mit dem Bussignal P verbunden. Mit dieser Verschaltung einer einzelnen Elektrode 26 als selbst-kapazitiver Sensor kann eine Berührung, eine Annäherung im Nahfeld und eine wasserhaltige Benetzung lokal nachgewiesen werden. Mit der Verschaltung als pcap-Sensor wie in Fig. 17b kann eine Berührung gegen elektromagnetische Störsignale störungsfreier nachgewiesen werden und in Kombination mit der selbst-kapazitiven Verschaltung kann eine wasserhaltige Benetzung sicherer von einer Bedienberührung diskriminiert werden.

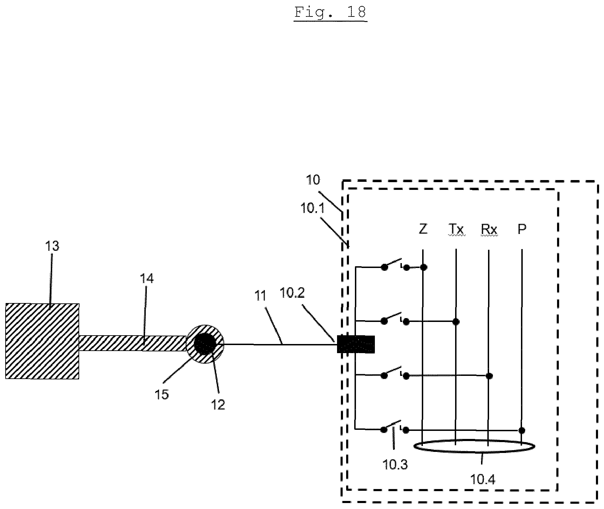

Um die Elektroden flexibel mit verschiedenen Signalen belegen zu können, sind diese vorzugsweise mit verschiedenen Signalbussen verschaltbar und von der Steuereinheit intermittierend veränderbar schaltbar gestaltet. Fig. 18 zeigt eine Sensorelektrode 13, die über eine leitende Fläche 14, einer Kontaktfläche 15, einem Kontaktelement 12 und einer Signalverbindung 11 über einen Anschlusspunkt 10.2 mit einer Steuereinheit 10 verbunden ist. 10.1 kann ein Mikrokontroller als Teil einer Steuereinheit 10 sein. In der Steuereinheit 10 wird die Sensorelektrode 13 über Signalschalter 10.3 mit höchstens einem der Signalbusse 10.4 verbunden. Die Sensorelektrode 13 stellt mit dem Signalbus Z verbunden einen selbst-kapazitiven Sensor zur Impedanzmessung dar oder einen Näherungssensor für das Nah- oder Fernfeld oder auch einen selbst-kapazitiven Sensor zur Detektion einer größeren beispielsweise wasserhaltigen Verschmutzung, der als leitende Fläche den Bedienbereich vorzugsweise umschließt. Verbunden mit dem Signalbus Tx stellt die Elektrode 13 eine Sendeelektrode eines pcap-Sensors dar oder eine Schirmelektrode für benachbarte selbst-kapazitiven Sensoren, die mit gleichem Sensorsignal betrieben werden, um die parasitären Impedanzen eines selbst-kapazitiven Sensors zu minimieren. Verbunden mit dem Signalbus Rx stellt die Elektrode 13 eine Empfangselektrode eines pcap-Sensors dar. Verbunden mit dem Signalbus P stellt die Elektrode 13 eine Abschirmfläche dar, beispielsweise in der Umgebung eines abgefragten pcap-Sensors oder eine Schutzelektrode, die den Bedienbereich vorzugsweise umschließt.

Bezüglich sämtlicher Ausführungsformen kann der Sensorspalt zwischen einem Elektrodenpaar (d.h. einer Sende- und Empfangselektrode) einen etwa geradlinigen oder mäanderförmigen Verlauf haben. Mäander können gezackt, wellenförmig oder schneckenförmig sein. Der Mäander-Verlauf bewirkt eine Vergrößerung der zwischen den Elektroden vorliegenden Kapazität. Mit zunehmender Länge des Sensorspalts verbessert sich das Signal-Rauschverhältnis.
Beim Berühren einer Erfassungszelle (eines Sensors) auf der Bedienoberfläche wird ein Grundsignal zwischen der Sende- und der Empfangselektrode einer Erfassungszelle verändert, da ein Teil des Signalstroms über den geerdeten Finger oder einen geerdeten Berührgegenstand zur Erde abgeleitet wird. Dies kann von der Steuerung als Berührvorgang detektiert werden.

Ein Sensorspalt kann entlang seines Verlaufs eine etwa gleichbleibende Breite haben. Hierbei kann als Verlauf die Gestalt oder Kurvenform des Sensorspalts seiner Länge nach aufgefasst werden. Der Sensorspalt kann eine gegenüber einer Bediensubstratoberfläche laterale Ausdehnung haben; dementsprechend sind, aus einer Perspektive senkrecht zur Bediensubstratoberfläche gesehen, die Empfangselektroden neben den Sendeelektroden angeordnet.

Eine Sensorelektrode kann als ein an einer, insbesondere einer inneren Substratoberfläche angeordnetes, elektrisch leitfähiges Flächenelement ausgebildet sein. Die Fläche einer Erfassungszelle (eines Sensors) beträgt vorzugsweise 0,2 - 4,0 cm², bevorzugt 1,0 - 2,0 cm².

Eine Sensorelektrode kann mittels einer Verbindungsleitung (oder Leiterverbindung) mit einer Steuereinheit des elektronischen Geräts verbunden sein. Die Verbindungsleitung kann als ein auf einer, insbesondere der inneren Substratoberfläche angeordnetes und elektrisch leitfähiges Flächenelement ausgebildet sein.

Eine Kontaktfläche zwischen Verbindungsleitung und Steuereinheit kann in einem Anschlussbereich außerhalb eines aktiven Bedienbereichs des Sensorfeldes, vorzugsweise auf der inneren Substratoberfläche, als elektrisch leitfähiges Flächenelement ausgeführt sein.

Vorzugsweise kann ein elektrisch leitfähiges Flächenelement für sichtbares Licht transparent sein. Damit ist gewährleistet, dass bei einer Anordnung der Flächenelemente zwischen dem Anzeigebildschirm und dem Außenbereich, in welchem sich der Benutzer befindet, der Benutzer beim Betrachten des Anzeigebildschirms durch das Flächenelement nicht gestört oder behindert wird.

Nachdem jede Sensorelektrode der Benutzerschnittstelle als ein elektrisch leitfähiges Flächenelement an einer, insbesondere einer inneren Substratoberfläche ausgebildet sein kann, gelten die Ausführungen zu dem Flächenelement auch für die Sendeelektroden und die Empfangselektroden und die Verbindungsflächen und die Kontaktflächen.

Die zu den Sensorelektroden jeweils zugehörigen Kontaktflächen und Verbindungsleiter (über transparente leitfähige Flächenelemente oder Leiterbahnen) im Randbereich des Sensorfeldes, also außerhalb des aktiven Erfassungsbereichs über dem Anzeigebildschirm, können durch transparent leitfähige Flächenelemente realisiert sein. Die Kontaktflächen und Verbindungsleiter im Randbereich des Sensorfeldes können aber auch durch opake leitfähige Flächenelemente oder Leiterbahnen dargestellt werden. Für den Fall, dass die Kontaktflächen und/oder Verbindungsleiter im Randbereich mittels opaker leitfähiger Flächenelemente oder Leiterbahnen realisiert sind, können diese im Randbereich des Sensorfeldes auch überlappend mit den transparent leitfähigen Flächenelementen angeordnet sein.

Ein Substrat für die zweidimensionale Sensoranordnung, insbesondere das Bediensubstrat kann eines der Materialien Kunststoff, Glas, Glaskeramik, oder einen Verbundstoff der genannten Materialien umfassen. Das betreffende Substrat ist vorzugsweise transparent, eingefärbt transparent oder kann nicht-eingefärbt transparent sein.

Als Glas werden vorzugsweise folgende Glasarten verwendet, z.B. alkalifreie und alkalihaltige Gläser, Silikatgläser, Borosilikatgläser, Zinksilikatgläser, Zinkborosilikatgläser, Bismutborosilikatgläser, Bismut-Silikat-Gläser, Alumosilikatgläser, Lithium-Alumosilikatgläser, Kalk-Natron-Silikatgläser. Die Substrate können auch z.B. chemisch oder thermisch vorgespannt sein.

Bevorzugt wird eine Lithium-Aluminosilikat-Glaskeramik (LAS-Glaskeramik) als Substrat verwendet. Eine derartige Glaskeramik wird beispielsweise unter dem Handelsnamen CERAN^{®} vertrieben. Die Glaskeramik muss nicht eingefärbt sein, kann also nicht-eingefärbt sein, oder kann mittels Metalloxiden, beispielsweise der Metalle Ti, Zr, Va, Nd, Cr, Mo, Mn, Fe, Co, Ni, Cu, Zn, insbesondere durch deren Zusatz, und/oder Wärmeprozessen eingefärbt transparent sein. Diese Glaskeramik eignet sich besonders gut sowohl für Kochflächen als auch für eine Verwendung als Substrat für das Sensorfeld. Hier kommt insbesondere die vergleichsweise hohe Dielektrizitätszahl (relative Permittivität Er) von typischerweise 7,8 bis 8,2 der Glaskeramik zum Tragen. Die Glaskeramik ist sehr hitzedurchlässig und temperaturstabil, übersteht unbeschadet abrupte Temperaturschocks im Bereich bis plus 750° Celsius und ist zudem mechanisch sehr belastbar.

Das Substrat weist vorzugsweise eine Dicke im Bereich 0,015 - 6,0 mm auf, vorzugsweise in Bereichen 0,015 -1,1 mm, 2,8 - 4,2 mm, 3,8 - 4,2 mm oder 2,8 - 3,2 mm.

Als vorzugsweise flexibles Kunststoffsubstrat kann Polyethylen (PE), Polypropylen (PP), Polyvinylchlorid (PVC), Polystyrol (PS), Polyester (PES) und/oder Polycarbonat (PC) verwendet werden. Das Kunststoffsubstrat weist vorzugsweise eine Dicke im Bereich 15- 300 µm auf, bevorzugt zwischen 20 und 100 µm. Es können aber auch starre Kunststoffsubstrate obiger Zusammensetzung mit einer Dicke >300 µm zum Einsatz kommen.

Eine transparente elektrisch leitfähige Schicht für das Sensorfeld kann auf ein Bediensubstrat vorzugsweise nach dem Aufbringen auf der inneren Substratoberfläche von Dekor-, farbgebenden, Maskierungs-, Barriere- und Versiegelungsschichten, als Vollfläche und/oder strukturiert (z. B. mittels Laser) und/oder ausgespart, aufgebracht werden; i) Bei Substraten bestehend aus eingefärbtem Glaskeramikmaterial und/oder aus eingefärbten Glasmaterial und/oder aus eingefärbten Kunststoffmaterial vorzugsweise nach dem optionalen Aufbringen von optischen Maskierungs- und/oder Filter- und/oder Ausgleichs-, Barriere- und/oder Versiegelungsschichten, ii) bei Substraten aus nicht eingefärbtem Glaskeramikmaterial und/oder nicht eingefärbtem Glasmaterial und/oder nicht eingefärbtem Kunststoffmaterial vorzugsweise nach dem optionalen Aufbringen von Dekor-, farbgebenden, optischen Filter- und/oder Ausgleichs-, Barriere- und Versiegelungsschichten.

Eine Reihenfolge des Schichtaufbaus, wobei beispielhaft die Dekor- und/oder Versiegelungsschichten nach der leitfähigen Schicht aufgebracht werden und i) die leitfähige Schicht vor dem Aufbringen der weiteren Schichten strukturiert und/oder als Vollfläche und/oder ausgespart aufgebracht und/oder ii) der gesamte Schichtaufbau oder Teile des Schichtaufbaus nachträglich strukturiert (z. B. Laser) wird, ist auch möglich.

Eine opake leitfähige Schicht kann in beiden Fällen vor oder nach dem Aufbringen der transparenten leitfähigen Schicht aufgebracht werden. Falls opake Leiterschichten im Falle von Substraten aus nicht eingefärbten Glaskeramikmaterialien oder nicht eingefärbten Glasmaterialien in dem Außenbereich nicht sichtbar sein sollen, so wird die leitfähige Schicht nach der farbgebenden Beschichtung angebracht, sofern sie nicht durch ein Oberseitendekor kaschiert wird. Zudem kann auf die opake oder transparente leitende Beschichtung zu deren Schutz eine Versiegelungsschicht aufgebracht werden. Die beschriebenen Kombinationen der leitfähigen Schicht mit Dekor- und Versiegelungsschichten weisen jeweils eine Überlappung in den Randbereichen der gedruckten Schichten auf, so dass ein homogener Übergang gewährleistet werden kann.

Ein Anzeigebildschirm kann ein Display (LED, OLED, LCD, Plasma, Elektrolumineszenz, etc.) sein. Es können aber auch andere Anzeigeelemente, wie beispielsweise Leuchtpiktogramme, alphanumerische Zählanzeigen, insbesondere Segmentanzeigen, eine Leuchtsegmentreihe (ein sogenannter Slider) oder ein Leuchtsegmentbogen oder ein Leuchtsegmentring (Ringslider), ein Lichtfeld oder ein pixelbasiertes Anzeigeelement oder Kombinationen daraus, zueinander beabstandet an der äußeren Trägeroberfläche angebracht sein, die über ein oder mehrere Sensorfelder mit einer 2:N- oder M:N-Matrixstuktur bedient werden können.

Das Leuchtpiktogramm kann beispielhaft Einschalter, Plus-Minus-Tasten oder Schlüsselschalter darstellen. Die alphanumerische Zählanzeige kann eine Sieben-Segmentanzeige umfassen. Eine Leuchtsegmentreihe oder -bogen besteht aus einer oder mehreren Leuchtflächen, die einen Einstellbereich andeuten, wie zum Beispiel die Leistungseinstellung in einem Kochfeld. Das Anzeigeelement kann auf einer LED oder einer OLED Lichtquelle basieren. Als Anzeige eines Einstellbereichs kann ein pixelbasiertes Anzeigemodul verwendet werden, das alphanumerische oder frei wählbare Symbole darstellt, beispielsweise eine hinterleuchtete LCD-Matrix oder eine Leuchtpunkt-Matrix oder eine OLED-Matrix.

Das Substrat kann auf der äußeren Substratoberfläche im Bereich der Anzeigeelemente (jeweils) mit taktilen Markierungen wie Fingermulden oder geraden oder gebogenen Vertiefungen zur Fingerführung oder Auftragungen oder Aufwölbungen versehen sein.

Zum Aufbringen einer elektrisch leitfähigen Beschichtung auf das Substrat kann mittels Gasphasenabscheidung eine transparente Dünnschicht aufgebracht werden, umfassend:
- Metalle, vorzugsweise Silber, Kupfer, Gold, und/oder
- transparente Halbleiter, vorzugsweise Indium-Gallium-Zinkoxid, und/oder
- transparente leitfähige Oxidschichten, vorzugsweise zinndotiertes Indiumoxid oder In₂O₃:Sn, fluordotiertes Zinnoxid oder SnO₂:F, antimondotiertes Zinnoxid oder SnO₂:Sb, aluminiumdotiertes Zinkoxid oder ZnO:Al, niobdotiertes Titandioxid oder TiO₂:Nb, tantaldotiertes Titandioxid oder TiO₂:Ta, galliumdotiertes Zinkoxid oder ZnO:Ga, molydändotiertes Zinkoxid oder ZnO:Mo oder molybdändotiertes Indiumoxid oder In₂O₃:Mo.

Zusätzlich können eine oder mehrere Barriereschichten mittels Gasphasenabscheidung vor und/oder nach der Abscheidung der transparent leitfähigen Beschichtung auf das Substrat aufgebracht werden, umfassend:
- Oxide, vorzugsweise SiOₓ, Al₂O₃ und/oder
- Nitride, vorzugsweise SiN und/oder
- Oxinitride, vorzugsweise SiOₓN_{y}

Zum Aufbringen einer vollflächigen oder strukturierten, elektrisch leitfähigen transparenten oder opaken Beschichtung auf das Substrat mittels Drucken kann eines folgender Verfahren ausgeführt werden: Siebdruck, Inkjet-Druck, Off-Set-Druck, Gravurdruck, Flexodruck oder Tampondruck.

Zum Herstellen einer transparenten leitfähigen Beschichtung, vorzugsweise mittels Drucken, können auf das Substrat eine Tinte umfassend ein oder mehrere elektrisch leitfähige Additive oder ein leitfähiges Polymer und ein Lösungsmittel aufgebracht werden, wobei vorzugsweise das Lösungsmittel nach dem Aufbringen der Tinte verdampft. Ebenfalls kommen Tinten oder Pasten infrage, die elektrisch leitfähige Polymere, wie beispielsweise Poly(3,4-ethylenedioxythiophen)/Polystyrolsulfonat, enthalten. Tinten oder Pasten, die elektrisch leitfähige Polymere enthalten, können zusätzlich weitere leitfähige Additive enthalten.

Beispielsweise können dünne, vorzugsweise ultradünne, opake Linien mit weniger als 500µm, vorzugsweise weniger als 100µm, in Form von maschenartigen Strukturen (wire-mesh) mittels einer Tinte oder Paste gedruckt werden, wobei die Tinte oder Paste vorzugsweise metallische Nanopartikel, besonders bevorzugt Nanopartikel aus Silber, Kupfer und/oder Kohlenstoff enthält. Diese dünnen bzw. ultradünnen Linien können in einer besonderen Ausführungsform auch noch mittels Laser-Ablation geschärft (Reduktion der Kantenrauigkeit) und/oder gedünnt werden. Ein Auftragen von Tinten und/oder Pasten, insbesondere opaker Tinten und/oder Pasten, kann z.B. mittels Ink-Jet-, Tampon- und/oder Transfer-Druck erfolgen.

Die Tinte kann ein Matrixmaterial zur Verbesserung der Gebrauchseigenschaften der transparenten Leiterfläche betreffend eine Kratzbeständigkeit oder Beständigkeit gegen Wasserdampf umfassen. Weiterhin kann die Tinte Verdicker, Verlaufsmittel, Entschäumer, Dispergiermittel und andere Additive enthalten.

Das leitfähige Additiv kann faserartige leitfähige Partikel umfassen, um eine Ausbildung von leitfähigen Netzwerken zu ermöglichen, wobei Fasern des Additivs einen mittleren Durchmesser < 500 nm, bevorzugt < 200 nm, besonders bevorzugt < 100 nm haben. Diese garantieren eine gute elektrische Leitfähigkeit, wobei eine hohe Transmission aufgrund der nanoskaligen Abmessungen erhalten bleibt.

Ein Aspektverhältnis Länge / Durchmesser einer Faser kann in einem Bereich 50 -10000, bevorzugt zwischen 85 -1000, liegen.

Das leitfähige Additiv kann aber auch sphärische Partikel, Nanopartikel oder Partikelblättchen (sog. Flakes) umfassen.

Der elektrische Widerstand der leitfähigen Beschichtung kann durch die Konzentration des leitfähigen Additivs eingestellt werden.

Das Additiv kann mindestens einen der nachfolgenden Stoffe umfassen:
- metallische Nanodrähte oder Nanoröhren;
- anorganische Materialien oder Partikel, vorzugsweise Metalle, Legierungen, nichtoxidische oder oxidische Materialien, mit faserartiger Morphologie;
- ein Metall ausgewählt aus einer Liste umfassend: Silber, Kupfer, Gold, Aluminium, Nickel, Platin, Palladium, oder eine Legierung von Metallen aus der Liste;
- beschichtete metallische Nanodrähte, insbesondere Nickel-beschichtete Kupfer-Nanodrähte oder Polymer-beschichtete metallische Nanodrähte;
- leitfähige dotierte Oxidpartikel und Oxidnanopartikel und/oder Nanodrähte, insbesondere In₂O₃:Sn, ZnO:Al, SnO₂:Sb;
- Kohlenstoffnanomaterialien, insbesondere einwandige und mehrwandige Kohlenstoffnanoröhren, Graphene;
- anorganisch nichtoxidische Nanodrähte, insbesondere Metallchalcogenide;
- Fasern aus leitfähigen Polymeren.

Das Matrixmaterial kann mindestens einen der nachfolgenden Stoffe umfassen:
- UV- oder thermisch härtbare Polymere;
- UV oder thermisch organisch vernetzbare hybridpolymere Sol-Gel-Materialien;
- Hybridpolymere Sol-Gel-Materialien;
- Nanopartikelfunktionalisierte Sol-Gel-Materialien;
- Sol-Gel-Materialien mit nanopartikulären Füllstoffen und/oder anorganische Sol-Gel-Materialien;
- elektrisch leitfähige Sol-Gel-Materialien;
- elektrisch leitfähige Polymere;
- Glasflüsse oder Glasfritten.

Der Transmissionsgrad (DIN 5036-1) im Wellenlängenbereich von 380 nm bis 780 nm eines mit einer transparenten elektrisch leitfähigen Schicht beschichteten Substrats kann mindestens 65 %, vorzugsweise mindestens 75 %, besonders bevorzugt mindestens 85 % betragen. Die Gesamttransmission im Wellenlängenbereich von 400 nm bis 700 nm eines mit einer transparenten elektrisch leitfähigen Schicht beschichteten Substrats kann mindestens 70 %, vorzugsweise mindestens 80 %, besonders bevorzugt mindestens 85 % betragen. Der Hazewert eines mit einer transparenten elektrisch leitfähigen Schicht beschichteten Substrats kann kleiner als 10 %, bevorzugt kleiner 5 %, besonders bevorzugt kleiner 3 % sein. Der Flächenwiderstand der transparenten Schicht kann kleiner 500 Ohm/sq, bevorzugt kleiner 300 Ohm/sq, besonders bevorzugt kleiner 100 Ohm/sq sein.

Zum Herstellen einer opaken leitfähigen Beschichtung, vorzugsweise mittels Drucken, kann auf das Substrat eine Tinte umfassend elektrisch leitfähige Additive und ein Lösungsmittel aufgebracht werden, wobei vorzugsweise das Lösungsmittel nach dem Aufbringen der Tinte verdampft. Die elektrisch leitfähigen Additive können auf Basis von nano- und mikroskaligem Kohlenstoff wie Ruß, CNT, Fullerenen oder Graphit, sein. Hierbei können die elektrisch leitfähigen Additive in nicht elektrisch leitfähige Bindemittel wie beispielsweise Polyacrylate, Polycarbonate, Polyurethane, Polyharnstoffe, Epoxy-Systeme, Silikonharze, Silikone, Polyesterharze und/oder Sol-Gel-Matrizen eingearbeitet sein.

Zum Herstellen einer opaken, leitfähigen Beschichtung kann ein Material umfassend Silber, Gold oder Kupfer auch mittels Gasphasenabscheidung, z.B. durch Sputtern, aufgebracht werden.

Weiterhin können opake elektrisch leitfähige Schichten aus Edelmetall-Nanopartikeln, wie Au oder Ag oder Cu, und einem Glasfluss und/oder organischem Binder bestehen. Opake elektrisch leitfähige Schichten können auch auf Basis von Silberleitpasten, Aluminium- oder Kupferpasten aufgebracht werden.

Die leitfähigen Schichten (transparent und opak) können nach dem Aufbringen nachträglich strukturiert werden. Dabei spielt es keine Rolle, ob sie in einem Druckverfahren (z.B. Siebdruck) oder durch Maskierung beim Sputtern bereits strukturiert aufgebracht wurden. In diesem Fall stellt die nachträgliche Strukturierung einen weiteren Strukturierungsschritt dar. Die Strukturierung der leitfähigen Schichten kann beispielhaft durch Laserablation oder lithographisch erfolgen.

**Tabelle 1**

| Vergleich einiger Verschaltungs-Typen für Sensorfelder mit Sensoren, die physisch in einer K:L-Matrix angeordnet sind. | | | | | | | | | | |
|---|---|---|---|---|---|---|---|---|---|---|
| | | | | | | | | | | |
| Typ | | R:S-Verschaltung im Erfassungsbereich | | M:N-Verschaltung im Kontaktbereich | | Anzahl Kontaktflächen (oben) und Anschlussverhältnis (unten) für beispielhafte K:L-Matrizen | | | | |
| | | Anzahl R | Anzahl S | Anzahl M | Anzahl N | K=4 L=4 | K=8 L=4 | K=8 L=6 | K=12 L=8 | K→∞ L→∞ |
| 1 | Einlagig, Einzelzellen, keine Verschaltung | K*L | K*L | R | S | 32 1 | 64 1 | 96 1 | 192 1 | ∞ 1 |
| 2 | Einlagig, 1:N-Verschaltung | 1 | K*L | R | S | n.v. | n.v. | n.v. | n.v. | ∞ 2 |
| 3 | Zweilagig, Leiterkreuzungen im Erfassungs- und/oder Kontaktbereich | K | L | K | L | 8 4 | 12 5⅓ | 14 66/7 | 20 93/5 | ∞ ∞ |
| 4 | Einlagig, Doppelzuordnung zweite Elektroden, Umverbindung zweite gesplittete Elekroden | K | K*(L-2) +K | K | ½*K*L +L | 16 2 | 28 2²/₇ | 38 2¹⁰/₁₉ | 68 2¹⁴/₁₇ | ∞ 4 |
| 5 | Einlagig, Doppelzuordnung erste und zweite Elektroden, Umverbindung erste Randelektroden | K/2+1 | ½*K*L | K/2 | ½*K*L | 10 3¹/₅ | 20 3¹/₅ | 28 3³/₇ | 54 3⁵/₉ | ∞ 4 |
| 6 | Einlagig, Doppelzuordnung erste und zweite Elektroden, Umverbindung erste Randelektroden | K/2+1 | ½*K*L | 2 | ½*K*L | 10 3¹/₅ | 18 3⁵/₉ | 26 3⁹/₁₃ | 50 3²¹/₂₅ | ∞ 4 |
| 7 | Zweilagig, Leiterkreuzungen nur im Kontaktbereich, Vierfachzuordnung erste und zweite Elektroden | >¼*K*L | >¼*K*L | 4 | ¼*K*L +½*K | 10 3¹/₅ | 16 4 | 20 4⁴/₅ | 34 5¹¹/₁₉ | ∞ 8 |
| 8 | Zweilagig, Leiterkreuzungen nur im Kontaktbereich, Dreifachzuordnung erste Elektroden | ⅓*K*L | 3*K | ⅓*K*L | 3 | 9 3²¹/₂₅ | 14 4²⁸/₄₁ | 19 5¹/₁₉ | 35 5⁵¹/₁₀₅ | ∞ 6 |
| 9 | Zweilagig, Leiterkreuzungen nur im Kontaktbereich, Dreifachzuordnung | ⅓*K*L | K*L | ⅓*K*L | L | 10 3³/₇ | 15 4⁴/₁₁ | 22 4⁴/₁₁ | 40 4⁴/₅ | ∞ 6 |
| 10 a | Einlagig, Vierfachzuordnung erste und zweite Elektroden, Umverbindung zweite Randelektroden | ¼*(K-2)*L +½*2*L | ¼*K*(L-2) + ½*K*2 | ¼*(K-2)*L +½*2*L | ¼*K*L | 10 3¹/₅ | 18 3⁵/₉ | 27 3⁵/₉ | 52 3⁹/₁₃ | ∞ 4 |
| 10 b | Einlagig, Vierfachzuordnung erste und zweite Elektroden, Umverbindung erste und zweite Randelektroden L mod 4 = 0, L ≥ 8 | ¼*(K-2)*L +½*2*L | ¼*K*(L-2) + ½*K*2 | ¼*K*L + 2 | ¼*K*L | n.v. | n.v. | n.v. | 50 3²¹/₂₅ | ∞ 4 |

## Patentansprüche

1. Zweidimensionale Sensoranordnung zur Erfassung von Positionen in zwei oder drei Dimensionen insbesondere für berührungsempfindliche Tastfelder oder Bildschirme mit
- einem Erfassungsbereich in dem eine Vielzahl von Sensoren angeordnet sind und
- einem Kontaktbereich in dem eine Vielzahl von elektrisch leitenden Kontaktpunkten angeordnet sind,
- wobei die Sensoren jeweils ein Elektrodenpaar bestehend aus einer ersten Elektrode und einer zur ersten Elektrode durch einen elektrisch isolierenden Elektrodenzwischenraum beabstandeten zweiten Elektrode umfassen, und
- wobei zwischen den Elektroden und den Kontaktpunkten elektrische Verbindungen bestehen, derart dass die Elektroden jeweils mit einem der Kontaktpunkte verbunden sind und die Kontaktpunkte jeweils mit einer oder mehreren der Elektroden verbunden sind,
- wobei die Kontaktpunkte jeweils entweder mit einer oder mehreren der ersten Elektroden oder mit einer oder mehreren der zweiten Elektroden verbunden sind, so dass eine erste und eine zweite Gruppe von Kontaktpunkten definiert werden, wobei die erste Gruppe diejenigen Kontaktpunkte umfasst, die mit der oder den ersten Elektroden verbunden sind und die zweite Gruppe diejenigen Kontaktpunkte umfasst, die mit der oder den zweiten Elektroden verbunden sind und
- wobei jedes beliebig gebildete Paar bestehend aus einem der Kontaktpunkte der ersten Gruppe und einem der Kontaktpunkte der zweiten Gruppe mit dem Elektrodenpaar von höchstens einem der Sensoren paarweise verbunden ist und
- wobei die elektrischen Verbindungen zwischen den Elektroden und den Kontaktpunkten jeweils entweder unmittelbar bestehen oder als eine elektrisch leitende Elektrodenzuleitung ausgebildet sind und
- wobei die Kontaktpunkte, die Elektrodenzuleitungen und die Elektroden zusammengenommen eine Vielzahl elektrisch leitender Leitungsbereiche bilden, jeweils umfassend einen der Kontaktpunkte und die mit dem jeweiligen Kontaktpunkt verbundenen Elektroden und Elektrodenzuleitungen, und
- wobei die Leitungsbereiche ein einschichtiges Netzwerk ausbilden.

2. Zweidimensionale Sensoranordnung nach dem vorstehenden Anspruch, wobei die Elektrodenzwischenräume zwischen den ersten und den zweiten Elektroden der Sensoren jeweils an diejenigen zwei Leitungsbereiche angrenzen, welche die erste und die zweite Elektrode des jeweiligen Sensors umfassen.

3. Zweidimensionale Sensoranordnung nach einem der vorstehenden Ansprüche, wobei die Sensoranordnung mehrere zueinander benachbarte Reihen aufweist in welchen jeweils einige der Sensoren zueinander benachbart angeordnet sind,
- wobei die Reihen zumindest eine Reihe R₁, eine zur Reihe R₁ benachbarte Reihe R₂, eine zur Reihe R₂ benachbarte Reihe R₃ und eine zur Reihe R₃ benachbarte Reihe R₄ umfassen, und
- wobei die ersten Elektroden der in der Reihe R₁ angeordneten Sensoren und die ersten Elektroden der in der Reihe R₄ angeordneten Sensoren jeweils mit demselben Kontaktpunkt, welcher als A bezeichnet sei, verbunden sind und
- wobei die ersten Elektroden der in der Reihe R₂ angeordneten Sensoren und die ersten Elektroden der in der Reihe R₃ angeordneten Sensoren jeweils mit demselben Kontaktpunkt, insbesondere mit einem anderen als dem als A bezeichneten Kontaktpunkt, verbunden sind, und
- wobei die zweiten Elektroden der in der Reihe R₁ angeordneten Sensoren und die zweiten Elektroden der in der Reihe R₄ angeordneten Sensoren jeweils mit unterschiedlichen Kontaktpunkten, welche als Mehrzahl B bezeichnet sei, verbunden sind und
- wobei die zweiten Elektroden der in der Reihe R₂ angeordneten Sensoren und die zweiten Elektroden der in der Reihe R₃ angeordneten Sensoren jeweils mit unterschiedlichen Kontaktpunkten verbunden sind, insbesondere mit den als Mehrzahl B bezeichneten Kontaktpunkten.

4. Zweidimensionale Sensoranordnung nach dem vorstehenden Anspruch, wobei die Reihen zwei randständige Reihen R und R' umfassen, welche **dadurch gekennzeichnet sind, dass** sie jeweils mit lediglich einer der Reihen benachbart sind, und
- wobei die ersten Elektroden, der in der Reihe R angeordneten Sensoren und die ersten Elektroden der in der Reihe R' angeordneten Sensoren mit demselben Kontaktpunkt verbunden sind.

5. Zweidimensionale Sensoranordnung nach einem der vorstehenden Ansprüche, wobei die Sensoranordnung zumindest einen Anordnungsbereich umfasst in welchem zumindest einige der Sensoren in einer Matrix angeordnet sind, derart, dass die Positionen der Sensoren in dem Anordnungsbereich jeweils mit einem Zeilenindex i und einem Spaltenindex j als Position Pᵢⱼ charakterisiert werden können und
- wobei die ersten Elektroden der an den Positionen P₁₂, P₂₂, P₁₃ und P₂₃ angeordneten vier Sensoren mit demselben Kontaktpunkt, welcher als A bezeichnet sei, verbunden sind und
- wobei die ersten Elektroden der an den Positionen P₃₂, P₄₂, P₃₃ und P₄₃ angeordneten vier Sensoren mit demselben Kontaktpunkt, insbesondere mit einem anderen als dem als A bezeichneten Kontaktpunkt, verbunden sind und
- wobei die zweiten Elektroden der an den Positionen P₂₁, P₃₁, P₂₂ und P₃₂ angeordneten vier Sensoren mit demselben Kontaktpunkt, welcher als B bezeichnet sei, verbunden sind und
- wobei die zweiten Elektroden der an den Positionen P₂₃, P₃₃, P₂₄ und P₃₄ angeordneten vier Sensoren mit demselben Kontaktpunkt, insbesondere mit einem anderen als dem als B bezeichneten Kontaktpunkt, verbunden sind.

6. Zweidimensionale Sensoranordnung nach dem vorstehenden Anspruch, wobei die Matrix zwei randständige Zeilen mit Zeilenindizes i=1 bzw. i=m umfasst, und
- wobei die zweiten Elektroden der an den Positionen P₁₁, P₁₂, Pₘ₁ und Pₘ₂ angeordneten vier Sensoren mit demselben Kontaktpunkt verbunden sind, welcher als C bezeichnet sei, und/oder
- wobei die zweiten Elektroden der an den Positionen P₁₃, P₁₄, Pₘ₃ und Pₘ₄ angeordneten vier Sensoren mit demselben Kontaktpunkt verbunden sind, insbesondere mit einem anderen als dem als C bezeichneten Kontaktpunkt.

7. Zweidimensionale Sensoranordnung nach einem der zwei vorstehenden Ansprüche, wobei die Matrix zwei randständige Spalten mit Spaltenindizes j=1 bzw. j=n umfasst, und
- wobei die ersten Elektroden der an den Positionen P₁₁, P₂₁, P₅₁ und P₆₁ angeordneten vier Sensoren mit demselben Kontaktpunkt verbunden sind, welcher als D bezeichnet sei, und/oder
- wobei die ersten Elektroden der an den Positionen P₁ₙ, P₂ₙ, P₅ₙ und P₆ₙ angeordneten vier Sensoren mit demselben Kontaktpunkt verbunden sind, insbesondere mit einem anderen als dem als D bezeichneten Kontaktpunkt.

8. Zweidimensionale Sensoranordnung nach einem der vorstehenden Ansprüche, wobei die Sensoranordnung zumindest einen Anordnungsbereich umfasst in welchem eine Anzahl w der Sensoren insbesondere in einer quadratischen Matrix angeordnet sind und wobei die Anzahl derjenigen Kontaktpunkte, welche mit den Elektroden der in dem Anordnungsbereich angeordneten Sensoren verbunden sind, kleiner als w/2 + w^{1/2} ist, vorzugsweise kleiner oder gleich w/2 + w^{1/2}/2 ist, bevorzugter kleiner oder gleich w/2 + w^{1/2}/4 ist, noch bevorzugter kleiner oder gleich w/2 + w^{1/2}/6 ist und ganz besonders bevorzugt gleich w/2 + 2 ist.

9. Zweidimensionale Sensoranordnung nach einem der vorstehenden Ansprüche, wobei die Leitungsbereiche und die Elektrodenzwischenräume einen bipartiten planaren Graphen bilden, welcher eine Vielzahl von Knoten einer ersten Knotenmenge, eine Vielzahl von Knoten einer zweiten Knotenmenge und eine Vielzahl von Kanten umfasst, wobei die Kanten jeweils zwischen einem der Knoten der ersten Knotenmenge und einem der Knoten der zweiten Knotenmenge verlaufen,
- wobei diejenigen Leitungsbereiche, welche einen Kontaktpunkt der ersten Gruppe umfassen, die Knoten der ersten Knotenmenge bilden und diejenigen Leitungsbereiche, welche einen Kontaktpunkt der zweiten Gruppe umfassen, die Knoten der zweiten Knotenmenge bilden und
- wobei die Elektrodenzwischenräume zwischen den ersten und den zweiten Elektroden der Sensoren jeweils eine Kante zwischen denjenigen zwei Knoten bilden, welche durch diejenigen zwei Leitungsbereiche gebildet sind, welche die jeweilige erste und zweite Elektrode umfassen.

10. Zweidimensionale Sensoranordnung nach Anspruch 9, wobei die erste Knotenmenge eine Mächtigkeit von zwei aufweist und die zweite Knotenmenge eine Mächtigkeit von größer als zwei aufweist und wobei der Graph vorzugsweise vollständig ist.

11. Zweidimensionale Sensoranordnung nach Anspruch 9, wobei die Vielzahl von Sensoren eine Anzahl von u*v Sensoren ist, welche in dem Erfassungsbereich insbesondere in einer Matrix mit u Zeilen und v Spalten angeordnet sind und
- wobei die erste Knotenmenge eine Mächtigkeit von höchstens u*v/4 + u/2, vorzugsweise von höchstens u*v/4 + u/4, besonders bevorzugt von höchstens u*v/4 + u/6, nochmals bevorzugter von höchstens u*v/4 + 3 und ganz besonders bevorzugt von u*v/4 + 2 aufweist und
- wobei mindestens u*v/4 - u/2, vorzugsweise mindestens u*v/4 - u/4, besonders bevorzugt mindestens u*v/4 - u/6, nochmals bevorzugter mindestens u*v/4 - 3 und ganz besonders bevorzugt mindestens u*v/4 - 2 der Knoten der ersten Knotenmenge jeweils vier durch Kanten verbundene Nachbarknoten aufweisen und höchstens u, vorzugsweise höchstens u/2, besonders bevorzugt höchstens u/3, nochmals bevorzugter höchstens 6 und ganz besonders bevorzugt 4 der Knoten der ersten Knotenmenge jeweils zwei durch Kanten verbundene Nachbarknoten aufweisen und
- wobei die zweite Knotenmenge eine Mächtigkeit von u*v/4 aufweist und
- wobei die Knoten der zweiten Knotenmenge jeweils genau vier durch Kanten verbundene Nachbarknoten aufweisen.

12. Übersetzungseinheit für eine zweidimensionale Sensoranordnung, insbesondere nach einem der Ansprüche 1 bis 11 bei welcher die Vielzahl von Sensoren eine Anzahl von u*v Sensoren ist, welche in einer Matrix mit u Zeilen und v Spalten angeordnet sind, umfassend
- eine Einzahl oder Mehrzahl von ersten Kontaktpunkt-Anschlüssen zum Anschließen der Kontaktpunkte der ersten Gruppe und
- eine Einzahl oder Mehrzahl von zweiten Kontaktpunkt-Anschlüssen zum Anschließen der Kontaktpunkte der zweiten Gruppe und
- eine Anzahl u von ersten Steuerungs-Anschlüssen und eine Anzahl v von zweiten Steuerungs-Anschlüssen, welche es ermöglichen, die Sensoranordnung so zu betreiben, als wären die ersten Elektroden der in denselben Zeilen angeordneten Sensoren jeweils mit denselben ersten Steuerungsanschlüssen verbunden und als wären die zweiten Elektroden der in denselben Spalten angeordneten Sensoren jeweils mit denselben zweiten Steuerungsanschlüssen verbunden.

13. Berührungsempfindliches Tastfeld umfassend
- ein flächiges Substrat mit einer einem Außenbereich zugewandten, äußeren Substratoberfläche und einer gegenüberliegenden, dem Außenbereich abgewandten, inneren Substratoberfläche und
- eine an der inneren Substratoberfläche angeordnete zweidimensionale Sensoranordnung, insbesondere nach einem der Ansprüche 1 bis 11, zur Interaktion mit einem sich im Außenbereich befindlichen Benutzer.

14. Berührungsempfindlicher Bildschirm umfassend
- ein flächiges transparentes Substrat mit einer einem Außenbereich zugewandten, äußeren Substratoberfläche und einer gegenüberliegenden, dem Außenbereich abgewandten, inneren Substratoberfläche,
- ein pixelbasiertes Anzeigeelement zur leuchtenden Darstellung von Informationen mit einer vorderseitigen, der inneren Substratoberfläche zugewandten und dem Außenbereich zugewandten, Anzeigefläche und
- eine an der inneren Substratoberfläche angeordnete zweidimensionale Sensoranordnung, insbesondere nach einem der Ansprüche 1 bis 11, zur Interaktion mit einem sich im Außenbereich befindlichen Benutzer.

15. Berührungsempfindliche Bedienblende umfassend
- ein flächiges transparentes Glas- oder Glaskeramik-Substrat mit einer einem Außenbereich zugewandten, äußeren Substratoberfläche und einer gegenüberliegenden, dem Außenbereich abgewandten, inneren Substratoberfläche,
- ein pixelbasiertes Anzeigeelement zur leuchtenden Darstellung von Informationen mit einer vorderseitigen, der inneren Substratoberfläche zugewandten und dem Außenbereich zugewandten, Anzeigefläche und
- einen Träger zur Befestigung des Anzeigeelements vorzugsweise beabstandet von der inneren Substratoberfläche und
- eine an der inneren Substratoberfläche angeordnete zweidimensionale Sensoranordnung, insbesondere nach einem der Ansprüche 1 bis 11, zur Interaktion mit einem sich im Außenbereich befindlichen Benutzer.

16. Kochfläche mit einer berührungsempfindlichen Bedienblende nach Anspruch 15, welche vorzugsweise in einem Kaltbereich der Kochfläche angeordnet ist.

17. Verfahren zur Herstellung einer zweidimensionalen Sensoranordnung, insbesondere nach einem der Ansprüche 1 bis 11, auf einem Substrat, wobei ein einschichtiges Netzwerk aus elektrisch leitenden Leitungsbereichen auf dem Substrat aufgebracht wird.

18. Verfahren zur Herstellung einer berührungsempfindlichen Bedienblende, insbesondere nach Anspruch 15, umfassend:
- Herstellen einer zweidimensionalen Sensoranordnung auf einem Substrat, insbesondere auf einer Glas- oder Glaskeramik-Platte, wobei ein einschichtiges Netzwerk aus elektrisch leitenden Leitungsbereichen auf dem Substrat aufgebracht wird,
- Befestigen eines pixelbasierten Anzeigeelements auf einem Träger mit Anschlusskontakten,
- Anbringen des Trägers an dem Substrat auf der Seite des Substrats, auf welcher das einschichtige Netzwerk aus elektrisch leitenden Leitungsbereichen aufgebracht ist, wobei Kontaktelemente, welche vorzugsweise auf der Trägereinheit angebracht sind, die Kontaktpunkte der Sensoranordnung mit den Anschlusskontakten der Trägereinheit verbinden.
